# EUROPEAN PATENT SPECIFICATION

(11) **EP 4 508 056 B1**
(45) Date of publication and mention of the grant of the patent: **06.05.2026**
(21) Application number: 23722180.9
(22) Date of filing: 13.04.2023
(51) Int. Cl.: C07F 9/572, C07F 15/00

(54) **INDOLE-FUNCTIONALIZED BISPHOSPHORAMIDITES, METHODS FOR THE PREPARATION THEREOF, AND RHODIUM-LIGAND COMPLEX**
INDOL-FUNKTIONALISIERTE BISPHOSPHORAMIDITE, VERFAHREN ZU IHRER HERSTELLUNG UND RHODIUM-LIGAND-KOMPLEX
BISPHOSPHORAMIDITES À FONCTION INDOLE, LEURS PROCÉDÉS DE PRÉPARATION ET COMPLEXE RHODIUM-LIGAND

(30) Priority: 13.04.2022 US 202263330571 P
(43) Date of publication of application: 19.02.2025
(73) Proprietor: Dow Global Technologies LLC, Midland, MI 48674 (US)
(72) Inventor: BISWAS, Souvagya, Midland, Michigan 48640 (US); BRAMMER, Michael A., Freeport, Texas 77541 (US); SPINNEY, Heather, Midland, Michigan 48640 (US); FROESE, Robert, Midland, Michigan 48640 (US); BERNALES, Varinia, Midland, Michigan 48640 (US); FIGUEROA, Ruth, Midland, Michigan 48674 (US)
(74) Representative: Elkington and Fife LLP
(86) International application number: PCT/US2023/018466
(87) International publication number: WO 2023/200935

(56) References cited:
- WO-A1-2023/060155
- CN-A- 112 851 708

## Description

### CROSS-REFERENCE TO RELATED APPLICATIONS

This application claims priority to and all advantages of U.S. Provisional Patent Application No. 63/330,571 filed on 13 April 2022.

### TECHNICAL FIELD

An indole-functionalized bisphosphoramidite having a certain formula is disclosed. The indole-functionalized bisphosphoramidite is suitable for use as a ligand, particularly for preparing a rhodium-ligand complex. A method of preparing a rhodium-ligand complex with the indole-functionalized bisphosphoramidite is also disclosed.

### BACKGROUND

Aldehydes are important intermediates in the synthesis of other functionalized materials like alcohols, carboxylic acids, and amines. The introduction of aldehyde functionality into olefins, especially via a continuous process, is important in many industries. The hydroformylation of olefins to prepare aldehydes is highly dependent on catalyst selection, both in terms of aldehyde selectivity (as linear aldehydes are generally preferred over branched aldehydes), production rate, and catalyst stability. Many conventional catalysts utilized in hydroformylation of olefins, even if having desirable selectivity, have poor stability that deactivate over time, which is undesirable. CN 112 851 708 A discloses a method for preparing olefine aldehyde by catalyzing terminal alkyne or terminal conjugated eneyne.

### BRIEF SUMMARY

An indole-functionalized bisphosphoramidite is disclosed. The indole-functionalized bisphosphoramidite has a formula selected from the group consisting of C1), C2), or C3): 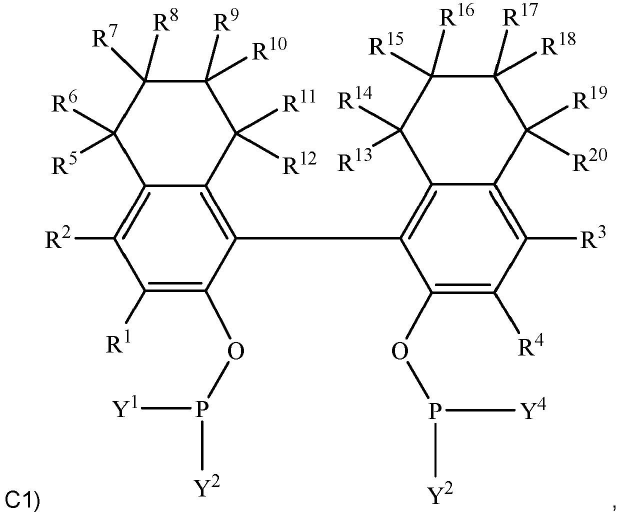 or 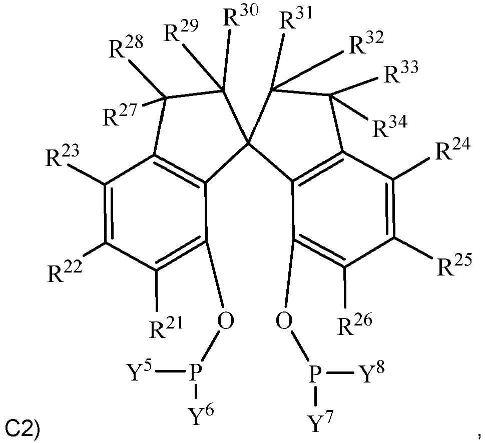 or

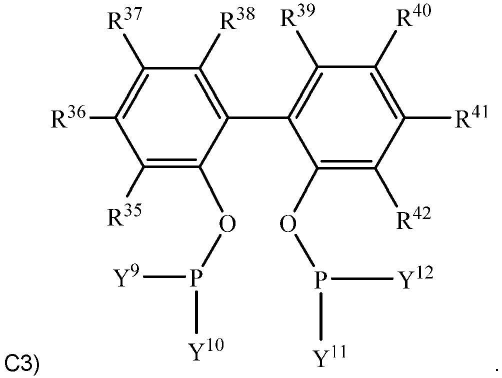

In formulas C1)-C3), R¹-R⁴² are each independently selected from H, a hydrocarbyl group, a heteroaryl group, a halogen atom, or a heterocarbyl group, with the proviso that at least one of R³⁵-R⁴² is not H. Each of Y¹ to Y¹² is an independently selected indole group of formula (I): 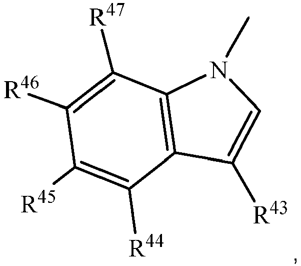 where each of R⁴³-R⁴⁷ is an independently selected atom or group selected from H, alkyl, aryl, heteroaryl, alkoxy, acyl, carboxyl, carboxylate, cyano, -SO₃H, sulfonate, amino, trifluoromethyl, halogen, a group of formula (II) below, and combinations thereof.

In the indole-functionalized bisphosphoramidite, the following provisos apply:
i) two or more of R⁴⁴-R⁴⁷ may optionally be bonded together to give one or more cyclic moieties, and
ii) in at least one of each of Y¹-Y⁴, Y⁵-Y⁸, and Y⁹-Y¹², either
   a) at least one of R⁴³-R⁴⁷ has formula (II) 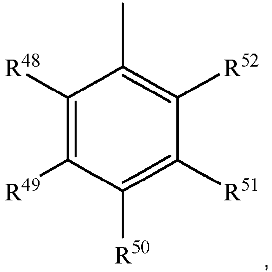 where each of R⁴⁸-R⁵² is an independently selected atom or group selected from H, alkyl, aryl, and alkoxy; or
   b) two or more of R⁴⁴-R⁴⁷ are bonded together to give one or more cyclic moieties; and
iii) when the indole-functionalized bisphosphoramidite has the formula C1), at least one of R⁴⁴-R⁴⁶ of at least one of Y¹-Y⁴ has formula (II).

A method for preparing a rhodium-ligand complex is also disclosed. The method comprises 1) combining starting materials comprising: (I) a rhodium catalyst precursor, and (II) the indole-functionalized bisphosphoramidite; and optionally (III) a solvent.

### DETAILED DESCRIPTION

An indole-functionalized bisphosphoramidite is disclosed. The indole-functionalized bisphosphoramidite has a formula selected from the group consisting of C1), C2), or C3): 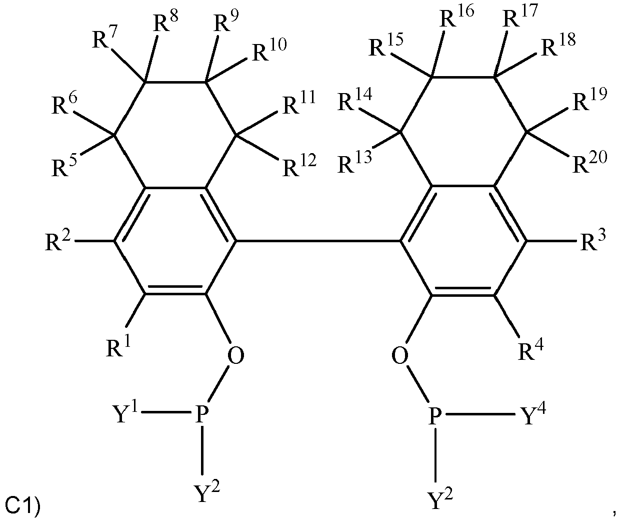 or 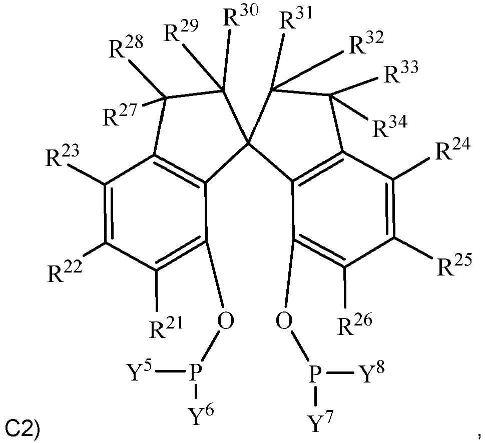 or

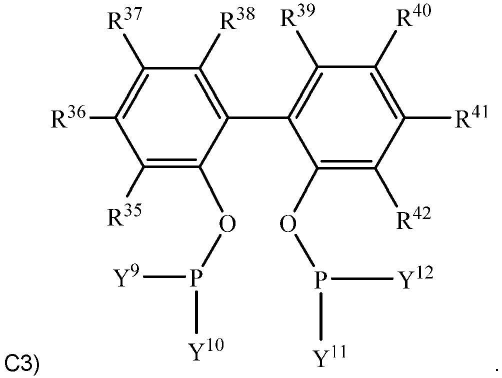

In formulas C1)-C3), R¹-R⁴² are each independently selected from H, a hydrocarbyl group, a heteroaryl group, a halogen atom, or a heterocarbyl group, with the proviso that at least one of R³⁵-R⁴² is not H. Because at least one of R³⁵-R⁴² is not H. at least one of R³⁵-R⁴² is a hydrocarbyl group, a heteroaryl group, a halogen atom, or a heterocarbyl group.

Suitable hydrocarbyl groups for R¹-R⁴² may independently be linear, branched, cyclic, or combinations thereof. Cyclic hydrocarbyl groups encompass aryl groups as well as saturated or non-conjugated cyclic groups. Cyclic hydrocarbyl groups may be monocyclic or polycyclic. Linear and branched hydrocarbyl groups may independently be saturated or unsaturated. One example of a combination of a linear and cyclic hydrocarbyl group is an aralkyl group. By "substituted," it is meant that one or more hydrogen atoms may be replaced with atoms other than hydrogen (e.g. a halogen atom, such as chlorine, fluorine, bromine, etc.). Suitable alkyl groups are exemplified by, but not limited to, methyl, ethyl, propyl (e.g., iso-propyl and/or n-propyl), butyl (e.g., isobutyl, n-butyl, tert-butyl, and/or sec-butyl), pentyl (e.g., isopentyl, neopentyl, and/or tert-pentyl), hexyl, as well as branched saturated hydrocarbon groups of 6 carbon atoms. Suitable aryl groups are exemplified by, but not limited to, phenyl, tolyl, xylyl, naphthyl, benzyl, and dimethyl phenyl. Suitable alkenyl groups include vinyl, allyl, propenyl, isopropenyl, butenyl, isobutenyl, pentenyl, heptenyl, hexenyl, and cyclohexenyl groups. Suitable monovalent halogenated hydrocarbon groups include, but are not limited to, a halogenated alkyl group of 1 to 6 carbon atoms, or a halogenated aryl group of 6 to 10 carbon atoms. Suitable halogenated alkyl groups are exemplified by, but not limited to, the alkyl groups described above where one or more hydrogen atoms is replaced with a halogen atom, such as F or CI. For example, fluoromethyl, 2-fluoropropyl, 3,3,3-trifluoropropyl, 4,4,4-trifluorobutyl, 4,4,4,3,3-pentafluorobutyl, 5,5,5,4,4,3,3-heptafluoropentyl, 6,6,6,5,5,4,4,3,3-nonafluorohexyl, and 8,8,8,7,7-pentafluorooctyl, 2,2-difluorocyclopropyl, 2,3-difluorocyclobutyl, 3,4-difluorocyclohexyl, and 3,4-difluoro-5-methylcycloheptyl, chloromethyl, chloropropyl, 2-dichlorocyclopropyl, and 2,3-dichlorocyclopentyl are examples of suitable halogenated alkyl groups. Suitable halogenated aryl groups are exemplified by, but not limited to, the aryl groups described above where one or more hydrogen atoms is replaced with a halogen atom, such as F or Cl. For example, chlorobenzyl and fluorobenzyl are suitable halogenated aryl groups. Suitable heterocarbyl groups include any of the hydrocarbyl groups described above, but including one or more heteroatoms, such as oxygen, sulfur, nitrogen, etc. Suitable halogen atoms include F, CI, Br, I, At, and Ts, alternatively F, Cl, and Br, alternatively CI.

Each of Y¹ to Y¹² is an independently selected indole group of formula (I): 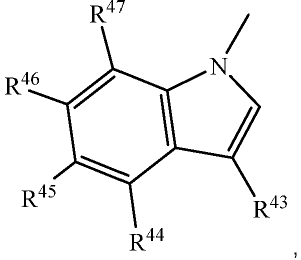 where each of R⁴³-R⁴⁷ is an independently selected atom or group selected from H, alkyl, aryl, heteroaryl, alkoxy, acyl, carboxyl, carboxylate, cyano, - SO₃H, sulfonate, amino, trifluoromethyl, halogen, a group of formula (II) below, and combinations thereof. Examples of alkyl, aryl, and heteroaryl are described above. In the formula above, the single line attached to N represents a bond, as the formula above is monovalent.

In the indole-functionalized bisphosphoramidite, the following provisos apply:
i) two or more of R⁴⁴-R⁴⁷ may optionally be bonded together to give one or more cyclic moieties, and
ii) in at least one of each of Y¹-Y⁴, Y⁵-Y⁸, and Y⁹-Y¹², either
   a) at least one of R⁴³-R⁴⁷ has formula (II) 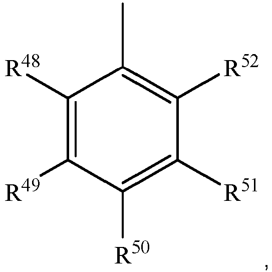 where each of R⁴⁶-R⁵² is an independently selected atom or group selected from H, alkyl, aryl, and alkoxy; or
   b) two or more of R⁴⁴-R⁴⁷ are bonded together to give one or more cyclic moieties; and
iii) when the indole-functionalized bisphosphoramidite has the formula C1), at least one of R⁴⁴-R⁴⁶ of at least one of Y¹-Y⁴ has formula (II).

All three of provisos (i) to (iii) apply to the indole-functionalized bisphosphoramidite. However, only one of provisos (ii)(a) and (ii)(b) need apply, i.e., both of (ii)(a) and (ii)(b) are not required, as these are alternative requirements, and thus only one of (ii)(a) or (ii)(b) is required.

Although all three of provisos (i) to (iii) apply to the indole-functionalized bisphosphoramidite, proviso (iii) is only invoked if the indole-functionalized bisphosphoramidite is of formula C1). Provisos (ii)(a) and (iii) are relevant to one another but apply to different embodiments of the indole-functionalized bisphosphoramidite. As appreciated by one of skill in the art in view of provisos (i) to (iii), when the indole-functionalized bisphosphoramidite is of formula C1), at least one of R⁴⁴-R⁴⁶ of at least one of Y¹-Y⁴ has formula (II) based on proviso (iii). However, when the indole-functionalized bisphosphoramidite is of formula C2) or C3), then based on proviso (ii), at least one of R⁴³-R⁴⁷ has formula (II) (i.e., proviso (ii)(a)), or two or more of R⁴⁴-R⁴⁷ are bonded together to give one or more cyclic moieties (i.e., proviso (ii)(b)). Based on proviso (iii), when the indole-functionalized bisphosphoramidite is of formula C1), R⁴³ of at least one of Y¹-Y⁴ can still be of formula (II), so long as at least one of R⁴⁴-R⁴⁶ of at least one of Y¹-Y⁴ also has formula (II).

In certain embodiments, formula (II) is independently selected from one of the following formulas: 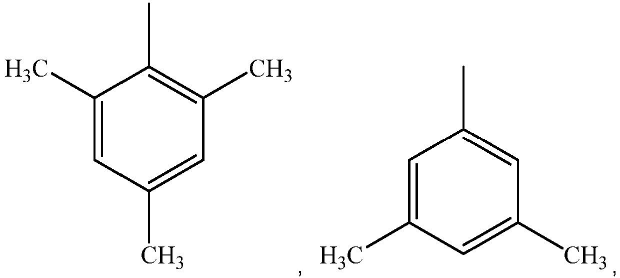 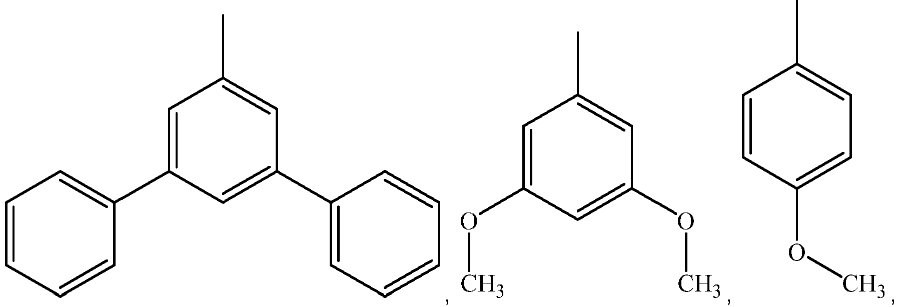 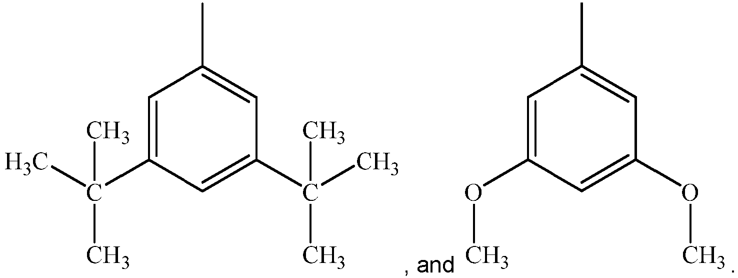 In the formulas above, the single line attached to each aryl moiety represents a bond in the indole group of formula (I), rather than a methyl group, as the formulas above are monovalent. Methyl groups are expressly labeled as such.

When at least one of R⁴³-R⁴⁷ has formula (II) based on proviso (ii)(a), based on the selection of formula (II), each of Y¹ to Y¹² can independently be selected from the group consisting of (subject to the provisos, and where Me means methyl, OMe means methoxy, Ph means phenyl, and tBu means t-butyl): 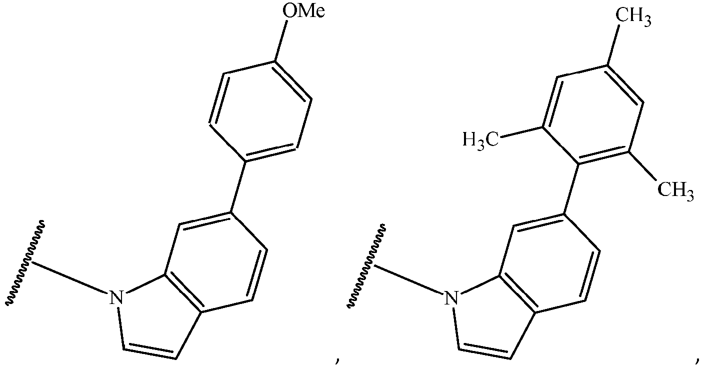 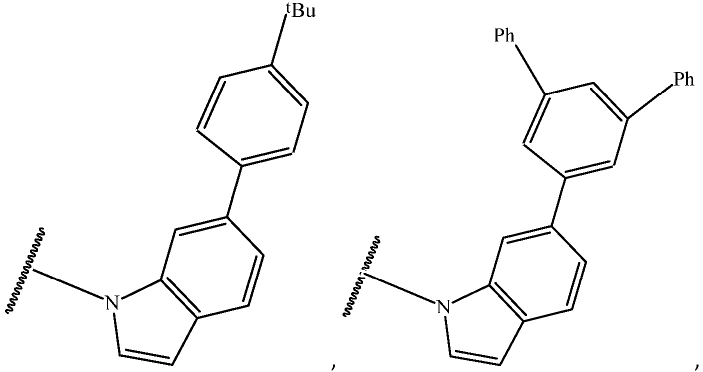 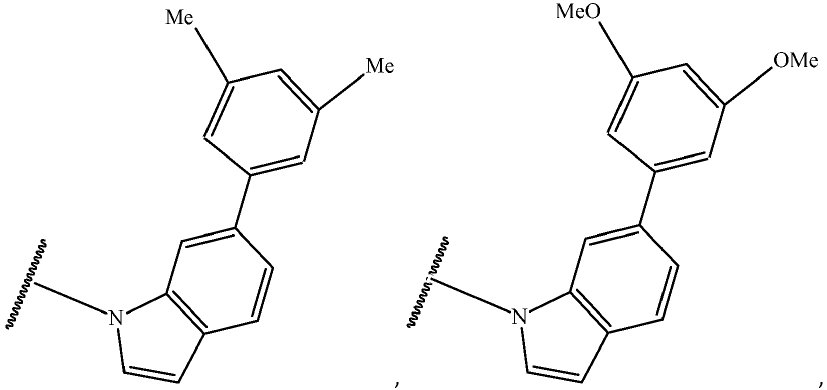 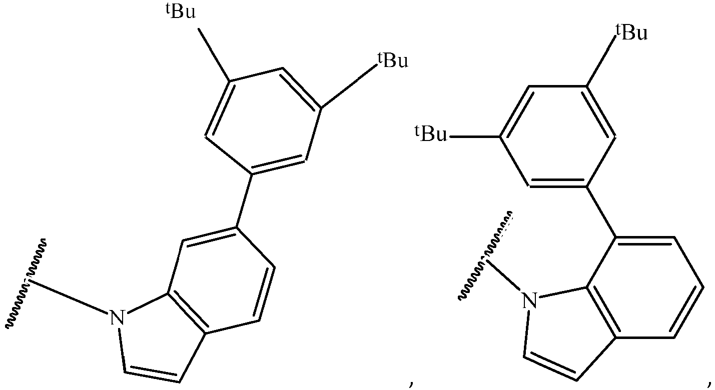 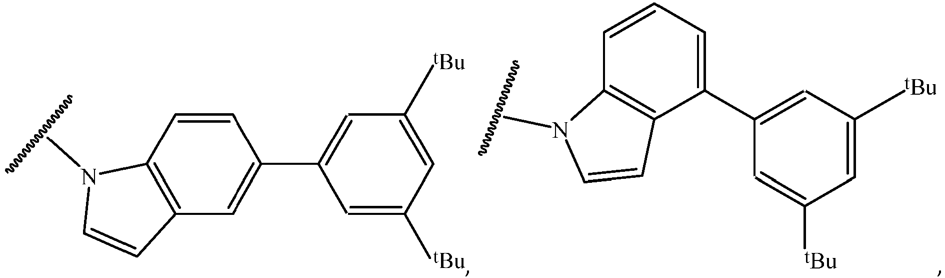 and

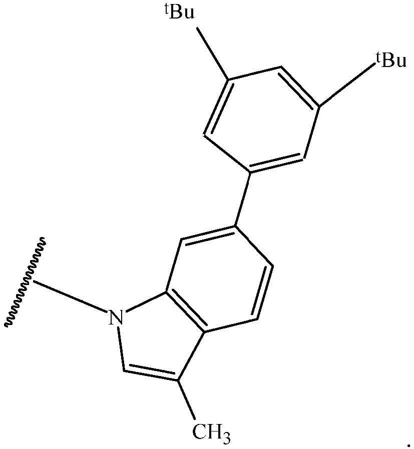

Alternatively, when two or more of R⁴⁴-R⁴⁷ are bonded together to give one or more cyclic moieties based on proviso (ii)(b), one example of Y¹ to Y¹² is:

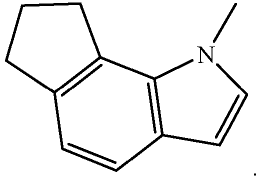

In certain embodiments in which proviso (ii)(a) is true, at least one of R⁴⁴-R⁴⁶ has formula (II). In specific embodiments in which proviso (ii)(a) is true, R⁴⁴ has formula (II). In other embodiments in which proviso (ii)(a) is true, R⁴⁵ has formula (II). In yet other embodiments in which proviso (ii)(a) is true, R⁴⁶ has formula (II).

In these or other embodiments, the indole-functionalized bisphosphoramidite has formula C1), and each of R¹-R²⁰ is H. In other embodiments, the indole-functionalized bisphosphoramidite has formula C2), and each of R²¹-R³⁴ is H. In yet other embodiments, the indole-functionalized bisphosphoramidite has formula C3), and each of R³⁵ and R⁴² is H, and each of R³⁶-R⁴¹ is methyl.

In one embodiment, the indole-functionalized bisphosphoramidite has formula C1). In another embodiment, the indole-functionalized bisphosphoramidite has formula C2). In yet another embodiment, the indole-functionalized bisphosphoramidite has formula C3).

By way of example, when indole-functionalized bisphosphoramidite has formula C1), and when R¹- R²⁰ are each H, the indole-functionalized bisphosphoramidite of formula C1) becomes the following: 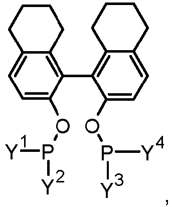 where Y¹-Y⁴ are independently selected and defined above.

As another example, when indole-functionalized bisphosphoramidite has formula C2), and when R²¹-R³⁴ are each H, the indole-functionalized bisphosphoramidite of formula C2) becomes the following: 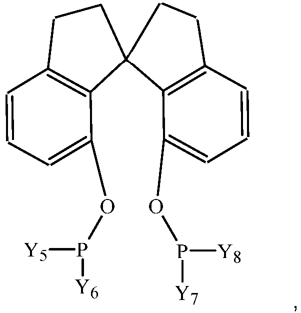 where Y⁵-Y⁸ are independently selected and defined above.

As yet another example, when indole-functionalized bisphosphoramidite has formula C3), R³⁵ and R⁴² are H, and each of R³⁶-R⁴¹ is methyl, the indole-functionalized bisphosphoramidite of formula C3) becomes the following: 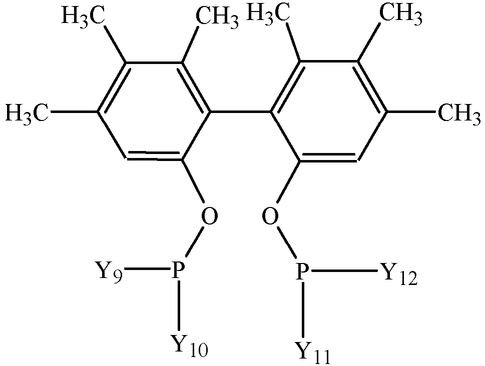 where Y⁹-Y¹² are independently selected and defined above.

In certain embodiments, the indole-functionalized bisphosphoramidite has formula C1), provisos (i), (ii)(a), and (iii) apply, and R¹-R²⁰ and Y¹-Y⁴ are selected such that the indole-functionalized bisphosphoramidite is selected from the group consisting of those below in Table 1 (L1-L9 or L13).

**Table 1: Certain Species of Indole-Functionalized Bisphosphoramidite**

| | |
|---|---|
| (L1) | 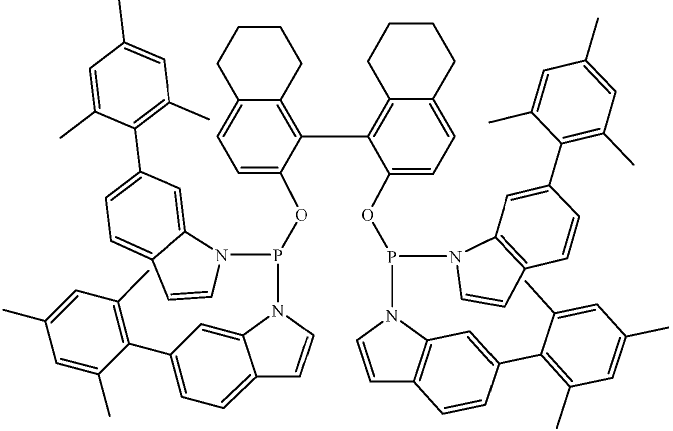 2,2'-bis((bis(6-mesityl-1H-indol-1-yl)phosphaneyl)oxy)-5,5',6,6',7,7',8,8'-octahydro-1,1'-binaphthalene |
| (L2) | 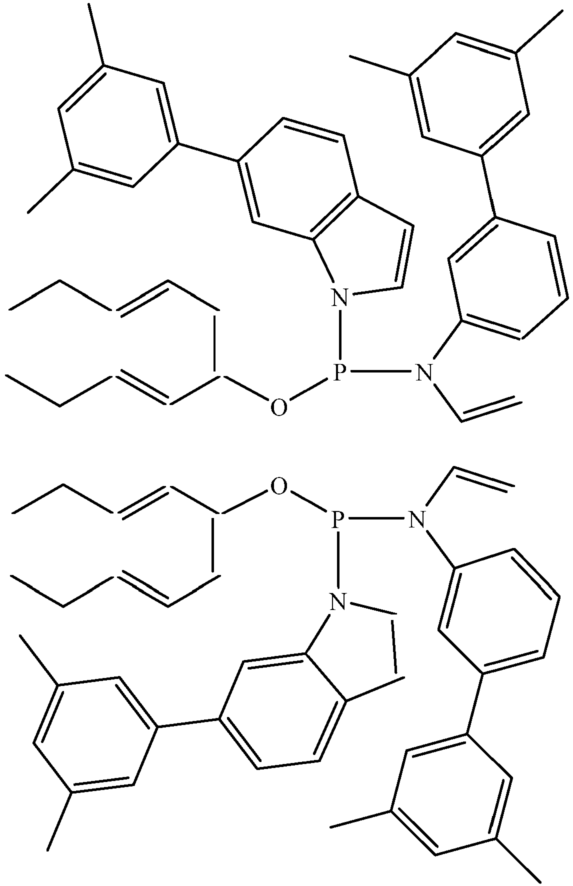 2,2'-bis((bis(6-(3,5-dimethylphenyl)-1H-indol-1-yl)phosphaneyl)oxy)-5,5',6,6',7,7',8,8'-octahydro-1,1'-binaphthalene |
| (L3) | 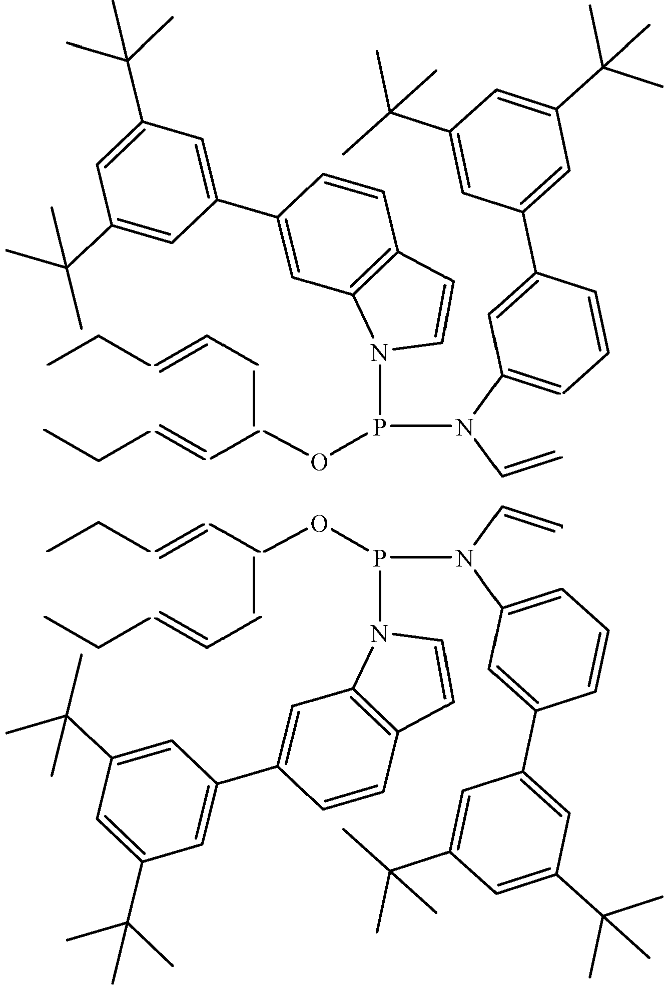 2,2'-bis((bis(6-(3,5-di-tert-butylphenyl)-1H-indol-1-yl)phosphaneyl)oxy)-5,5',6,6',7,7',8,8'-octahydro-1,1'-binaphthalene; |
| (L4) | 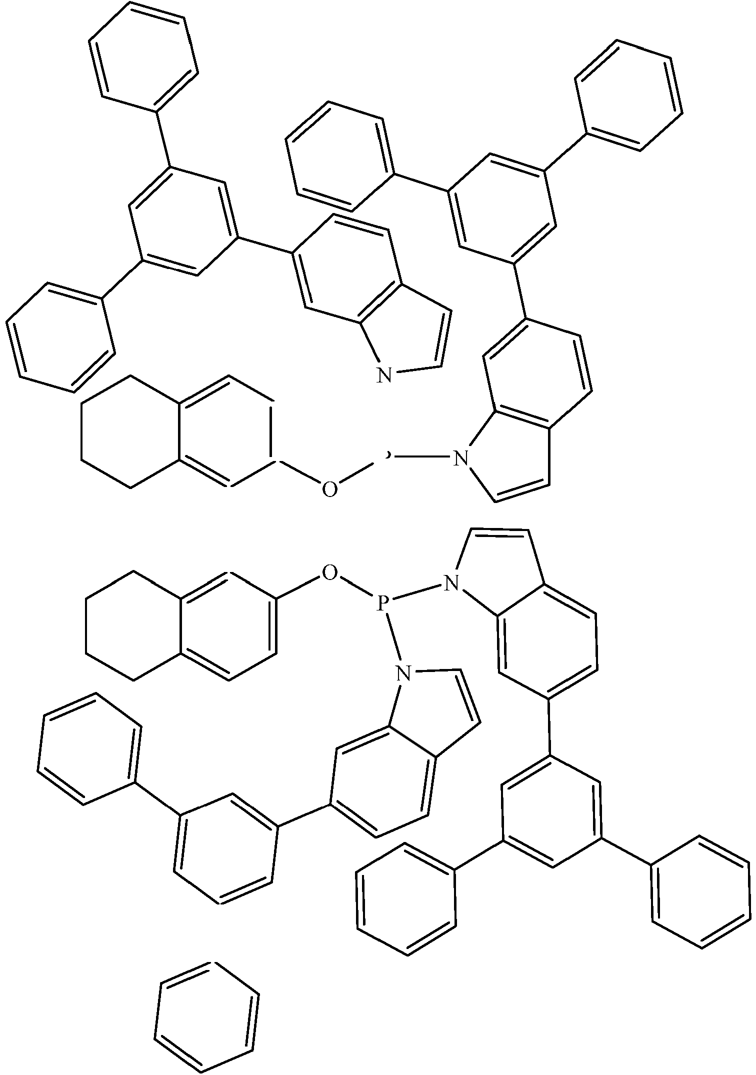 2,2'-bis((bis(6-([1,1':3',1"-terphenyl]-5'-yl)-1H-indol-1-yl)phosphaneyl)oxy)-5,5',6,6',7,7',8,8'-octahydro-1,1'-binaphthalene |
| (L5) | 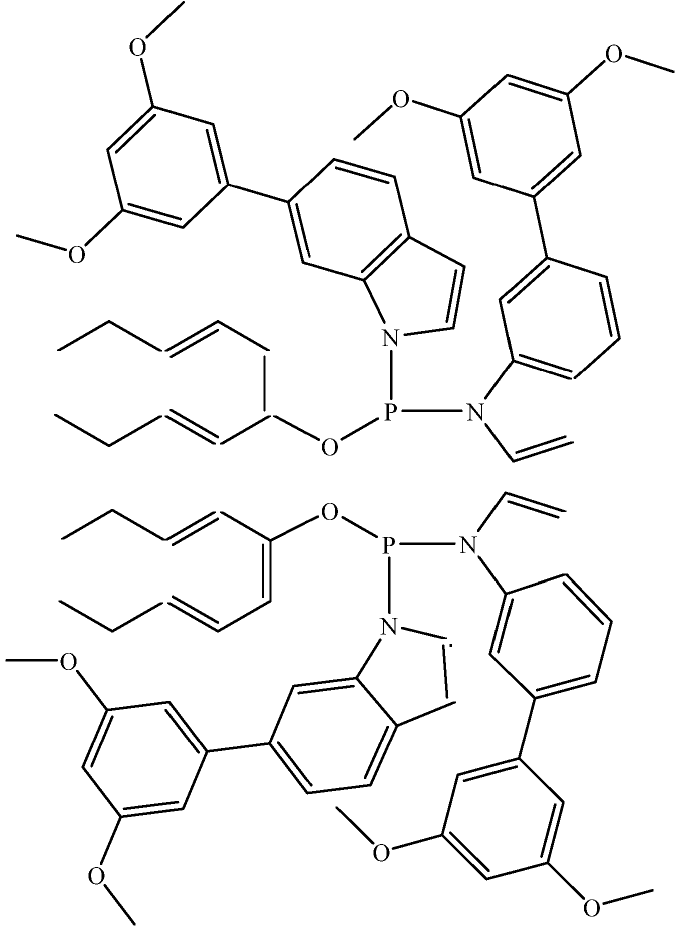 2,2'-bis((bis(6-([1,1':3',1"-terphenyl]-5'-yl)-1H-indol-1-yl)phosphaneyl)oxy)-5,5',6,6',7,7',8,8'-octahydro-1,1'-binaphthalene |
| (L6) | 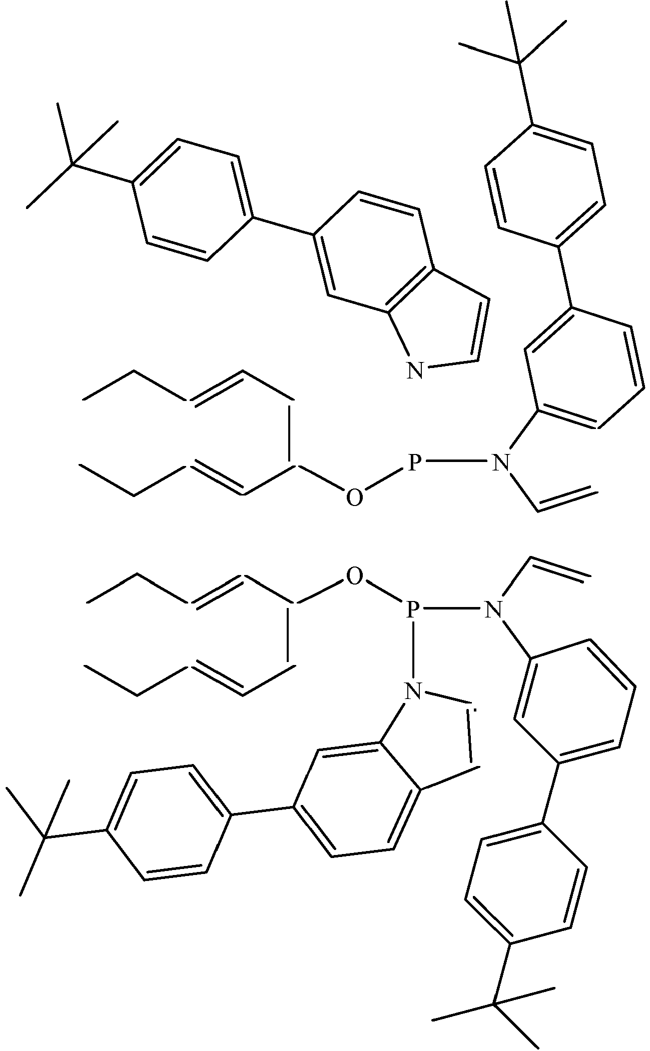 2,2'-bis((bis(6-(4-(tert-butyl)phenyl)-1H-indol-1-yl)phosphaneyl)oxy)-5,5',6,6',7,7',8,8'-octahydro-1,1'-binaphthalene |
| (L7) | 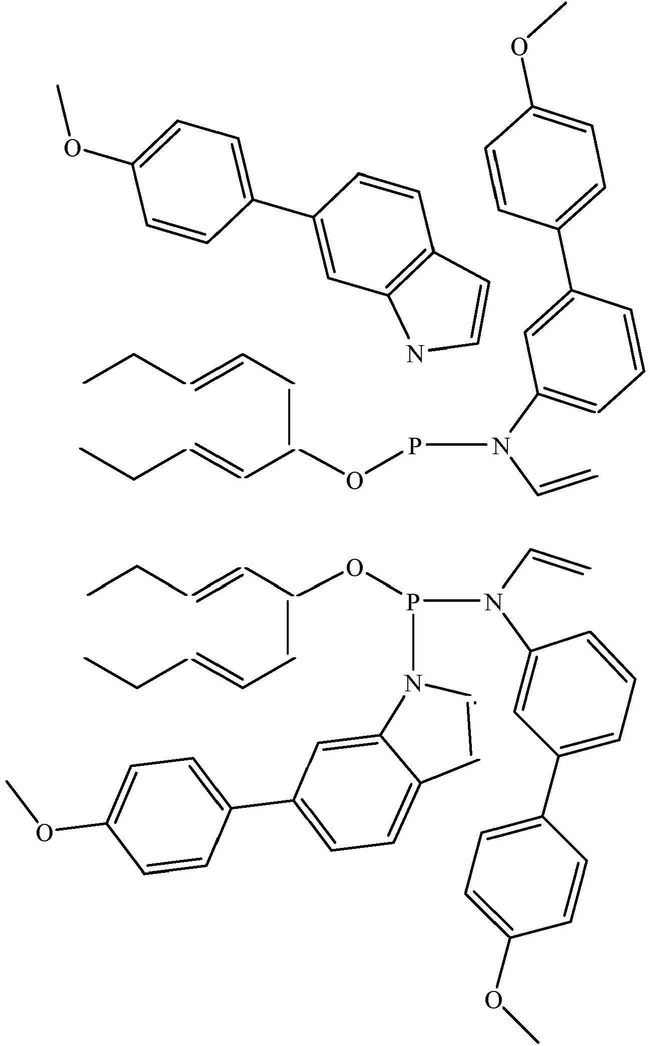 2,2'-bis((bis(6-(4-methoxyphenyl)-1H-indol-1-yl)phosphaneyl)oxy)-5,5',6,6',7,7',8,8'-octahydro-1,1'-binaphthalene |
| (L8) | 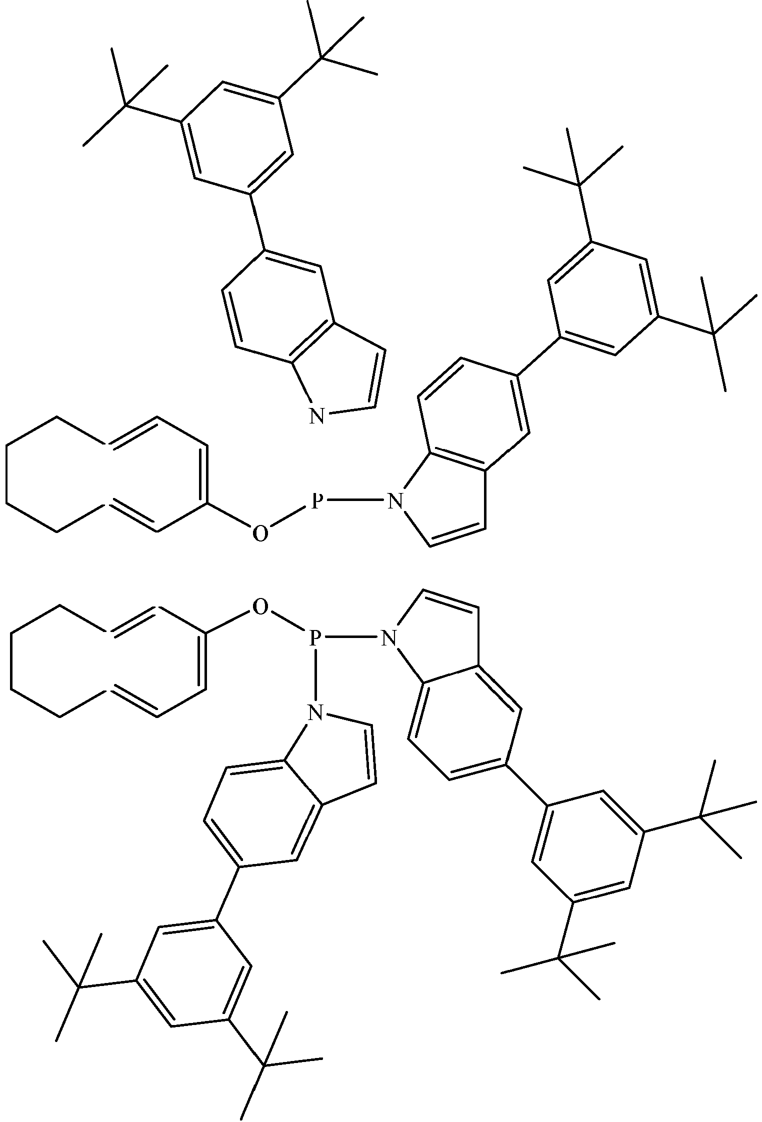 2,2'-bis((bis(5-(3,5-di-tert-butylphenyl)-1H-indol-1-yl)phosphaneyl)oxy)-5,5',6,6',7,7',8,8'-octahydro-1,1'-binaphthalene |
| (L9) | 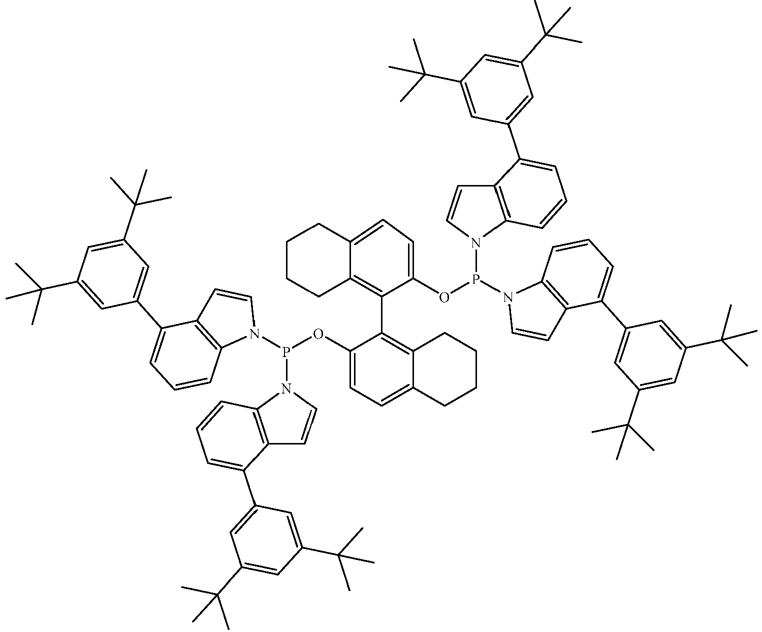 2,2'-bis((bis(4-(3,5-di-tert-butylphenyl)-1H-indol-1-yl)phosphaneyl)oxy)-5,5',6,6',7,7',8,8'-octahydro-1,1'-binaphthalene |
| (L13) | 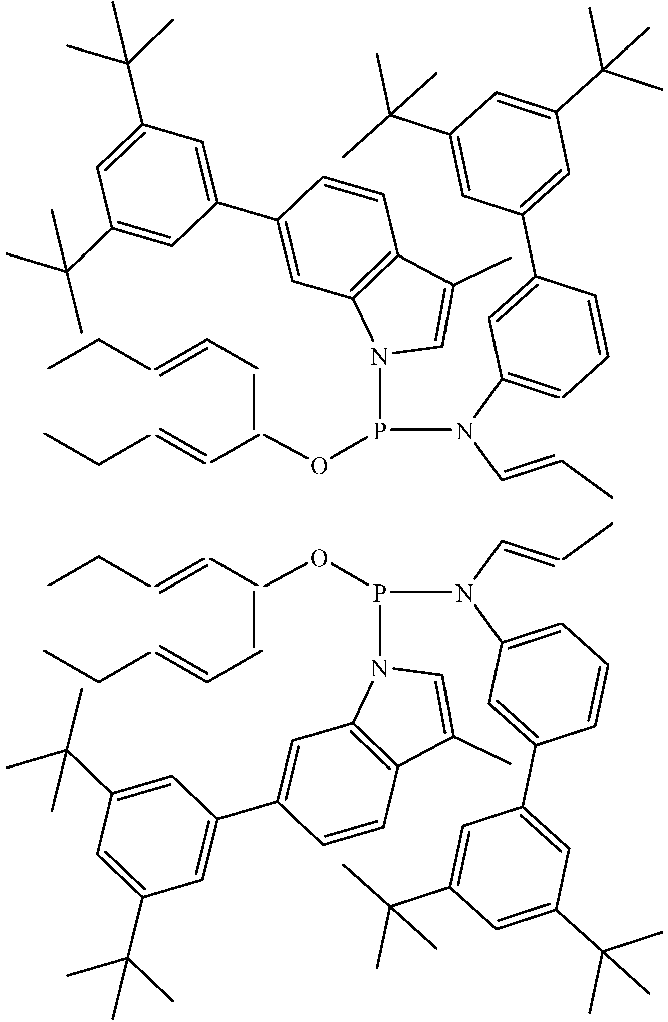 2,2'-bis((bis(6-(3,5-di-tert-butylphenyl)-3-methyl-1H-indol-1-yl)phosphaneyl)oxy)-5,5',6,6',7,7',8,8'-octahydro-1,1'-binaphthalene |

One of skill in the art understands how to prepare the indole-functionalized bisphosphoramidites above in view of the Examples herein, and understands how to replace certain starting materials to modify desired structures under similar reaction schemes. In addition, general methods of preparing ligand structures are disclosed in U.S. Pat. No. 9,795,952 to Diebolt et al, which can be modified by one of skill in the art in view of the teachings herein to prepare the indole-functionalized bisphosphoramidites above.

In another embodiment, the indole-functionalized bisphosphoramidite has formula C1), provisos (i), (ii)(b), and (iii) apply, and R¹-R²⁰ and Y¹-Y⁴ are selected such that the indole-functionalized bisphosphoramidite has the following formula below in Table 2 (L12).

**Table 2: Specie of Indole-Functionalized Bisphosphoramidite**

| | |
|---|---|
| (L12) | 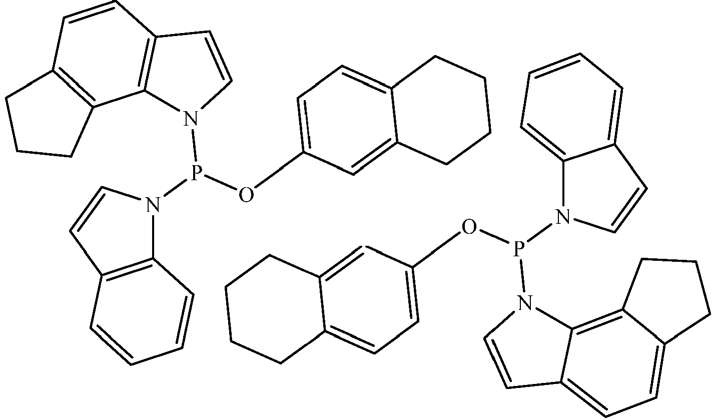 2,2'-bis(((7,8-dihydrocyclopenta[g]indol-1(6H)-yl)(1H-indol-1-yl)phosphaneyl)oxy)-5,5',6,6',7,7',8,8'-octahydro-1,1'-binaphthalene |

One of skill in the art understands how to prepare the indole-functionalized bisphosphoramidite above in view of the Examples herein, and understands how to replace certain starting materials to modify desired structures under similar reaction schemes. In addition, general methods of preparing ligand structures are disclosed in U.S. Pat. No. 9,795,952 to Diebolt et al, which can be modified by one of skill in the art in view of the teachings herein to prepare the indole-functionalized bisphosphoramidite above.

In other embodiments, the indole-functionalized bisphosphoramidite has formula C2), and R²¹-R³⁴, and Y⁵-Y⁸ are selected such that the indole-functionalized bisphosphoramidite has the following formula below in Table 3 (L11).

**Table 3: Specie of Indole-Functionalized Bisphosphoramidite**

| | |
|---|---|
| (L11) | 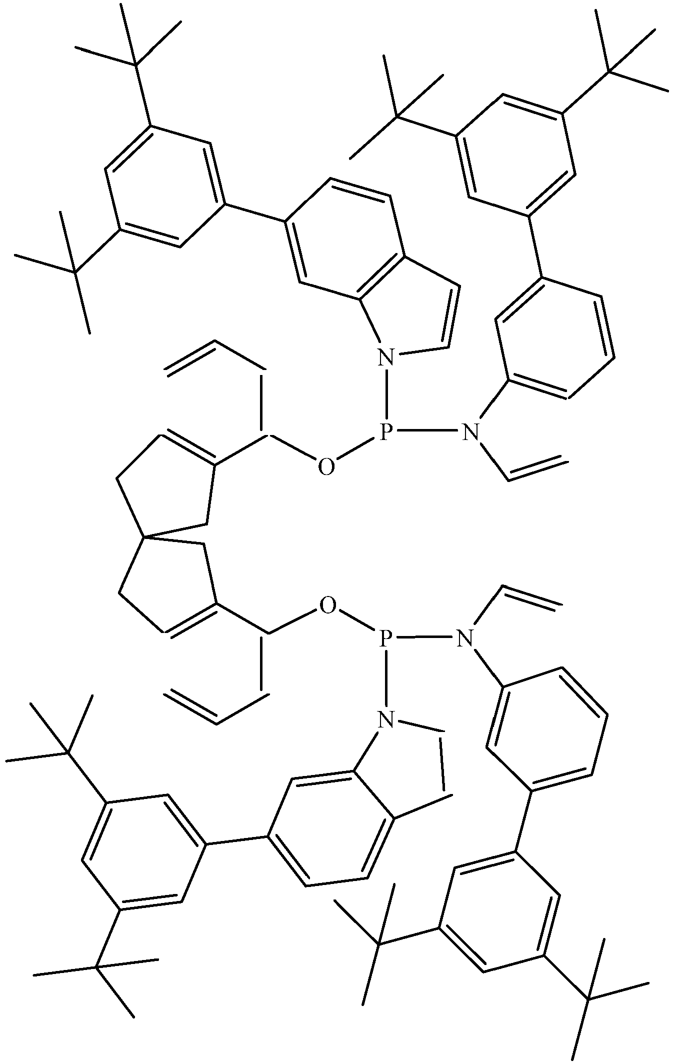 4,4'-bis((bis(6-(3,5-di-tert-butylphenyl)-1H-indol-1-yl)phosphaneyl)oxy)-1,1',3,3'-tetrahydro-2,2'-spirobi[indene] |

One of skill in the art understands how to prepare the indole-functionalized bisphosphoramidite above in view of the Examples herein, and understands how to replace certain starting materials to modify desired structures under similar reaction schemes. In addition, general methods of preparing ligand structures are disclosed in U.S. Pat. No. 9,795,952 to Diebolt et al, which can be modified by one of skill in the art in view of the teachings herein to prepare the indole-functionalized bisphosphoramidite above.

In yet other embodiments, the indole-functionalized bisphosphoramidite has formula C3), and R³⁵-R⁴², and Y⁹-Y¹² are selected such that the indole-functionalized bisphosphoramidite has the following formula below in Table 4 (L10).

**Table 4: Specie of Indole-Functionalized Bisphosphoramidite**

| | |
|---|---|
| (L10) | 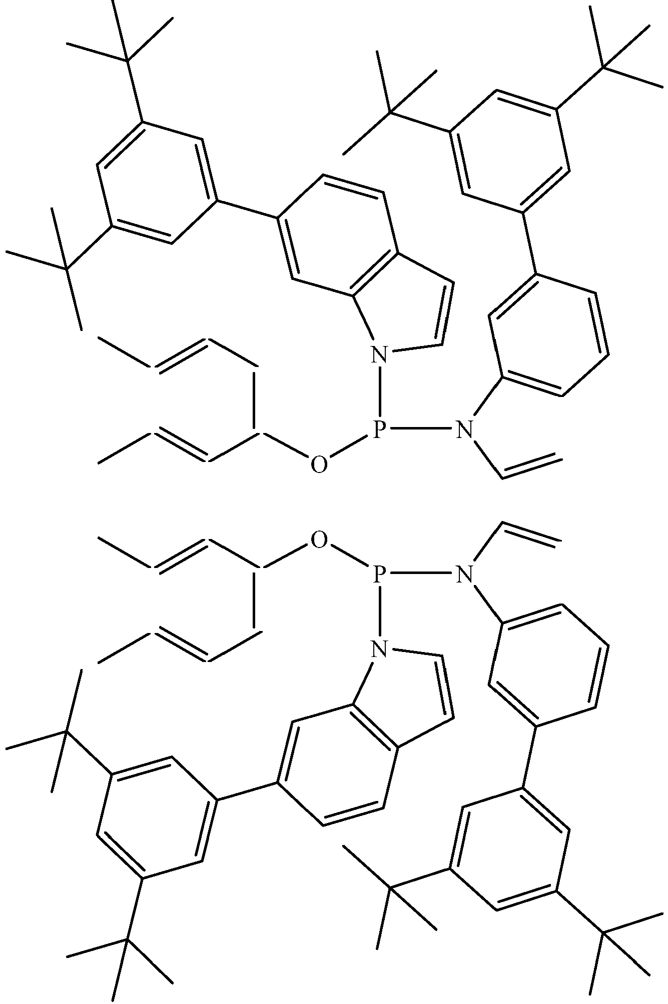 1,1',1",1‴-(((4,4',5,5',6,6'-hexamethyl-[1,1'-biphenyl]-2,2'-diyl)bis(oxy))bis(phosphanetriyl))tetrakis(6-(3,5-di-tert-butylphenyl)-1H-indole) |

One of skill in the art understands how to prepare the indole-functionalized bisphosphoramidite above in view of the Examples herein, and understands how to replace certain starting materials to modify desired structures under similar reaction schemes. In addition, general methods of preparing ligand structures are disclosed in U.S. Pat. No. 9,795,952 to Diebolt et al, which can be modified by one of skill in the art in view of the teachings herein to prepare the indole-functionalized bisphosphoramidite above.

A method for preparing a rhodium-ligand complex is also disclosed. The method comprises combining starting materials comprising: (I) a rhodium catalyst precursor, and (II) the indole-functionalized bisphosphoramidite; and optionally (III) a solvent. The rhodium-ligand complex forms from starting materials (I) and (II), optionally in starting material (III).

For example, the rhodium-ligand complex may be prepared by a process comprising combining a rhodium catalyst precursor and the indole-functionalized bisphosphoramidite described above under conditions to form the complex. Alternatively, the rhodium-ligand complex may be formed *in situ* by introducing the rhodium catalyst precursor into a reaction medium, and the indole-functionalized bisphosphoramidite into the reaction medium (*e.g*., before, during, and/or after introduction of the rhodium catalyst precursor), for the *in situ* formation of the rhodium-ligand complex, e.g. during a hydroformylation reaction, as described below. Rhodium catalyst precursors are exemplified by rhodium dicarbonyl acetylacetonate, Rh₂O₃, Rh₄(CO)₁₂, Rh₆(CO)₁₆, and Rh(NO₃)₃. Additional methods to prepare certain indole-functionalized bisphosphoramidites are described herein in the appended Examples.

For example, a rhodium catalyst precursor, such as rhodium dicarbonyl acetylacetonate, optionally starting material (D), a solvent, and the indole-functionalized bisphosphoramidite may be combined, e.g., by any convenient means such as mixing.

The rhodium-ligand complex is particularly suited for a hydroformylation process involving an olefin. The hydroformylation process described herein employs starting materials comprising: (A) a gas comprising hydrogen and carbon monoxide, (B) an olefin, and (C) the rhodium-ligand complex catalyst. The starting materials may optionally further comprise (D) a solvent.

Starting material (A), the gas used in the hydroformylation process, comprises carbon monoxide (CO) and hydrogen gas (H₂). For example, the gas may be syngas. As used herein, "syngas" (from *synthesis gas*) refers to a gas mixture that contains varying amounts of CO and H₂. Production methods are well known and include, for example: (1) steam reforming and partial oxidation of natural gas or liquid hydrocarbons, and (2) the gasification of coal and/or biomass. CO and H₂ typically are the main components of syngas, but syngas may contain carbon dioxide and inert gases such as CH₄, N₂ and Ar. The molar ratio of H₂ to CO (H₂:CO molar ratio) varies greatly but may range from 1:100 to 100:1, alternatively 1:10 and 10:1. Syngas is commercially available and is often used as a fuel source or as an intermediate for the production of other chemicals. Alternatively, CO and H₂ from other sources (*i.e.,* other than syngas) may be used as starting material (A) herein. Alternatively, the H₂:CO molar ratio in starting material (A) for use herein may be 3:1 to 1:3, alternatively 2:1 to 1:2, and alternatively 1:1.

Starting material (B), the olefin, is not limited. Starting material (B) may be substituted or unsubstituted, and can be selected from optically active (prochiral and chiral) and non-optically active (achiral) olefinic unsaturated compounds containing from 2 to 40, alternatively from 2 to 30, alternatively from 2 to 20, carbon atoms and one or more carbon-carbon double bonds (C=C).

Starting material (B), can be terminally or internally unsaturated and be of straight-chain, branched chain, or cyclic structures. Olefin mixtures, such as obtained from the oligomerization of propene, butene, and isobutene, (such as, so called dimeric, trimeric or tetrameric propylene) may also be employed, as well as mixed butenes, for example, raffinate I and raffinate II known to one of skill in the art.

Exemplary examples of alpha and internal olefins suitable for starting material (B) include ethylene, propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 2-butene, 2-methyl propene (isobutylene), 2-methylbutene, 2-pentene, 2-hexene, 3-hexane, 2-heptene, 2-octene, cyclohexene, propylene dimers, propylene trimers, propylene tetramers, butadiene, piperylene, isoprene, 2-ethyl-1-hexene, styrene, 4-methyl styrene, 4-isopropyl styrene, 4-tert-butyl styrene, alpha-methyl styrene, 4-tert-butyl-alpha-methyl styrene, 1,3-diisopropenylbenzene, 3-phenyl-1-propene, 1,4-hexadiene, 1,7-octadiene, 3-cyclohexyl-1-butene, and the like, as well as, 1,3-dienes, butadiene, alkyl alkenoates, for example, methyl pentenoate; alkenyl alkanoates, alkenyl alkyl ethers, alkenols, for example, pentenols; alkenals, for example, pentenals; such species to include allyl alcohol, allyl butyrate, hex-1-en-4-ol, oct-1-en-4-ol, vinyl acetate, allyl acetate, 3-butenyl acetate, vinyl propionate, allyl propionate, methyl methacrylate, vinyl ethyl ether, vinyl methyl ether, allyl ethyl ether, n-propyl-7-octenoate, 3-butenenitrile, 5-hexenamide, eugenol, iso-eugenol, safrole, iso-safrole, anethol, 4-allylanisole, indene, limonene, beta-pinene, dicyclopentadiene, cyclooctadiene, camphene, linalool, oleic acid and esters thereof, such as methyl oleate, and homologous unsaturated fatty acids and unsaturated fatty acid esters. Illustrative of suitable substituted and unsubstituted olefinic starting materials include those olefinic compounds described in Kirk-Othmer, Encyclopedia of Chemical Technology, Fourth Edition, 1996.

The (C) rhodium-ligand complex is described above and may be introduced into the reactor, optionally with excess indole-functionalized bisphosphoramidite. Alternatively, the rhodium catalyst precursor, (D) the solvent, and the ligand may be combined in the reactor with starting material (A) and/or (B), the olefin; and the rhodium-ligand complex may form *in situ.* The relative amounts of ligand and rhodium catalyst precursor are sufficient to provide a molar ratio of indole-functionalized bisphosphoramidite/Rh of 10/1 to 1/1, alternatively 5/1 to 1/1, alternatively 3/1 to 1/1, alternatively 2.5/1 to 1.5/1. In addition to the rhodium-ligand complex, excess (*e.g*., not complexed) indole-functionalized bisphosphoramidite may be present in the reaction mixture. The excess indole-functionalized bisphosphoramidite may be the same as, or different from, the indole-functionalized bisphosphoramidite in the rhodium-ligand complex.

The amount of (C) the rhodium-ligand complex catalyst (catalyst) is sufficient to catalyze hydroformylation of (B) the olefin. The exact amount of catalyst will depend on various factors including the type of olefin selected for starting material (B), its exact vinyl content, and the reaction conditions such as temperature and pressure of starting material (A). However, the amount of (C) the catalyst may be sufficient to provide a rhodium metal concentration of at least 0.1 ppm, alternatively 0.15 ppm, alternatively 0.2 ppm, alternatively 0.25 ppm, and alternatively 0.5 ppm, based on the weight of (B) the olefin. At the same time, the amount of (C) the catalyst may be sufficient to provide a rhodium metal concentration of up to 300 ppm, alternatively up to 100 ppm, alternatively up to 20 ppm, and alternatively up to 5 ppm, on the same basis. Alternatively, the amount of (C) the catalyst may be sufficient to provide 0.1 ppm to 300 ppm, alternatively 0.2 ppm to 100 ppm, alternatively, 0.25 ppm to 20 ppm, and alternatively 0.5 ppm to 5 ppm, based on the weight of (B) the olefin.

The hydroformylation process reaction may run without additional solvents. Alternatively, the hydroformylation process reaction may be carried out with a solvent, for example to facilitate mixing and/or delivery of one or more of the starting materials described above, such as (C) the catalyst and/or starting material (B). The solvent is exemplified by aliphatic or aromatic hydrocarbons, which can dissolve the starting materials, e.g., toluene, xylene, benzene, hexane, heptane, decane, cyclohexane, or a combination of two or more thereof. Additional solvents include THF, dibutyl ether, diglyme, and Texanol. Without wishing to be bound by theory, it is thought that solvent may be used to reduce the viscosity of the starting materials. The amount of solvent is not critical, however, when present, the amount of solvent may be 5% to 70% based on weight of starting material (B) the olefin.

In the process described herein, step 1) is performed at relatively low temperature. For example, step 1) may be performed at a temperature of at least 30 °C, alternatively at least 50 °C, and alternatively at least 70 °C. At the same time, the temperature in step 1) may be up to 150 °C; alternatively up to 100 °C; alternatively up to 90 °C, and alternatively up to 80 °C. Without wishing to be bound by theory, it is thought that lower temperatures, e.g., 30 °C to 90 °C, alternatively 40 °C to 90 °C, alternatively 50 °C to 90 °C, alternatively 60 °C to 90 °C, alternatively 70 °C to 90 °C, alternatively 80 °C to 90 °C, alternatively 30 °C to 60 °C, alternatively 50 °C to 60 °C may be desired for achieving high selectivity and ligand stability.

In the process described herein, step 1) may be performed at a pressure of at least 101 kPa (ambient), alternatively at least 206 kPa (30 psi), and alternatively at least 344 kPa (50 psi). At the same time, pressure in step 1) may be up to 6,895 kPa (1,000 psi), alternatively up to 1,379 kPa (200 psi), alternatively up to 1000 kPa (145 psi), and alternatively up to 689 kPa (100 psi). Alternatively, step 1) may be performed at 101 kPa to 6,895 kPa; alternatively 344 kPa to 1,379 kPa; alternatively 101 kPa to 1,000 kPa; and alternatively 344 kPa to 689 kPa. Without wishing to be bound by theory, it is thought that using relatively low pressures, *e.g.*, < to 6,895 kPa in the process herein may be beneficial; the ligands described herein allow for low pressure hydroformylation processes, which have the benefits of lower cost and better safety than high pressure hydroformylation processes.

The hydroformylation process may be carried out in a batch, semi-batch, or continuous mode, using one or more suitable reactors, such as a fixed bed reactor, a fluid bed reactor, a continuous stirred tank reactor (CSTR), or a slurry reactor. The selection of (B) the olefin, and (C) the catalyst, and whether (D) the solvent, is used may impact the size and type of reactor used. One reactor, or two or more different reactors, may be used. The hydroformylation process may be conducted in one or more steps, which may be affected by balancing capital costs and achieving high catalyst selectivity, activity, lifetime, and ease of operability, as well as the reactivity of the particular starting materials and reaction conditions selected, and the desired product.

Alternatively, the hydroformylation process may be performed in a continuous manner. For example, the process used may be as described in U.S. Patent 10,023,516 except that the catalyst described therein is replaced with (C) the rhodium-ligand complex described herein.

Step 1) of the hydroformylation process forms a reaction fluid comprising an aldehyde-functional compound. The reaction fluid may further comprise additional materials, such as those which have either been deliberately employed, or formed *in situ,* during step 1) of the process. Examples of such materials that can also be present include unreacted (B) olefin, unreacted (A) carbon monoxide and hydrogen gases, and/or *in situ* formed side products, such as indole-functionalized bisphosphoramidite degradation products and adducts thereof, and high boiling liquid aldehyde condensation byproducts, as well as (D) a solvent, if employed. The term "indole-functionalized bisphosphoramidite degradation product" includes but is not limited to any and all compounds resulting from one or more chemical transformations of at least one of the ligand molecules used in the process.

The hydroformylation process may further comprise one or more additional steps such as: 2) recovering (C) the rhodium-ligand complex from the reaction fluid comprising the aldehyde-functional compound. Recovering (C) the rhodium-ligand complex may be performed by methods known in the art, including but not limited to adsorption and/or membrane separation (e.g., nanofiltration). Suitable recovery methods are as described, for example, in U.S. Patents 5,681,473 to Miller, et al.; 8,748,643 to Priske, et al.; and 10,155,200 to Geilen, et al.

However, one benefit of the process described herein is that (C) the catalyst need not be removed and recycled. Due to the low level of Rh needed, it may be more cost effective not to recover and recycle (C) the catalyst; and the aldehyde-functional compound produced by the process may be stable even when the catalyst is not removed. Therefore, alternatively, the process described above may be performed without step 2).

Alternatively, the hydroformylation process may further comprise 3) purification of the reaction product. For example, the aldehyde-functional compound may be isolated from the additional materials, described above, by any convenient means such as stripping and/or distillation, optionally with reduced pressure.

The following examples are intended to illustrate the invention and are not to be viewed in any way as limiting to the scope of the invention.

Certain components utilized in the Examples are set forth in Table 5 below.

**Table 5: Components/Compounds Utilized**

| Component | Chemical Class/Description |
|---|---|
| Solvent 1 | Toluene (C₇H₈) |
| Solvent 2 | Tetraglyme |
| Olefin | Propylene |
| Precatalyst | 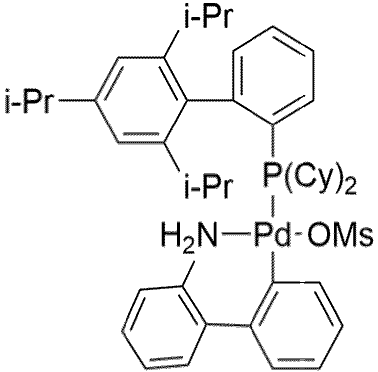 , obtained from from Sigma-Aldrich as XPhos Pd G3 |
| Ligand 1 (L1) | As synthesized in Preparation Example 1 |
| Ligand 2 (L2) | As synthesized in Preparation Example 2 |
| Ligand 3 (L3) | As synthesized in Preparation Example 3 |
| Ligand 4 (L4) | As synthesized in Preparation Example 4 |
| Ligand 5 (L5) | As synthesized in Preparation Example 5 |
| Ligand 6 (L6) | As synthesized in Preparation Example 6 |
| Ligand 7 (L7) | As synthesized in Preparation Example 7 |
| Ligand 8 (L8) | As synthesized in Preparation Example 8 |
| Ligand 9 (L9) | As synthesized in Preparation Example 9 |
| Ligand 10 (L10) | As synthesized in Preparation Example 10 |
| Ligand 11 (L11) | As synthesized in Preparation Example 11 |
| Ligand 12 (L12) | As synthesized in Preparation Example 12 |
| Ligand 13 (L13) | As synthesized in Preparation Example 13 |
| Comparative Ligand 1 (CL1) | 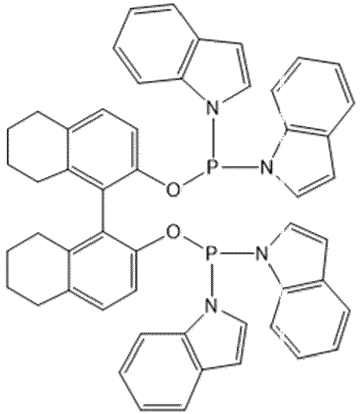 , as prepared in accordance with the disclosure of U.S. Pat. No. 9,795,952 to Diebolt et al. |
| Comparative Ligand 2 (CL2) | 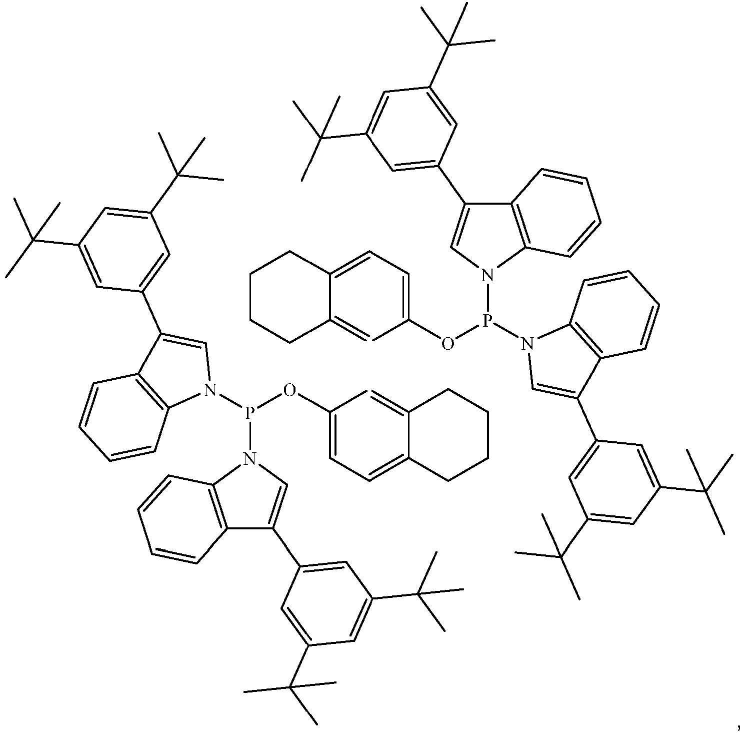 as synthesized in Preparation Example 14 |
| Comparative Ligand 3 (CL3) | 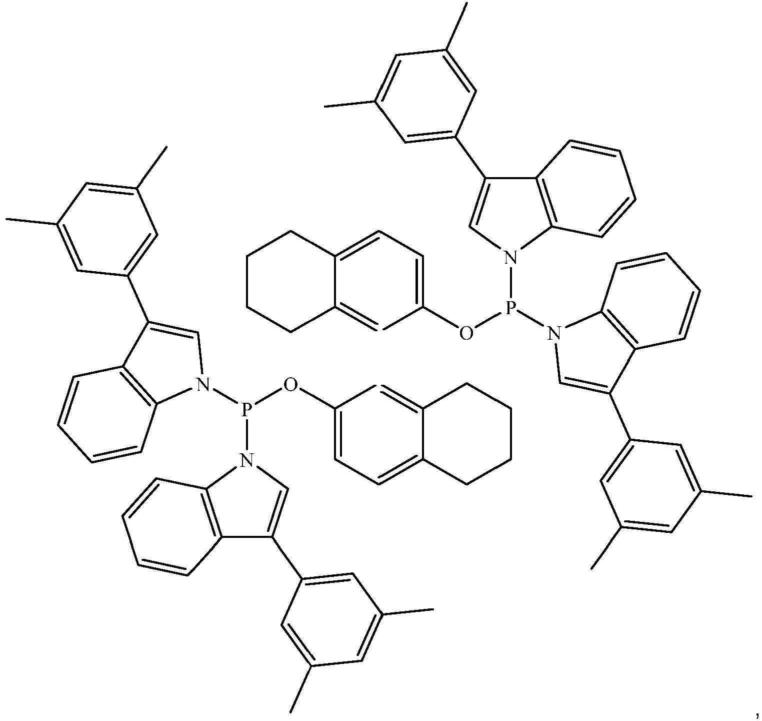 as synthesized in Preparation Example 15 |

The product structures and composition were supported by ¹H, ¹³C, and ²⁹Si Nuclear Magnetic Resonance (NMR).

¹H, ¹³C, and ²⁹Si NMR spectra were recorded on a Varian 400-NMR spectrometer (400 MHz, ¹H) with an autosampler. Chemical shifts (δ) for ¹H and ¹³C spectra were referenced to internal solvent resonances and are reported relative to tetramethyl silane. Predicted chemical shifts for ¹H and ¹³C spectra were obtained using Perkin-Elmer ChemDraw Version 18.2.0.48 software.

### Preparation Examples: Ligand synthesis

Unless otherwise mentioned, all solvents and reagents were obtained from commercial sources and used as received. Anhydrous toluene, hexanes, tetrahydrofuran, and diethyl ether were purified *via* passage through activated alumina. Solvents used for experiments performed in a nitrogen-filled glovebox were further dried by storage over activated 3Å molecular sieves. Glassware for moisture-sensitive reactions was dried in an oven (120 °C) overnight prior to use. NMR spectra were recorded on a Bruker 400-MHz spectrometer. LC-MS analyses were performed using a Waters e2695 Separations Module coupled with a Waters 2424 ELS detector, a Waters 2998 PDA detector, and a Waters 3100 ESI mass detector. LC-MS separations were performed on an XBridge C18 3.5 µm 2.1x50 mm column using a 5:95 to 100:0 acetonitrile to water gradient with 0.1% formic acid as the ionizing agent. HRMS analyses were performed using an Agilent 1290 Infinity LC with a Zorbax Eclipse Plus C18 1.8µm 2.1x50 mm column, coupled with an Agilent 6230 TOF Mass Spectrometer with electrospray ionization. ¹H NMR data are reported as follows: chemical shift (multiplicity (br = broad, s = singlet, d = doublet, t = triplet, q = quartet, p = pentet, sex = sextet, sept = septet and m = multiplet), integration, and assignment). Chemical shifts for ¹H NMR data are reported in ppm in the deuterated solvent as references. ¹³C NMR data were determined with ¹H decoupling, and the chemical shifts are reported in ppm relative to tetramethylsilane (TMS, δ scale) using residual carbons in the deuterated solvent as references. Chemical shifts for ³¹P NMR data chemical shifts are reported in ppm (referenced with respect to H₃PO₄).

### Preparation Example 1: Ligand 1

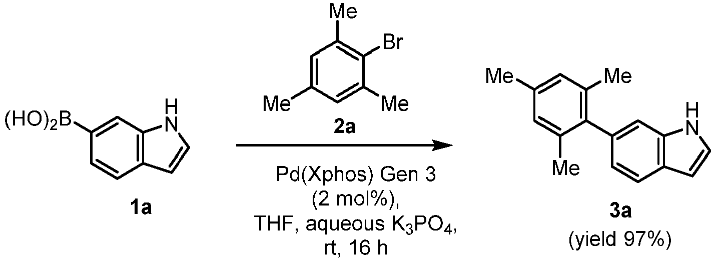

In a N₂-purged glove box, a 220 mL jar was charged with 2.0 g (12.45 mmol) of 1H-indole-6-boronic acid (**1a**), 0.2 g (0.24 mmol) of Precatalyst, and 85 mL of THF. The mixture was stirred for 5 minutes at room temperature. After 5 minutes, 2.34 g (11.75 mmol) of 2-bromo-1,3,5-trimethylbenzene **2a** was added to the solution, followed by approximately 70 mL of an aqueous solution of potassium phosphate tribasic (7.48 g (35.26 mmol) in 70 mL of H₂O). The reaction mixture was then stirred at room temperature overnight. The next day, the reaction was removed from the glove box. Diethyl ether (80 mL) was added to the reaction mixture and the mixture was then transferred to a separatory funnel. The organic layer was separated, and the aqueous layer was further washed with 80 mL of diethyl ether (2X). The organic layers were combined and dried over MgSO₄ and activated carbon. The ether solution was then filtered through a silica plug and the solvent was removed under reduced pressure to yield a white solid. The solid was washed with cold hexanes and dried under vacuum. Yield: 2.70 g (97%). ¹H NMR (400 MHz, C₆D₆) δ 7.68 (dq, *J* = 8.0, 0.7 Hz, 1H), 6.99 (ddd, *J* = 8.1, 1.4, 0.6 Hz, 1H), 6.97 - 6.91 (m, 3H), 6.72 (s, 1H), 6.59 (ddd, *J* = 3.1, 2.4, 0.6 Hz, 1H), 6.50 (ddd, *J* = 3.1, 2.1, 0.9 Hz, 1H), 2.25 (s, 3H), 2.16 (d, J = 0.7 Hz, 6H).¹³C{¹H} NMR (101 MHz, C₂D₆) δ 140.62, 136.58, 136.46, 136.25, 135.47, 128.54, 127.16, 124.18, 121.86, 121.13, 111.73, 102.68, 21.21. 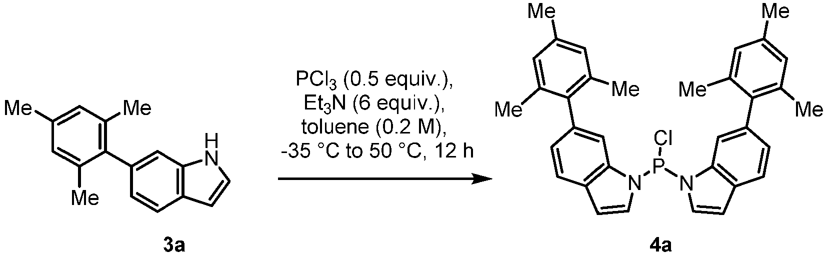 In a N₂-purged glove box, phosphorus trichloride (0.36 g, 2.65 mmol) and triethylamine (1.08 g, 10.62 mmol) were added to 75 mL of toluene in a 110 mL glass jar. The solution was placed in the glove box freezer (-35 °C) for 1 hour to chill. The indole **3a** (1.25 g, 5.31 mmol) was weighed into a 20 mL vial and dissolved in 10 mL of toluene. The indole solution was also chilled in the glove box freezer for 1 hour. The two solutions were removed from the freezer and the cold indole solution was added drop wise with stirring to the cold PCl₃/Net₃ solution. A copious amount of white precipitate formed during the addition. The reaction mixture was stirred overnight at room temperature, the reaction was monitored throughout. Once complete, the reaction was filtered through Celite to remove triethylammonium chloride and the pale-yellow filtrate was pumped down to dryness. The material **4b** was deemed sufficiently pure to proceed to the next step in the reaction. ³¹P{¹H} NMR (162 MHz, CDCl₃) δ 103.9 (s) ppm. 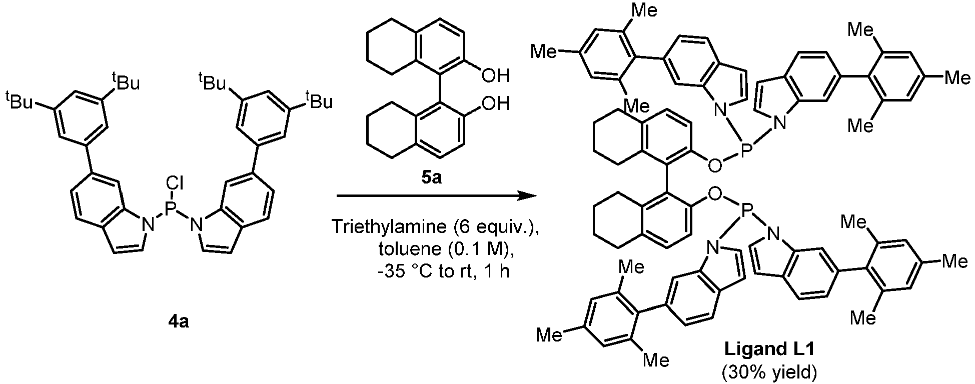 In a N₂-purged glove box, 5,5',6,6',7,7',8,8'-octahydro-1,1'-bi-2-naphthol (**5a**, 0.15 g, 0.51 mmol) and bis[6-(2,4,6-trimethyl-phenyl)-1H-indolyl]chlorophosphine (**4a**, 0.545 g, 1.01 mmol) were weighed into a 110 mL glass jar and dissolved in 25 mL of toluene to create a reddish yellow solution and kept in the freezer for an hour (-35 °C). Triethylamine (0.2 g) was added drop wise with stirring to the solution, resulting in immediate formation of a white precipitate. The reaction mixture was allowed to stir at room temperature and slowly warmed up to 50 °C overnight. The next morning, an aliquot of the reaction mixture was removed, filtered, and analyzed by ³¹P NMR spectroscopy. ³¹P NMR shows full conversion to the desired bisphosphoramidite product with some cyclic phosphoramidite and triphosphoramidite products. The solid was purified by neutral alumina chromatography to yield 200 mg (30% yield) of the product (Ligand **L1**). ¹H NMR (400 MHz, CDCl₃) δ 7.66 - 7.54 (m, 4H), 7.26 - 7.24 (m, 2H), 7.12 (s, 2H), 7.01 - 6.92 (m, 12H), 6.91 - 6.88 (m, 4H), 6.88 - 6.82 (m, 4H), 6.51 - 6.37 (m, 4H), 2.80 - 2.55 (m, 4H), 2.46 - 2.41 (m, 12H), 2.38 (m, 2H), 2.21 (m, 2H), 2.00 (s, 6H), 1.90 (s, 6H), 1.79 (s, 6H), 1.69 (s, 6H), 1.62 - 1.32 (m, 8H). ³¹P{¹H} NMR (162 MHz, C₆D₆) δ 107.18 (s) ppm.

### Preparation Example 2: Ligand 2

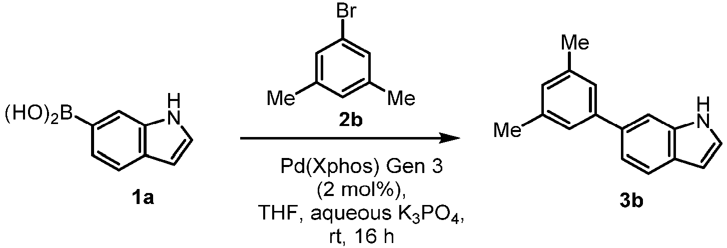

In a N₂-purged glove box, a 220-mL jar was charged with 2.06 g (12.8 mmol) of 1*H*-indole-6-boronic acid (**1a**), 0.22 g (0.25 mmol) of Precatalyst, and 80 mL of THF. The mixture was stirred for 5 minutes at room temperature. After 5 minutes, 3.54 mL (14.1 mmol) of 1-bromo-3,5-dimethylbenzene **2b** was added to the solution, followed by approximately 60 mL of an aqueous solution of potassium phosphate tribasic (7.92 g (37.3 mmol) in 60 mL of H₂O). The reaction mixture was then stirred at room temperature overnight. The next day, the reaction was removed from the glove box. Diethyl ether (80 mL) was added to the reaction mixture and the mixture was then transferred to a separatory funnel. The organic layer was separated, and the aqueous layer was further washed with 80 mL of diethyl ether (2X). The organic layers were combined and dried over MgSO₄ and activated carbon. The ether solution was then filtered through a basic alumina plug and the solvent was removed under reduced pressure to yield a white solid. The solid was washed with cold hexanes and dried under vacuum. Yield: 2.03 g (6.23 mmol, 49.4%). ¹H NMR (400 MHz, CDCl₃) δ 8.15 (br s, 1H, NH), 7.65 (dt, *J =* 8.2, 0.7 Hz, 1H, Ar-*H*), 7.57 (dt, *J* = 1.6, 0.8 Hz, 1H, Ar-*H*), 7.35 (dd, *J* = 8.2, 1.6 Hz, 1H, Ar-*H*), 7.27-7.24 (m, 2H, Ar-*H*), 7.21 (dd, *J* = 3.2, 2.4 Hz, 1H, Ar-*H*), 6.96-6.94 (m, 1H, Ar-*H*), 6.55 (ddd, *J* = 3.1, 2.0, 1.0, Hz, Ar-*H*), 2.37 (overlapping singlets, 6H, C*H*₃). ¹³C{¹H} NMR (101 MHz, CDCl₃) δ 142.5 (s), 138.4 (s), 136.5 (s), 136.0 (s), 128.5 (s), 127.3 (s), 125.6 (s), 124.9 (s), 121.0 (s), 120.1 (s), 109.7 (s), 102.8 (s), 21.7 (s) ppm. 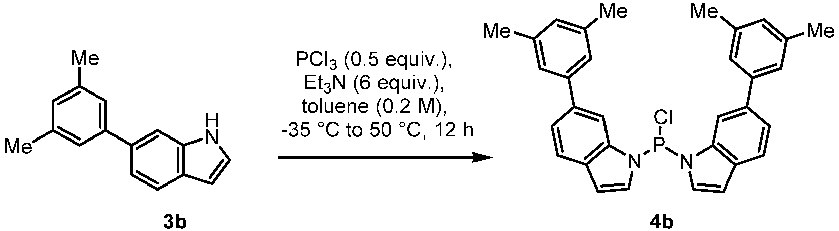 In a N₂-purged glove box, phosphorus trichloride (0.34 mL, 3.9 mmol) and triethylamine (2.5 mL, 18 mmol) were added to 70 mL of toluene in a 110-mL glass jar. The solution was placed in the glove box freezer (-35 °C) for 1 hour to chill. 6-(3,5-Dimethylphenyl)-1*H*-indole **3b** (1.75 g) was weighed into a 20 mL vial and dissolved in 15 mL of toluene. The indole solution was also chilled in the glove box freezer for 1 hour. The two solutions were removed from the freezer and the cold indole solution was added dropwise with stirring to the cold PCl₃/Net₃ solution. A copious amount of white precipitate formed during the addition. The reaction mixture was allowed to warm to room temperature and stir overnight. The next day, an aliquot of the reaction mixture was removed, filtered and analyzed by ³¹P NMR spectroscopy. The spectrum showed formation of the desired product at δ 103 ppm. The reaction mixture was filtered through Celite to remove triethylammonium chloride and the yellow filtrate was pumped down to dryness. Yield: 1.56 g (3.08 mmol, 78.0 %). Note: 87% purity by ³¹P NMR. The material **4b** was deemed sufficiently pure to proceed to the next step in the reaction. ³¹P(¹H} NMR (162 MHz, C₆D₆) δ 104.7 (s) ppm. 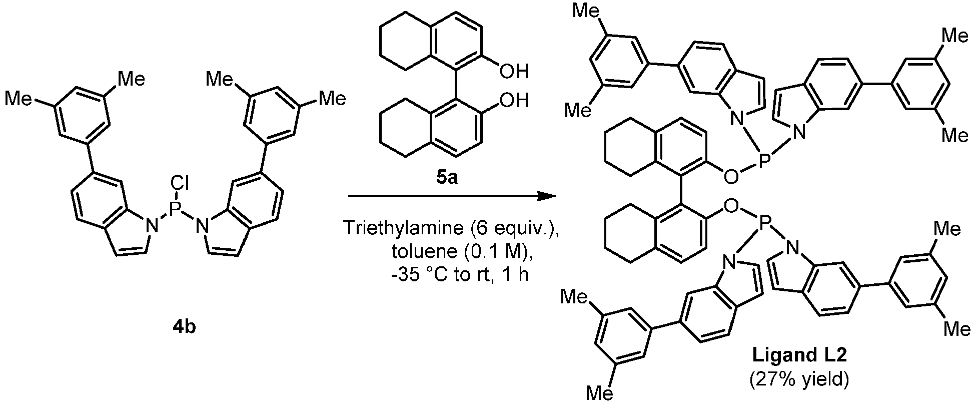 In a N₂-purged glove box, 5,5',6,6',7,7',8,8'-octahydro-1,1'-bi-2-naphthol (**5a**, 0.45 g, 1.5 mmol) and bis[6-(3,5-dimethylphenyl)-1*H*-indolyl]chlorophosphine (**4b**, 1.55 g, 3.06 mmol) were weighed into a 110 mL glass jar and dissolved in 80 mL of toluene to create a yellow solution. Triethylamine (1 mL, 7 mmol) was added drop wise with stirring to the solution, resulting in immediate formation of a white precipitate. The reaction mixture was allowed to stir at room temperature overnight. The next morning, an aliquot of the reaction mixture was removed, filtered, and analyzed by ³¹P NMR spectroscopy. The spectrum showed conversion to the desired product (**L2**, 105 ppm) in approximately 60% purity. The reaction mixture was filtered through Celite to remove triethylammonium chloride and the yellow filtrate was pumped down to dryness. The material was loaded on a 24 g Gold silica column and eluted with pure hexanes for 10 column volumes. Chloroform was then introduced to the eluent, gradually increasing to 20% chloroform (80% hexanes) over five column volumes. This solvent mixture (20/80) was used for another 10 column volumes. A total of 520 mg of pure material Ligand **L2** (white powder) was obtained. Overall yield: 0.520 g (0.421 mmol, 27.5%). ¹H NMR (400 MHz, C₆D₂) δ 7.88 (s, 4H, Ar-C*H*), 7.47 (t, *J* = 7.8 Hz, 4H, Ar-C*H*), 7.39 (dt, *J* = 8.2, 1.6 Hz, 4H, Ar-C*H*), 7.22 (dt, *J* = 3.0, 1.3 Hz, 2H, Ar-C*H*), 7.18-7.14 (m, 8H, Ar-C*H*), 7.08 (dt, *J* = 3.2, 1.5 Hz, 2H, Ar-*H*), 6.86 (d, *J* = 8.3 Hz, 2H, Ar-*H*), 6.81-6.76 (m, 4H, Ar-*H*), 6.60 (d, *J* = 8.4 Hz, 2H, Ar-*H*), 6.42 (ddd, *J* = 5.6, 3.4, 0.8 Hz, 4H, Ar-*H*), 2.50-2.28 (m, 6H, C*H*₂), 2.17 (s, 12H, C*H*₃), 2.16 (s, 12H, C*H*₃), 2.14-2.04 (m, 2H, C*H*₂), 1.42-1.19 (m, 8H, C*H*₂). ³¹P{¹H} NMR (162 MHz, C₆D₆) δ 107.8 (s) ppm.

### Preparation Example 3: Ligand 3

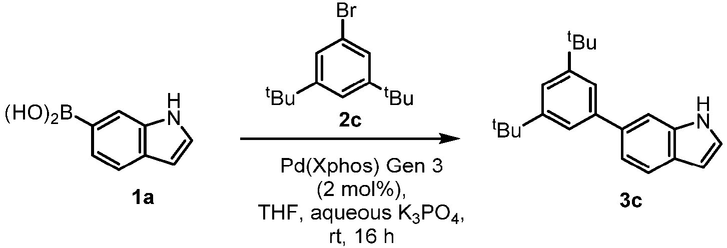

A 3-neck 2-L round bottom flask was charged with 25 g (155.3 mmol) of 1*H*-indole-6-boronic acid (**1a**), 2.7 g (3.1 mmol) of Precatalyst, and 500 mL of THF. The mixture was stirred at room temperature. After 5 minutes, 41.2 g (170.8 mmol) of 1-bromo-3,5-di-*tert*-butylbenzene (**2c**) was added to the solution, followed by approximately 600 mL of an aqueous solution of potassium phosphate tribasic (99 g, 466 mmol in 600 mL of H₂O). The reaction mixture was then stirred at room temperature overnight. Next morning, an aliquot was removed and analyzed by UP-LC which showed complete consumption of starting material. Diethyl ether (400 mL) was added, and the mixture was then transferred to a separatory funnel. The organic layer was separated, and the aqueous layer was further washed with 200 mL of diethyl ether (2X). The organic layers were combined and dried over anhydrous MgSO₄. The solvent was removed under reduced pressure to yield a brownish solid. Next, the material was dissolved in diethyl ether and treated with activated carbon for decolorization. The product was filtered through a Celite^{™} pad and concentrated down to yield brownish solid. The solid was purified by trituration as described below.

*Trituration Procedure:* Hexane (300 mL, ~10 ml/g crude material) was added to the crude material. The mixture was heated in a water bath (55 °C) for 15 mins to dissolve the non-polar impurities and the mixture was quickly filtered with a frit filter to collect the pure product. Following the first trituration, 23.0 g of pure product **3c** was isolated as white powder. The filtrate from the first trituration was concentrated on a rotary evaporator to leave a solid residue which was purified by silica gel column chromatography using hexane:ethyl acetate as eluent to yield a second batch of the product (**3c**, 7.5 g) as a white solid. ¹H NMR (400 MHz, Chloroform-*d*) δ 8.18 (s, 1H), 7.72 (d, *J* = 8.2 Hz, 1H), 7.62 (dt, *J* = 1.7, 0.8 Hz, 1H), 7.51 (d, *J* = 1.8 Hz, 2H), 7.45 (t, *J* = 1.8 Hz, 1H), 7.42 (dd, *J* = 8.2, 1.5 Hz, 1H), 7.25 - 7.21 (m, 1H), 6.60 (ddd, *J* = 3.1, 2.0, 1.0 Hz, 1H), 1.43 (s, 18H). ¹³C NMR (101 MHz, Chloroform-*d*) δ 150.95, 141.70, 136.91, 136.35, 127.02, 124.59, 122.00, 120.79, 120.72, 120.19, 109.73, 102.54, 34.97, 31.57. 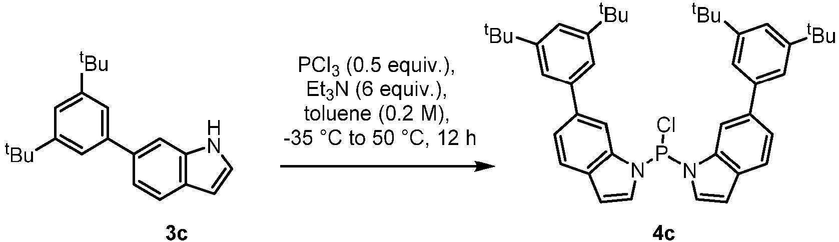 Triethylamine (34 mL, 245.5 mmol) in toluene (50 mL) was charged to a 110-mL glass jar and chilled inside the glove box refrigerator. PCl₃ (3.6 mL, 41.1 mmol) charged to a 1-L round-bottom flask along with 50 mL of toluene was placed in the glove box refrigerator at the same time. After an hour, both the solutions were taken out of the refrigerator and the triethylamine solution was slowly added to the PCl₃ solution. An additional 175 mL chilled toluene was added to the flask to keep the concentration at around 0.2 M (with respect to the PCl₃). The 6-(3,5-di-*tert*-butyl)-1H-indole (**3c**, 25.0 g, 81.8 mmol) was weighed into a 110 mL glass jar and slowly added portion-wise to the cold PCl₃/NEt₃ solution with vigorous stirring over a period of 0.5-1 h. A white precipitate started forming during the addition. The reaction mixture was allowed to warm to room temperature and was stirred for another 12 h. The reaction progress was monitored by ³¹P NMR. The next day, an aliquot of the reaction mixture was removed, filtered and analyzed by ³¹P NMR spectroscopy. The NMR shows formation of the desired mono-chlorophosphoramidite (**4c**, δ 108.17 ppm) as the major product along with a minor amount of tri(indolyl)phosphine (δ 70.95 ppm). The crude reaction mixture was passed through a Celite^{™} pad. The filtrate was transferred to a 1 L flask and concentrated down to a 200 mL volume using the glove box vacuum pump (vacuum trap cooled with liquid nitrogen). The crude reaction mixture was sampled for ³¹P NMR and then used directly in the next step. 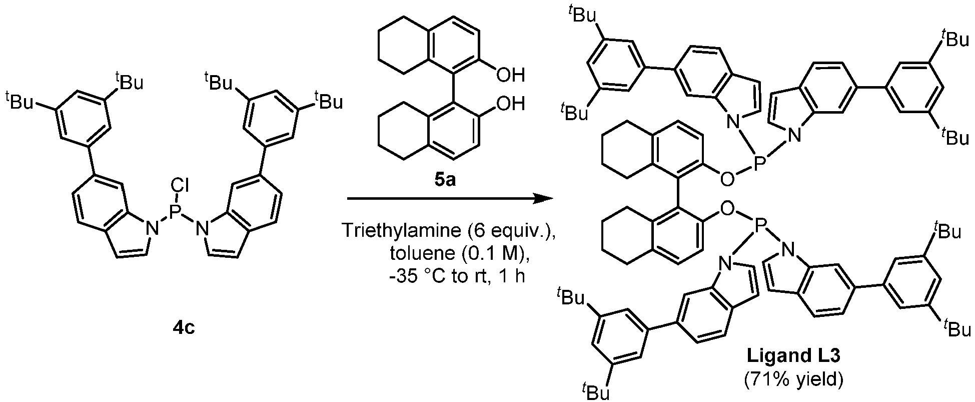 In a N₂-purged glove box, bis[6-(3,5-di-*tert*-butylphenyl)-1*H*-indolyl]chlorophosphine (**4c**, 27.75 g, 41.1 mmol) and toluene (200 mL) were charged to a 1-L round-bottom flask and stored in the glove box freezer for an hour (-35 °C). A solution of 5,5',6,6',7,7',8,8'-octahydro-1,1'-bi-2-naphthol (**5a**, 5.5 g, 18.7 mmol) in 50 mL of toluene was added slowly. Triethylamine (15.5 mL, 112 mmol) was then added dropwise with stirring to the solution, resulting in immediate formation of a white precipitate; the reaction mixture later became cloudy and yellow. The mixture was allowed to stir at room temperature. After an hour, an aliquot of the reaction mixture was removed, filtered, and analyzed by ³¹P NMR which showed full conversion to the bis-phosphoramidite product (Ligand **L3,** δ 112.73 ppm) along with some cyclic phosphoramidite (<2%, δ 130.53 ppm) and tri(indolyl)phosphine (<6%, δ 70.96 ppm) byproducts. The reaction mixture was taken out from the glovebox and passed through a Celite^{™} pad to remove all the inorganic salts; the filtrate volatiles were removed on a rotary evaporator to leave an orange foamy solid. This crude material was divided into two batches (each batch approximately ~10-12 g crude material) for silica gel chromatography. Two 330 g columns were used to purify the material using hexane-DCM as eluent. After purification of the two batches, the total isolated product was around 20 g of a white powder material for a 71% yield having 98% purity. ¹H NMR (400 MHz, Chloroform-d) δ 7.54 (dd, *J* = 15.6, 8.3 Hz, 2H), 7.38 - 7.27 (m, 6H), 7.20 (d, *J* = 1.8 Hz, 2H), 7.15 (d, *J* = 1.8 Hz, 2H), 7.13 - 7.08 (m, 1H), 6.98 - 6.91 (m, 1H), 6.74 (d, *J* = 1.5 Hz, 2H), 6.56 (d, *J* = 3.4 Hz, 1H), 6.42 (d, *J* = 3.4 Hz, 1H), 2.49 (dt, *J* = 16.3, 6.3 Hz, 1H), 2.28 (dt, *J* = 16.2, 6.3 Hz, 1H), 2.15 (dt, *J* = 17.2, 6.4 Hz, 1H), 2.03 (dt, *J* = 17.4, 6.2 Hz, 1H), 1.33 (d, *J* = 8.0 Hz, 39H), 1.28 - 1.14 (m, 1H). ³¹P{¹H} NMR (162 MHz, Chloroform-*d*) δ 110.59 ppm.

### Preparation Example 4: Ligand 4

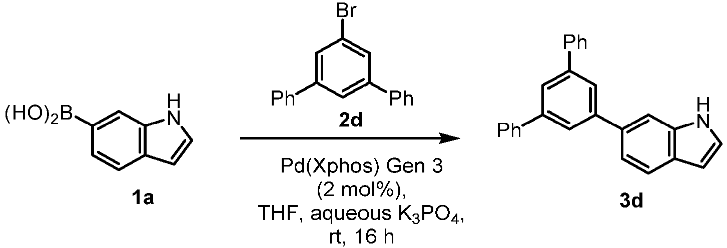

A 3-neck 250 mL round bottom flask was charged with 2.0 g (12.4 mmol) of 1*H*-indole-6-boronic acid (**1a**), 210 mg (0.25 mmol) of Precatalyst, and 80 mL of THF. The mixture was stirred for 5 minutes at room temperature. After 5 minutes, 4.2 g (13.7 mmol) of 1-bromo-3,5-di-phenylbenzene (**2d**) was added to the solution, followed by approximately 50 mL of an aqueous solution of potassium phosphate tribasic [7.9 g (38 mmol) in 25 mL of H₂O]. The reaction mixture was then stirred at room temperature overnight. The next day, the reaction was monitored by LC-MS. Once all starting material was consumed, diethyl ether (80 mL) was added, and the reaction mixture was transferred to a separatory funnel. The organic layer was separated, and the aqueous layer was further washed with 80 mL of diethyl ether (2X). The organic layers were combined and dried over MgSO₄ and activated carbon. The solvent was removed under reduced pressure to yield a brownish solid which was purified by silica gel chromatography (5%-15% ethyl acetate in hexane) to yield 1.98 g (46% yield) of the product. ¹H NMR (400 MHz, Chloroform-d δ 8.22 (s, 1H), 7.87 (d, J = 1.7 Hz, 1H), 7.78 (m, 2H), 7.77 - 7.69 (m, 6H), 7.56 - 7.45 (m, 5H), 7.45 - 7.36 (m, 2H), 7.26 (m, 1H), 6.62 (t, J = 2.6 Hz, 1H). ¹³C NMR (101 MHz, Chloroform-d) δ 143.38, 142.24, 141.34, 136.37, 135.42, 128.81, 127.45, 127.37, 125.41, 124.94, 124.57, 121.01, 119.91, 109.73, 102.63. 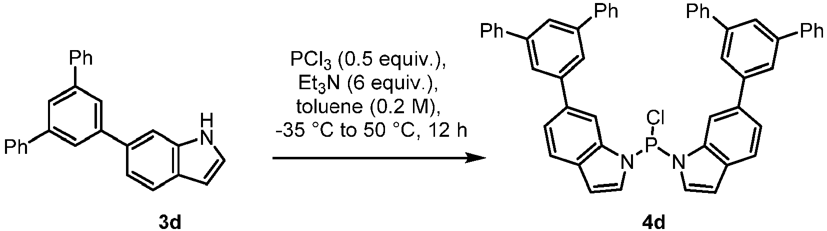 In a N₂-purged glove box, phosphorus trichloride (0.4 mL, 4.6 mmol) and triethylamine (6.9 mL) were added to 50 mL of toluene in a 110 mL glass jar. The solution was placed in the glove box freezer (-35 °C) for 1 hour to chill. The 6-(3,5-di-tert-butyl)-1*H*-indole (**3d**, 3.0 g, 9.8 mmol) was weighed into a 50 mL glass jar and dissolved in 25 mL of toluene. The PCl₃/NEt₃ solution was removed from the freezer and the indole solution was added drop wise (by an additional funnel) with stirring to the cold PCl₃/NEt₃ solution. A copious amount of white precipitate formed during the addition. The reaction mixture was allowed to warm to room temperature and stirred overnight. The next day, an aliquot of the reaction mixture was removed, filtered and analyzed by ³¹P NMR spectroscopy. The NMR spectrum showed formation of the desired mono-chlorophosphoramidite (δ 105.61 ppm) as the major product, along with the bis-chloro compound as the minor product (δ 145.42 ppm). After 12 h, 0.2 equivalent of indole compound was slowly added and after an hour, the reaction was further analyzed by ³¹P NMR spectroscopy which indicated complete conversion, primarily to the desired mono-chlorophosphoramidite (δ 105.61 ppm) with ~4-5% bis-chloro compound as a minor product (δ 145.42 ppm). The crude mixture was filtered through a plug of Celite to remove the inorganic salts and the filtrate was further evaporated using glove box vacuum pump (keeping liquid nitrogen in the trap) leaving 3.11 g of the desired mono-chlorophosphoramidite as a yellowish powder (>90% yield) and then used directly in the next step. 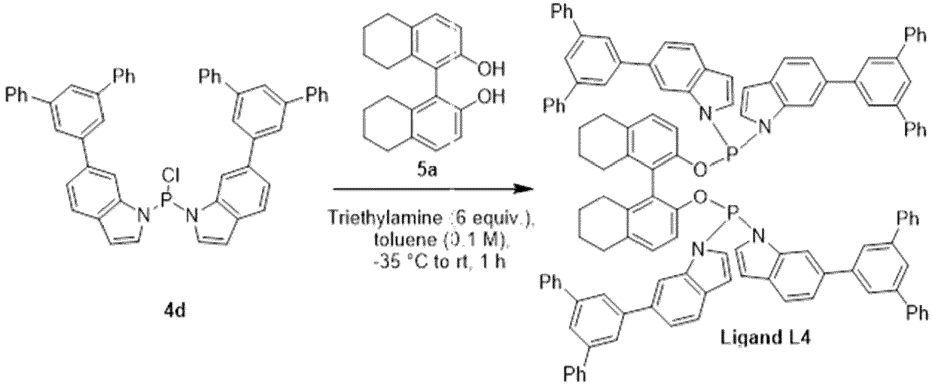 In a N₂-purged glove box, 5,5',6,6',7,7',8,8'-octahydro-1,1'-bi-2-naphthol (**5a**, 11, 1.2 g, 4.1 mmol) and bis[6-(3,5-di-phenyl-phenyl)-1H-indolyl]chlorophosphine (**4d**, 7.25 g, 8.6 mmol) were weighed into a 220 mL glass jar and dissolved in 80 mL of toluene to create a reddish yellow solution and kept in the freezer for an hour (-35 °C). Triethylamine (3.4 mL, 24.5 mmol) was added dropwise with stirring to the solution, resulting in immediate formation of a white precipitate. The reaction mixture was allowed to stir at room temperature and slowly warmed up to 50 °C overnight. The next morning, an aliquot of the reaction mixture was removed, filtered, and analyzed by ³¹P NMR spectroscopy; full conversion to products (δ 111.01 ppm) with some cyclic phosphoramidite product (δ 128.22 ppm) was indicated. Two step purification was required to remove all the attendant by-products. In a first step, a 330 g gold silica gel column (5-30 % dichloromethane in hexane) was utilized to purify the bis-product with the rest of the side products. In a second step, a 160 g neutral alumina column was utilized to further purify the bisphosphoramidite product from the indole side product (5-20 % dichloromethane in hexane). After column purification, 1.9 g of pure bisphosphoramidite product (Ligand **L4**) was obtained with 24 % yield. ¹H NMR (400 MHz, Chloroform-d) δ 7.70 (m, 2H), 7.65 - 7.55 (m, 9H), 7.51 - 7.41 (m, 14H), 7.37 (m, 6H), 7.34 - 7.26 (m, 1H), 7.06 (m, 1H), 6.99 - 6.93 (m, 1H), 6.77 (d, J = 8.3 Hz, 1H), 6.66 (d, J = 8.4 Hz, 1H), 6.52 (d, J = 3.4 Hz, 1H), 6.37 (d, J = 3.4 Hz, 1H), 2.47 (m, 1H), 2.22 (m, 2H), 2.03 (m, 1H), 1.40 (m, 3H), 1.26 (m, 3H). ³¹P{¹H} NMR (162 MHz, Chloroform-d) δ 110.53 ppm.

### Preparation Example 5: Ligand 5

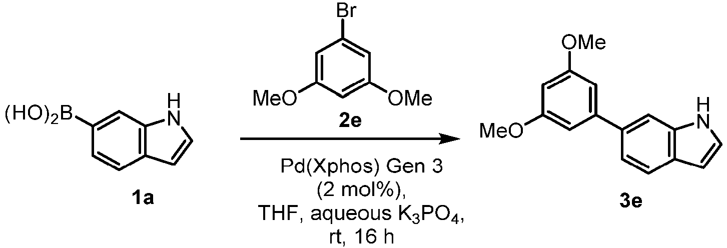

A 3-neck2-L round bottom flask was charged with 2 g (12.4 mmol) of 1*H*-indole-6-boronic acid (**1a**), 0.2 g (0.25 mmol) of Precatalyst, and 80 mL of THF. The mixture was stirred at room temperature. After 5 minutes, 3.0 g (13.7 mmol) of 1-bromo-3,5-di-methoxy-benzene (**2e**) was added to the solution, followed by approximately 50 mL of an aqueous solution of potassium phosphate tribasic (7.9 g, 38 mmol in 25 mL of H₂O). The reaction mixture was then stirred at room temperature overnight. Next morning, an aliquot was removed and analyzed by LC-MS which showed complete consumption of starting material. Diethyl ether (80 mL) was added, and the mixture was then transferred to a separatory funnel. The organic layer was separated, and the aqueous layer was further washed with 50 mL of diethyl ether (2X). The organic layers were combined and dried over anhydrous MgSO₄. The solvent was removed under reduced pressure to yield a brownish solid. The solid was purified by silica gel column chromatography using hexane : ethyl acetate as eluent to yield 2.1 g of the product (**3e**, 66% yield). ¹H NMR (400 MHz, CDCl₃) δ 8.21 (s, 1H), 7.70 (d, *J* = 8.2 Hz, 1H), 7.63 - 7.56 (m, 1H), 7.39 (dd, *J =* 8.2, 1.6 Hz, 1H), 7.24 - 7.18 (m, 1H), 6.82 (d, *J* = 2.2 Hz, 2H), 6.73 - 6.53 (m, 1H), 6.48 (t, *J* = 2.3 Hz, 1H), 3.87 (s, 6H). ¹³C NMR (101 MHz, CDCl₃) δ 160.97, 144.61, 136.23, 135.49, 127.46, 124.92, 120.80, 119.73, 109.59, 105.71, 102.55, 98.73, 55.39. 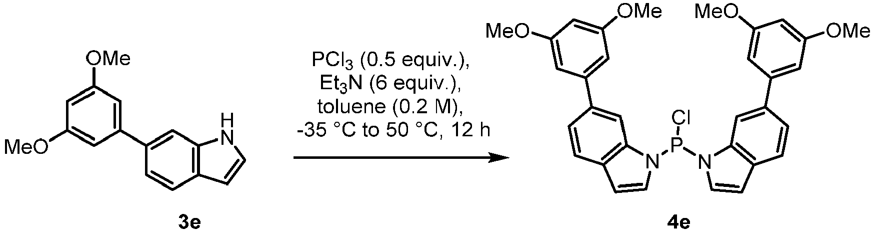 In a N₂-purged glove box, phosphorus trichloride (0.3 mL, 3.2 mmol) and triethylamine (2.7 mL) were added to 20 mL of toluene in a 110-mL glass jar. The solution was placed in the glove box freezer (-35 °C) for 1 hour to chill. The 6-(3,5-di-methoxy-phenyl)-1*H*-indole (**3e**, 1.65 g, 6.5 mmol) was weighed into a 50-mL glass jar and dissolved in 10 mL of toluene. The PCl₃/NEt₃ solution was removed from the freezer and the indole solution was added drop wise (by an additional funnel) with stirring to the cold PCl₃/NEt₃ solution. A copious amount of white precipitate formed during the addition. The reaction mixture was allowed to warm to room temperature and stirred overnight. The next day, an aliquot of the reaction mixture was removed, filtered and analyzed by ³¹P NMR spectroscopy. The NMR spectrum showed formation of the desired mono-chlorophosphoramidite (d 102.64 ppm) as the major product. The crude mixture was filtered through a plug of Celite to remove the inorganic salts and the filtrate was further evaporated using glove box vacuum pump (keeping liquid nitrogen in the trap) to obtain the desired mono-chlorophosphoramidite as a yellowish powder (>90% yield). The compound was directly used on next step without further purification. 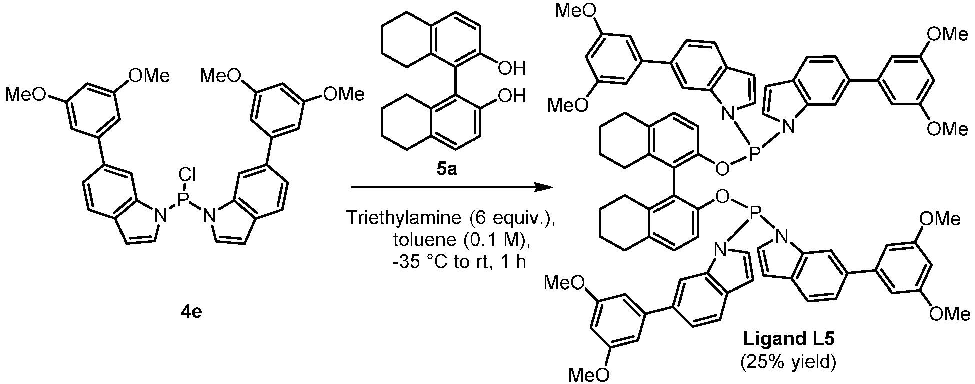 In a N₂-purged glove box, 5,5',6,6',7,7',8,8'-octahydro-1,1'-bi-2-naphthol (**5a**, 0.44 g, 1.48 mmol) was dissolved in 5 mL of toluene and slowly added to the chilled solution of bis[6-(3,5-di-methoxyphenyl)-1*H*-indolyl]chlorophosphine (**4e**, 3 mmol in 5 mL toluene) in a 110 mL glass jar. Triethylamine (2.5 mL, 17 mmol) was added dropwise with stirring to the solution, resulting in immediate formation of a yellow precipitate. The reaction mixture was allowed to stir at room temperature and slowly warmed up to rt overnight. The next morning, an aliquot of the reaction mixture was removed, filtered, and analyzed by ³¹P NMR spectroscopy; full conversion to the product, bisphosphoramidite (δ 109.00 ppm) with some cyclic phosphoramidite (δ 129.16 ppm) was indicated. The reaction mixture was passed over Celite pad, washed with toluene and the filtrate was concentrated down to reddish oil. Silica gel purification was required to remove all of the attendant by-products. A 330 g gold silica gel column (50-100% dichloromethane in hexane) was utilized to purify the desired product with the rest of the side products, After column purification, 0. 5 g of pure bisphosphoramidite product (Ligand **L5**) was obtained with 25 % yield.
¹H NMR (400 MHz, Chloroform-d) δ 7.52 (d, *J* = 8.3 Hz, 1H), 7.47 (d, *J* = 8.2 Hz, 1H), 7.42 (d, *J = 6.9* Hz, 2H), 7.29 (ddd, *J* = 8.2, 4.6, 1.5 Hz, 2H), 7.08 - 7.06 (m, 1H), 7.03 - 6.94 (m, 1H), 6.81 - 6.74 (m, 2H), 6.54 (dd, *J =* 10.4, 2.2 Hz, 4H), 6.50 (d, *J =* 3.5 Hz, 1H), 6.41 - 6.40 (m, 2H), 6.38 (d, J = 3.5 Hz, 1H), 3.76 (s, 6H), 3.75 (s, 6H), 2.57 (dt, J = 16.4, 6.3 Hz, 1H), 2.39 (dt, J = 16.4, 6.1 Hz, 1H), 2.26 - 1.99 (m, 2H), 1.65 - 1.19 (m, 4H). ³¹P{¹H} NMR (162 MHz, Chloroform-d) δ 107.72 ppm.

### Preparation Example 6: Ligand 6

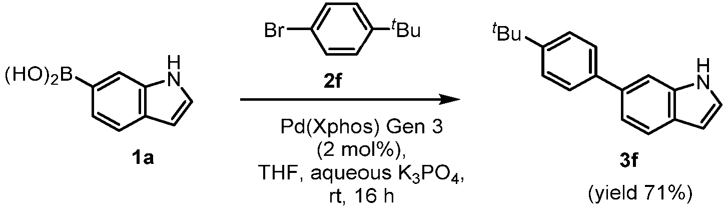

A 3-neck 250 mL round bottom flask was charged with 4 g (24.849 mmol) of 1H-indole-6-boronic acid (**1a**), 420 mg (0.497 mmol) of Precatalyst, and 160 mL of THF. The mixture was stirred for 5 minutes at room temperature. After 5 minutes, 5.825 (27.334 mmol) of 1-bromo-4-*tert*-butylbenzene (**2f**) was added to the solution, followed by approximately 50 mL of an aqueous solution of potassium phosphate tribasic (16 g, 38 mmol) in 25 mL of H₂O). The reaction mixture was then stirred at room temperature overnight. The next day, the reaction was monitored by LC-MS. Diethyl ether (80 mL) was added to the reaction mixture and the mixture was then transferred to a separatory funnel. The organic layer was separated, and the aqueous layer was further washed with 80 mL of diethyl ether (2X). The organic layers were combined and dried over MgSO₄. The solvent was removed under reduced pressure to yield a brownish solid. The solid was purified by silica gel chromatography to yield 4.2g (65% yield) of the product (**3f**). ¹H NMR (400 MHz, Chloroform-d) δ 8.12 (s, 1H), 7.71 (d, *J* = 8.1 Hz, 1H), 7.66 - 7.57 (m, 3H), 7.50 (d, *J* = 7.9 Hz, 2H), 7.42 (d, *J* = 8.2 Hz, 1H), 7.21 (s, 1H), 6.59 (s, 1H), 1.41 (s, 9H). ¹³C NMR (101 MHz, CDCl₃) δ 149.53, 139.36, 136.38, 135.42, 127.02, 126.97, 125.63, 124.63, 120.80, 119.75, 109.32, 102.49, 34.47, 31.40. 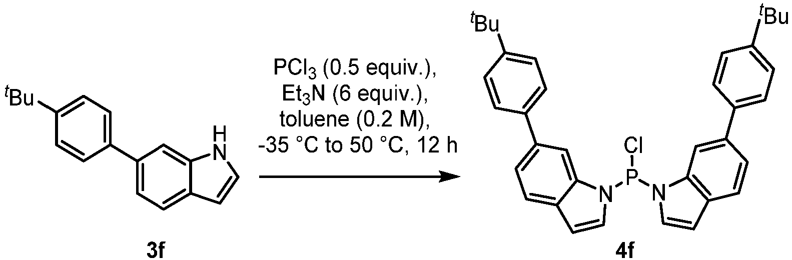 In a N₂-purged glove box, phosphorus trichloride (0.52 mL, 5.9 mmol) and triethylamine (4.9 mL) were added to 70 mL of toluene in a 110-mL glass jar. The solution was placed in the glove box freezer (-35 °C) for 1 hour to chill. The 6-(4-*tert*-butyl-phenyl)-1H-indole (**3f**, 4.1 g, 11.87 mmol) was weighed into a 50 mL glass jar and dissolved in 10 mL of toluene. The PCl₃/NEt₃ solution was removed from the freezer and the indole solution was added drop wise (by an additional funnel) with stirring to the cold PCl₃/NEt₃ solution. A copious amount of white precipitate formed during the addition. The reaction mixture was allowed to warm to room temperature and stirred overnight. The next day, an aliquot of the reaction mixture was removed, filtered and analyzed by ³¹P NMR spectroscopy. The NMR spectrum showed formation of the desired mono-chlorophosphoramidite (δ 100.99 ppm) as the major product. The crude mixture was filtered through a plug of Celite to remove the inorganic salts and the filtrate was further evaporated using glove box vacuum pump (keeping liquid nitrogen in the trap) to obtain the desired mono-chlorophosphoramidite as a brownish powder. The compound was directly used on next step without further purification. 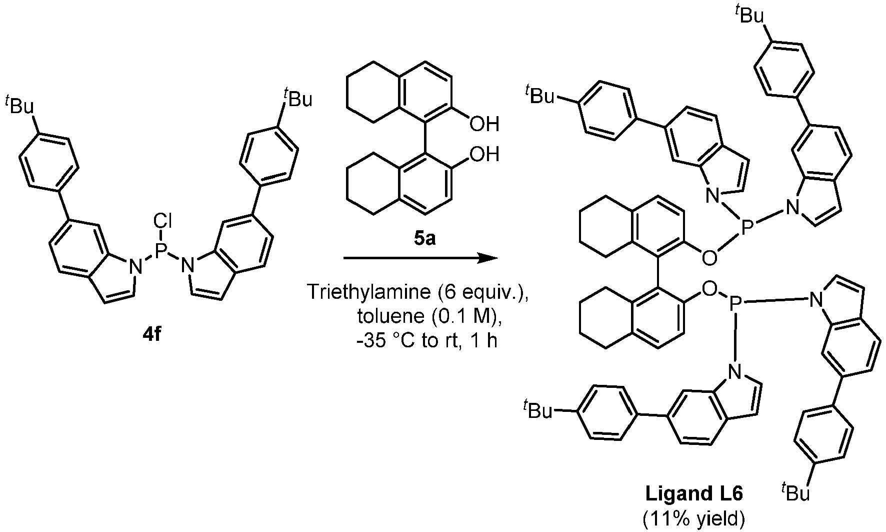 In a N₂-purged glove box, 5,5',6,6',7,7',8,8'-octahydro-1,1'-bi-2-naphthol (**5a**, 0.5 g, 1.7 mmol) and bis[6-(4-tert-butylphenyl)-1H-indolyl]chlorophosphine (1.3 g, 2.335 mmol) were weighed into a 110-mL glass jar and dissolved in 34 mL of toluene to create a reddish yellow solution and kept in the freezer for an hour (-35 °C). Triethylamine (1.4 mL) was added drop wise with stirring to the solution, resulting in immediate formation of a white precipitate. The reaction mixture was allowed to stir at room temperature and slowly warmed up to 50 °C overnight. The next morning, an aliquot of the reaction mixture was removed, filtered, and analyzed by ³¹P NMR spectroscopy. ³¹P NMR shows full conversion to the desired bisphosphoramidite product with some cyclic phosphoramidite and triphosphoramidite products. The solid was purified by silica gel chromatography to yield 240 mg (11% yield) of the product (Ligand **L6**). ¹H NMR (400 MHz, CDCl₃) δ 7.70 - 7.45 (m, 6H), 7.44 - 7.32 (m, 8H), 7.10 - 6.99 (m, 2H), 6.77 - 6.68 (m, 2H), 6.48 (d, *J* = 3.5 Hz, 1H), 6.41 (d, *J* = 3.4 Hz, 1H), 2.55 (dt, *J* = 16.7, 6.2 Hz, 1H), 2.42 - 2.31 (m, 1H), 2.29 - 2.16 (m, 1H), 2.07 (dt, *J* = 17.5, 6.3 Hz, 1H), 1.34 (m, 22H). ³¹P{¹H} NMR (162 MHz, Chloroform-d) δ 104.97 ppm.

### Preparation Example 7: Ligand 7

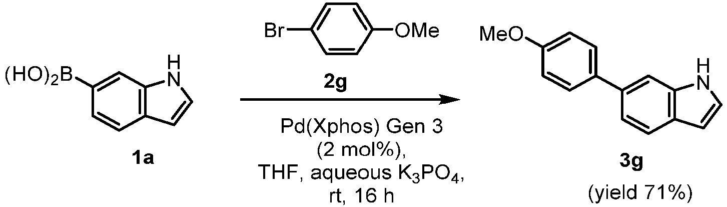

A 3-neck 250 mL round bottom flask was charged with 2 g (12.4 mmol) of 1*H*-indole-6-boronic acid (**1a**), 0.2 g (0.25 mmol) of Precatalyst, and 80 mL of THF. The mixture was stirred for 5 minutes at room temperature. After 5 minutes, 2.5 g (13.7 mmol) of 4-bromoanisole (**2g**) was added to the solution, followed by approximately 50 mL of an aqueous solution of potassium phosphate tribasic (7.9 g, 38mmol) in 25 mL of H₂O). The reaction mixture was then stirred at room temperature overnight. The next day, the reaction was monitored by LC-MS. Diethyl ether (80 mL) was added to the reaction mixture and the mixture was then transferred to a separatory funnel. The organic layer was separated, and the aqueous layer was further washed with 80 mL of diethyl ether (2X). The organic layers were combined and dried over MgSO₄ and activated carbon. The solvent was removed under reduced pressure to yield a brownish solid. The solid was purified by silica gel chromatography to yield 2.0 g (70%) of the product (**3g**). ¹H NMR (400 MHz, Chloroform-*d*) δ 8.15 (s, 1H), 7.69 (d, *J* = 8.2 Hz, 1H), 7.63 - 7.55 (m, 2H), 7.55 - 7.51 (m, 1H), 7.36 (dd, *J* = 8.2, 1.6 Hz, 1H), 7.24 - 7.18 (m, 1H), 7.04 - 6.96 (m, 2H), 6.58 (ddd, *J* = 3.2, 2.1, 1.0 Hz, 1H), 3.87 (s, 3H). ¹³C NMR (101 MHz, Chloroform-*d*) δ 158.69, 136.43, 135.26, 134.93, 128.32, 126.79, 124.54, 120.82, 119.57, 114.16, 109.04, 102.51, 55.35. 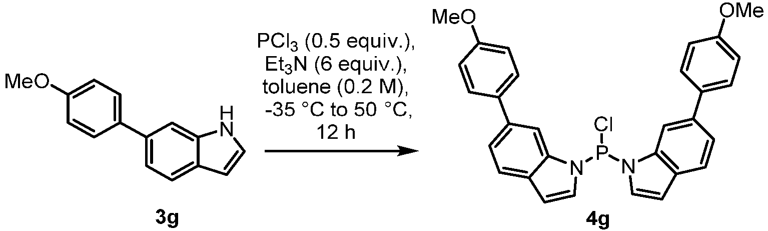 In a N₂-purged glove box, phosphorus trichloride (0.3 mL, 3.2 mmol) and triethylamine (2.7 mL) were added to 20 mL of toluene in a 110 mL glass jar. The solution was placed in the glove box freezer (-35 °C) for 1 hour to chill. The 6-(4-methoxyphenyl)-1*H*-indole (**3g**, 1.45 g, 6.5 mmol) was weighed into a 50 mL glass jar and dissolved in 10 mL of toluene. The PCl₃/NEt₃ solution was removed from the freezer and the indole solution was added drop wise (by an additional funnel) with stirring to the cold PCl₃/NEt₃ solution. A copious amount of white precipitate formed during the addition. The reaction mixture was allowed to warm to room temperature and stirred overnight. The next day, an aliquot of the reaction mixture was removed, filtered and analyzed by ³¹P NMR spectroscopy. The NMR spectrum showed formation of the desired mono-chlorophosphoramidite (d 103.29 ppm) as the major product. The crude mixture was filtered through a plug of Celite to remove the inorganic salts and the filtrate was further evaporated using glove box vacuum pump (keeping liquid nitrogen in the trap) leaving 3.1 g of the desired mono-chlorophosphoramidite as a yellowish powder (>90% yield). The compound was directly used on next step without further purification. 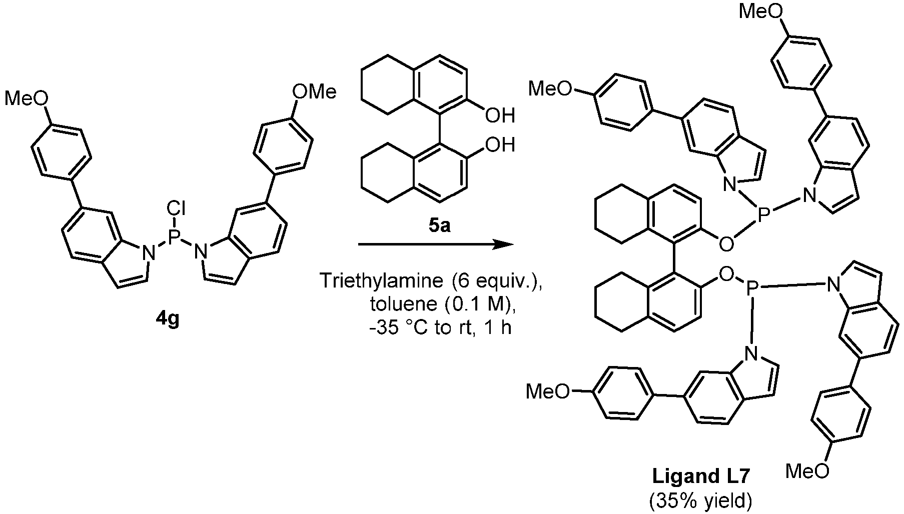 In a N₂-purged glove box, 5,5',6,6',7,7',8,8'-octahydro-1,1'-bi-2-naphthol (**5a,** 0.4 g, 1.4 mmol ) and bis[6-(4-methoxyphenyl)-1*H*-indolyl]chlorophosphine (**4g,** 1.5 g, 2.9 mmol) were weighed into a 110 mL glass jar and dissolved in 10 mL of toluene to create a reddish yellow solution and kept in the freezer for an hour (-35 °C). Triethylamine (1.2 mL) was added dropwise with stirring to the solution, resulting in immediate formation of a white precipitate. The reaction mixture was allowed to stir at room temperature and slowly warmed up to 50 °C overnight. The next morning, an aliquot of the reaction mixture was removed, filtered, and analyzed by ³¹P NMR spectroscopy; full conversion to bisphosphoramidite product (δ 104.37 ppm). Two step purification was required to remove all of the attendant by-products. In a first step, a 330 g gold silica gel column (5 - 20 % dichloromethane in hexane) was utilized to purify the bis product with the rest of the side products. In a second step, a 160 g neutral alumina column was utilized to further purify the bisphosphoramidite product from the indole side product (5 - 20 % dichloromethane in hexane). After column purification, 0.6 g of pure bisphosphoramidite product (Ligand **L7**) was obtained with 35 % yield. ¹H NMR (400 MHz, Chloroform-*d*) δ 7.62 (d, *J* = 6.4 Hz, 4H), 7.52 (d, *J* = 8.2 Hz, 2H), 7.47 (d, *J* = 8.2 Hz, 2H), 7.39 - 7.26 (m, 12H), 7.19 - 7.13 (m, 2H), 7.06 (dt, *J* = 3.2, 1.5 Hz, 2H), 6.85 - 6.74 (m, 10H), 6.71 (d, *J* = 8.4 Hz, 2H), 6.48 (dd, *J* = 3.4, 0.8 Hz, 2H), 6.42 - 6.36 (m, 2H), 3.78 (s, 6H), 3.77 (s, 6H), 2.55 (dt, *J* = 16.7, 6.3 Hz, 2H), 2.35 (dt, *J* = 16.6, 6.1 Hz, 2H), 2.22 (dt, *J* = 17.8, 6.4 Hz, 2H), 2.08 (dt, *J* = 17.5, 6.2 Hz, 2H), 1.60 - 1.40 (m, 4H), 1.34 (tq, J = 8.7, 2.8 Hz, 4H). ³¹P{¹H} NMR (162 MHz, Chloroform-*d*) δ 104.37 ppm.

### Preparation Example 8: Ligand 8

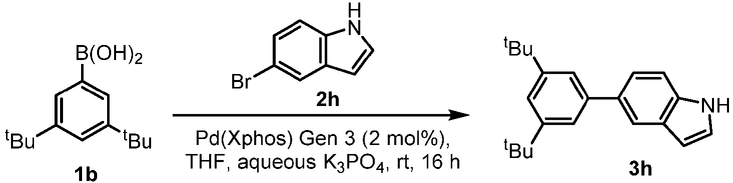

A three-neck 2 L round bottom flask was charged with one equivalent of 3,5-di-tert-butyl-phenylboronic acid (**1b**), 0.02 equivalent of Precatalyst, followed by addition of THF to make the final concentration approximately 0.3 M. The mixture was stirred at room temperature for 5 minutes. After that, 1.1 equivalent of bromo-indole **2h** was added to the solution, followed by a 1 M aqueous solution of potassium phosphate tribasic (3 equivalents of K₃PO₄). The reaction mixture was then stirred at room temperature overnight. The next morning, an aliquot was removed and analyzed by LC-MS. Once the reaction showed complete consumption of starting material, diethyl ether was added, and the mixture was then transferred to a separatory funnel. The organic layer was separated, and the aqueous layer was further washed with diethyl ether. The organic layers were combined and dried over anhydrous MgSO₄. The solvent was removed under reduced pressure to yield the crude product. Next, the material was dissolved in diethyl ether and treated with activated carbon for decolorization. The product was filtered through a Celite^{™} pad and concentrated before purifying through silica gel column chromatography (20% ethyl acetate in hexane) to isolate the pure material (**3h**, 69% yield). ¹H NMR (400 MHz, CDCl₃) δ 8.17 (s, 1H), 7.91 - 7.85 (m, 1H), 7.51 (d, *J =* 1.8 Hz, 2H), 7.49 - 7.45 (m, 2H), 7.43 (t, *J* = 1.8 Hz, 1H), 7.24 (t, *J* = 2.8 Hz, 1H), 6.67 - 6.60 (m, 1H), 1.42 (s, 18H). ¹³C NMR (101 MHz, CDCl₃) δ 150.87, 141.89, 135.18, 134.70, 128.33, 124.72, 122.29, 122.02, 120.49, 119.38, 111.04, 102.95, 34.96, 31.57. 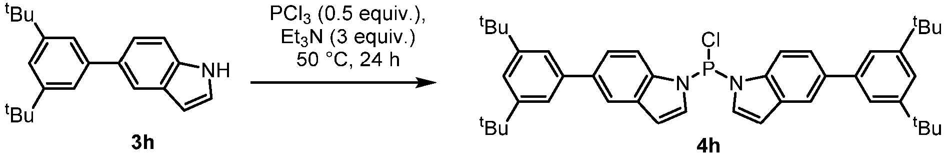 In a nitrogen purged glovebox, triethylamine (6 equivalents) was added in toluene to a 110 mL glass jar and placed inside the glove box refrigerator. PCl₃ (1 equivalent) was added in toluene to a 110 mL glass jar and placed in the glove box refrigerator at the same time. After an hour, both the solutions were taken out of the refrigerator and the triethylamine solution was slowly added to the PCl₃ solution. An additional amount of toluene was added to the flask to keep the final concentration at around 0.2 M (with respect to the PCl₃). The substituted indole **3h** (2 equivalents) was weighed into a 110 mL glass jar, dissolved in a minimum amount of toluene and slowly added to the cold PCl₃/NEt₃ solution with vigorous stirring over a period of 15-30 min. A white precipitate started forming during the addition. The reaction mixture was allowed to warm to room temperature and was stirred for another 12 h. The reaction progress was monitored by ³¹P NMR. The next day, an aliquot of the reaction mixture was removed, filtered and analyzed by ³¹P NMR to confirm formation of the desired bis(indolyl)chlorophosphine **4h** as the major product. The crude reaction mixture was passed through a Celite^{™} pad to remove the inorganic salts, and the filtrate was transferred to a 220 mL glass jar and concentrated to approximately 1/4th of its original volume using the glove box vacuum pump (vacuum trap cooled with liquid nitrogen). The crude reaction mixture was sampled for ³¹P NMR and used directly in the next step. 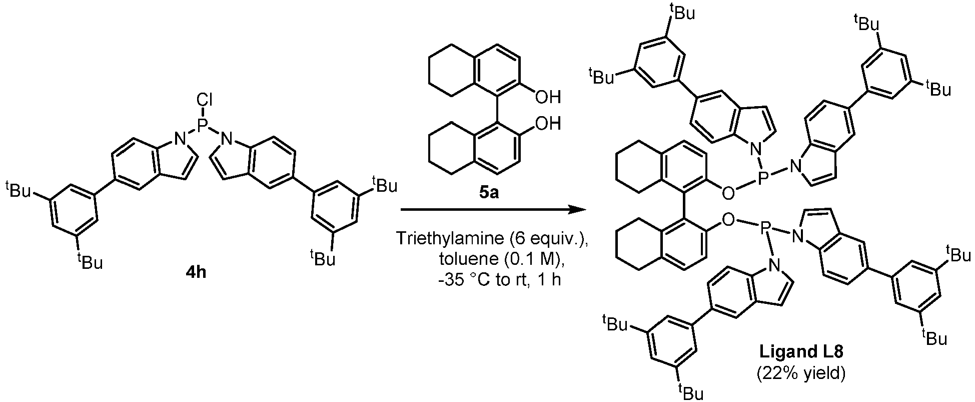 In a N₂-purged glove box, a 110 mL glass jar was charged with a toluene solution of bis(indolyl)chlorophosphine **4h** (2.5 equivalents) and was stored in the glove box freezer for an hour (-35 °C). 5,5',6,6',7,7',8,8'-octahydro-1,1'-bi-2-naphthol (**5a,** 1 equivalence) was dissolved in toluene in a vial and added slowly to the solution of bis(indolyl)chlorophosphine at -35 °C. An additional amount of toluene was added to the glass jar to maintain the overall concentration of approximately 0.15-0.2M. Triethylamine (4 equivalents) was then added dropwise with stirring to the solution at -35 °C and slowly warm up to room temperature, resulting in immediate formation of a white precipitate; the reaction mixture later became cloudy and yellow. The mixture was allowed to stir at room temperature for an hour, after which, an aliquot of the reaction mixture was removed, filtered and analyzed by ³¹P NMR. Once the reaction showed full conversion to the bisphosphoramidite product, the reaction mixture was removed from the glovebox and passed through a Celite^{™} pad to remove all the inorganic salts. The filtrate volatiles were removed on a rotary evaporator to leave a yellowish oil. This crude material was further purified by silica gel column chromatography (20% dichloromethane in hexane) to isolate the pure bisphosphoramidite ligand **L8** (22 % yield and 80 % purity). ¹H NMR (400 MHz, CDCl₃) δ 7.78 - 7.73 (m, 3H), 7.56 (dd, J = 5.7, 3.3 Hz, 1H), 7.51 - 7.40 (m, 6H), 7.39 - 7.28 (m, 2H), 7.13 - 7.04 (m, 2H), 6.91 (d, J = 8.5 Hz, 1H), 6.80 (d, J = 8.4 Hz, 1H), 6.61 (td, J = 4.2, 3.4, 1.9 Hz, 1H), 6.57 (dd, J = 3.4, 0.9 Hz, 1H), 2.78 - 2.51 (m, 2H), 2.40 - 2.08 (m, 2H), 1.72 - 1.52 (m, 3H), 1.40 (d, J = 1.7 Hz, 37H). ³¹P{¹H} NMR (162 MHz, CDCl₃) δ 106.70 ppm.

### Preparation Example 9: Ligand 9

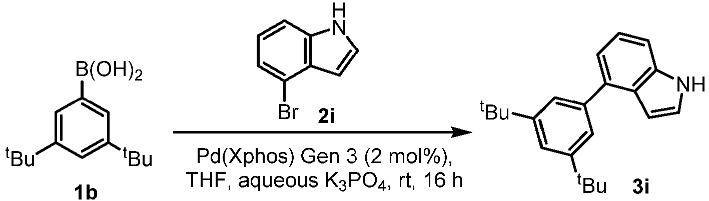

A three-neck 2 L round bottom flask was charged with one equivalent of 3,5-di-tert-butyl-phenylboronic acid (**1b**), 0.02 equivalent of Precatalyst, followed by addition of THF to make the final concentration approximately 0.3 M. The mixture was stirred at room temperature for 5 minutes. After that, 1.1 equivalent of bromo-indole **2i** was added to the solution, followed by a 1 M aqueous solution of potassium phosphate tribasic (3 equivalents of K₃PO₄). The reaction mixture was then stirred at room temperature overnight. The next morning, an aliquot was removed and analyzed by LC-MS. Once the reaction showed complete consumption of starting material, diethyl ether was added, and the mixture was then transferred to a separatory funnel. The organic layer was separated, and the aqueous layer was further washed with diethyl ether. The organic layers were combined and dried over anhydrous MgSO₄. The solvent was removed under reduced pressure to yield the crude product. Next, the material was dissolved in diethyl ether and treated with activated carbon for decolorization. The product was filtered through a Celite^{™} pad and concentrated before purifying through silica gel column chromatography (20% ethyl acetate in hexane) to isolate the pure material (**3i**, 73% yield). ¹H NMR (400 MHz, CDCl₃) δ 8.23 (s, 1H), 7.58 (d, J = 1.8 Hz, 2H), 7.46 (t, J = 1.9 Hz, 1H), 7.40 (dt, J = 7.9, 1.1 Hz, 1H), 7.30 (t, J = 7.6 Hz, 1H), 7.27 - 7.25 (m, 2H), 6.75 (ddd, J = 3.2, 2.1, 1.0 Hz, 1H), 1.42 (s, 18H). ¹³C NMR (101 MHz, CDCl₃) δ 150.66, 140.27, 136.26, 135.64, 126.27, 124.25, 123.24, 122.32, 120.87, 119.70, 109.90, 102.46, 34.97, 31.58. 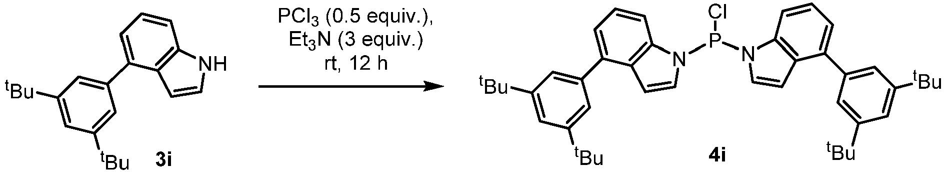 In a N₂-purged glovebox, triethylamine (6 equivalents) was added in toluene to a 110 mL glass jar and placed inside the glove box refrigerator. PCl₃ (1 equivalent) was added in toluene to a 110 mL glass jar and placed in the glove box refrigerator at the same time. After an hour, both the solutions were taken out of the refrigerator and the triethylamine solution was slowly added to the PCl₃ solution. An additional amount of toluene was added to the flask to keep the final concentration at around 0.2 M (with respect to the PCl₃). The substituted indole **3i** (2 equivalents) was weighed into a 110 mL glass jar, dissolved in a minimum amount of toluene and slowly added to the cold PCl₃/NEt₃ solution with vigorous stirring over a period of 15-30 min. A white precipitate started forming during the addition. The reaction mixture was allowed to warm to room temperature and was stirred for another 12 h. The reaction progress was monitored by ³¹P NMR. The next day, an aliquot of the reaction mixture was removed, filtered and analyzed by ³¹P NMR to confirm formation of the desired bis(indolyl)chlorophosphine **4h** as the major product. The crude reaction mixture was passed through a Celite^{™} pad to remove the inorganic salts, and the filtrate was transferred to a 220 mL glass jar and concentrated to approximately 1/4th of its original volume using the glove box vacuum pump (vacuum trap cooled with liquid nitrogen). The crude reaction mixture was sampled for ³¹P NMR and used directly in the next step. 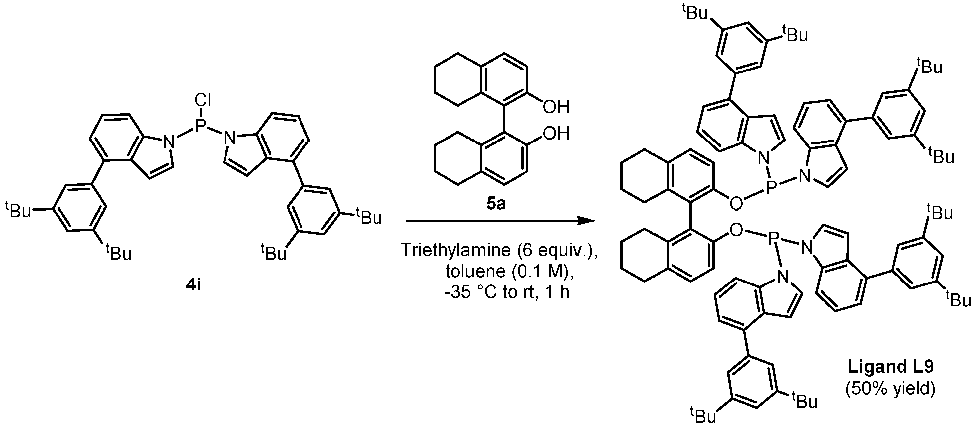 In a N₂-purged glove box, a 110 mL glass jar was charged with a toluene solution of bis(indolyl)chlorophosphine **4i** (2.5 equivalents) and was stored in the glove box freezer for an hour (-35 °C). 5,5',6,6',7,7',8,8'-octahydro-1,1'-bi-2-naphthol (5a, 1 equivalence) was dissolved in toluene in a vial and added slowly to the solution of bis(indolyl)chlorophosphine at -35 °C. An additional amount of toluene was added to the glass jar to maintain the overall concentration of approximately 0.15-0.2M. Triethylamine (4 equivalents) was then added dropwise with stirring to the solution at -35 °C and slowly warm up to room temperature, resulting in immediate formation of a white precipitate; the reaction mixture later became cloudy and yellow. The mixture was allowed to stir at room temperature for an hour, after which, an aliquot of the reaction mixture was removed, filtered and analyzed by ³¹P NMR. Once the reaction showed full conversion to the bisphosphoramidite product, the reaction mixture was removed from the glovebox and passed through a Celite^{™} pad to remove all the inorganic salts. The filtrate volatiles were removed on a rotary evaporator to leave a yellowish oil. This crude material was further purified by silica gel column chromatography (20% dichloromethane in hexane) to isolate the pure bisphosphoramidite ligand L9 (50 % yield). ¹H NMR (400 MHz, CDCl₃) δ 7.54 - 7.43 (m, 8H), 7.29 - 7.23 (m, 2H), 7.20 - 7.16 (m, 3H), 7.16 - 7.08 (m, 1H), 6.90 - 6.79 (m, 2H), 6.72 (t, *J* = 3.2 Hz, 2H), 2.70 - 2.63 (m, 1H), 2.58 - 2.51 (m, 1H), 2.40 - 2.31 (m, 1H), 2.21 - 2.14 (m, 1H), 1.71 - 1.49 (m, 3H), 1.42 (m, 37H). ³¹P{¹H} NMR (162 MHz, CDCl₃) δ 104.70 ppm.

### Preparation Example 10: Ligand 10

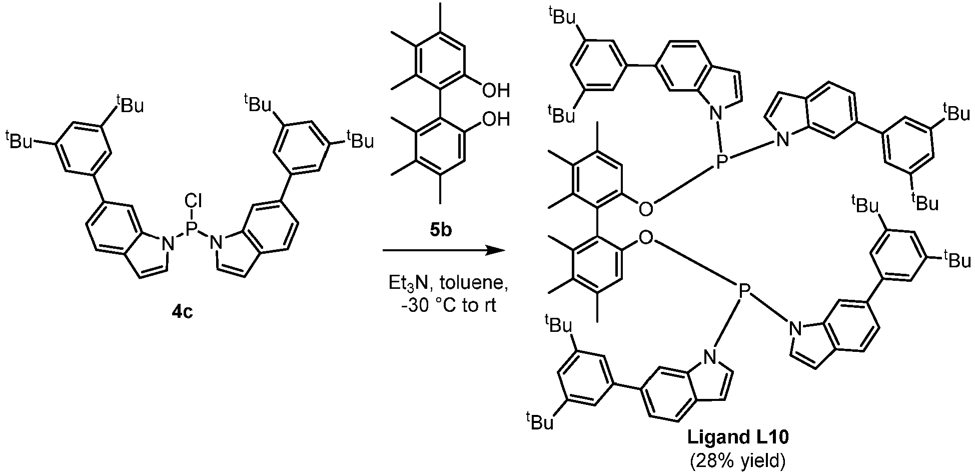

In a N₂-purged glove box, 4,4',5,5',6,6'-hexamethyl-[1,1'-biphenyl]-2,2'-diol (5b, 1.0 g, 3.7 mmol ) and bis[6-(3,5-di-*tert*-butylphenyl)-1H-indolyl]chlorophosphine (4c, 6.2 g, 8.13 mmol) were weighed into a 220 mL glass jar and dissolved in 75 mL of toluene to create a reddish yellow solution and kept in the freezer for an hour (-35 °C). Triethylamine (1.6 mL, 11.1 mmol) was added dropwise with stirring to the solution, resulting in immediate formation of a white precipitate. The reaction mixture was allowed to stir at room temperature and slowly warmed up to 50 °C overnight. The next morning, an aliquot of the reaction mixture was removed, filtered, and analyzed by ³¹P NMR. Two step purification was required to remove all of the attendant by-products. In a first step, a 330 g gold silica gel column (5 - 20 % dichloromethane in hexane) was utilized to purify the bis product with the rest of the side products. In a second step, a 160 g neutral alumina column was utilized to further purify the bisphosphoramidite product (5 - 20 % dichloromethane in hexane). After column purification, 1.2 g of pure bisphosphoramidite ligand L10 was obtained with 28 % yield. ¹H NMR (400 MHz, Chloroform-*d*) δ 7.56 (dd, *J* = 8.0, 2.8 Hz, 4H), 7.40 - 7.29 (m, 12H), 7.21 (dt, *J* = 6.0, 1.3 Hz, 8H), 7.07 (dt, *J* = 11.6, 2.9 Hz, 4H), 6.58 (s, 2H), 6.53 - 6.45 (m, 4H), 2.01 (s, 6H), 1.80 (s, 6H), 1.76 (s, 6H), 1.33 (dd, *J* = 3.4, 1.1 Hz, 72H). ³¹P{¹H} NMR (162 MHz, Chloroform-d) δ 109.41 ppm.

### Preparation Example 11: Ligand 11

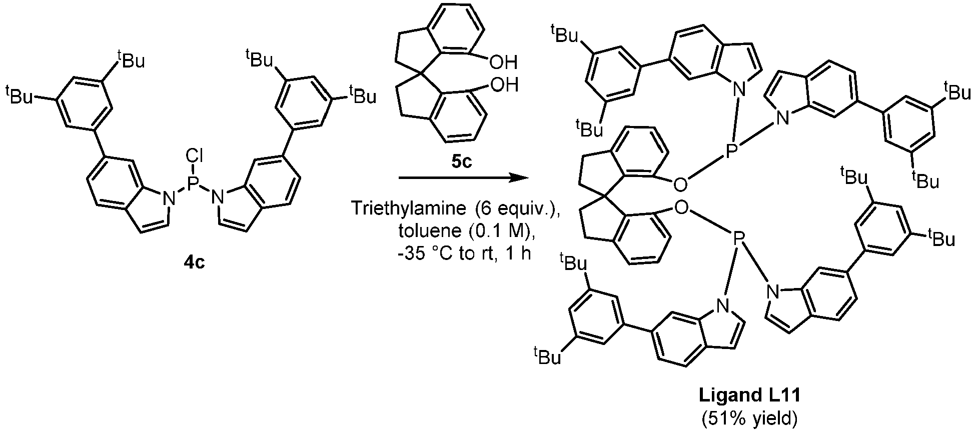

In a N₂-purged glove box, 2,2',3,3'-Tetrahydro-1,1'-spirobi[indene]-7,7'-diol (5c, 0.275 g, 1.2 mmol) was added to a chilled solution of bis[6-(3,5-di-tert-butylphenyl)-1H-indolyl]chlorophosphine (4c, 2.8 mmol) in toluene (10 mL) into a 110 mL glass jar. Triethylamine (0.7 mL, 4.8 mmol) was added dropwise with stirring to the solution, resulting in immediate formation of a white precipitate. The reaction mixture was allowed to stir at room temperature and slowly warmed up to rt overnight. The next morning, an aliquot of the reaction mixture was removed, filtered, and analyzed by ³¹P NMR spectroscopy; the reaction was very clean and only one major peak (δ δ 105.28 ppm) with some minor products were observed. The glass jar was taken out from the glove-box and the reaction mixture was passed over a celite pad. The filtrate was concentrated down and loaded directly over to 330g silica column using liquid injection. Silica gel column was required to remove all of the attendant by-products. A 330 g gold silica gel column (5 - 25 % dichloromethane in hexane) was utilized to purify the bis product with the rest of the side products, After column purification, 0.95 g of pure bisphosphoramidite ligand L11 was obtained with 51% yield. ¹H NMR (400 MHz, Chloroform-d) δ 7.56 (dd, *J* = 10.6, 8.1 Hz, 4H), 7.47 - 7.40 (m, 4H), 7.40 - 7.31 (m, 8H), 7.24 (dd, *J* = 8.8, 1.8 Hz, 8H), 6.99 (t, *J* = 3.3 Hz, 2H), 6.84 (t, *J* = 3.2 Hz, 2H), 6.76 (dd, *J* = 8.1, 7.3 Hz, 2H), 6.68 (d, *J* = 8.0 Hz, 2H), 6.62 (d, *J =* 7.3 Hz, 2H), 6.53 (dd, *J* = 3.4, 0.9 Hz, 2H), 6.47 (dd, *J* = 3.4, 0.8 Hz, 2H), 2.78 (m, 2H), 2.43 (dd, *J* = 16.0, 8.6 Hz, 2H), 2.08 (dd, *J* = 12.6, 7.6 Hz, 2H), 2.03 - 1.89 (m, 2H), 1.36 (s, 36H), 1.33 (s, 36H). ³¹P{¹H} NMR (162 MHz, Chloroform-*d*) δ 105.28 ppm.

### Preparation Example 12: Ligand 12

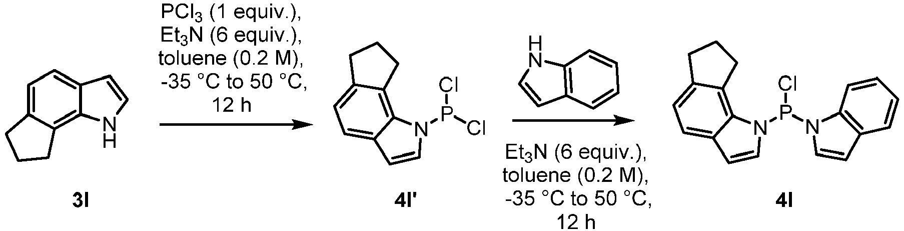

In a N₂-purged glove box, phosphorus trichloride (0.6 mL, 7.0 mmol) and triethylamine (3.0 mL) were added to 20 mL of toluene in a 110 mL glass jar. The solution was placed in the glove box freezer (-35 °C) for 1 hour to chill. The 6,7-fused-1H-indole (3l, 1.1 g, 7.0 mmol) was weighed into a 50 mL glass jar and dissolved in 15 mL of toluene. The PCl₃/NEt₃ solution was removed from the freezer and the indole solution was added drop wise with stirring to the cold PCl₃/NEt₃ solution. The reaction mixture was allowed to warm to room temperature and stirred for another 3 h. After 3 h, an aliquot of the reaction mixture was removed, filtered and analyzed by ³¹P NMR spectroscopy. The NMR spectrum showed formation of the desired di-chloroindolylphosphine **4l'** (δ 147.30 ppm) as the major product. The crude NMR was clean enough to move forward for the next step. The crude mixture was filtered through a plug of Celite to remove the inorganic salts and the filtrate was further concentrated using glove box vacuum pump (keeping liquid nitrogen in the trap) to 10 mL solution.

Then, the di-chloroindolylphosphine solution **(4l')** was kept in the in the glove box freezer (-35 °C) for 1 hour to chill. The 1*H*-indole (0.82 g, 7.0 mmol) was weighed into a 50 mL glass jar and dissolved in 15 mL of toluene. The di-chloroindolylphosphine solution was removed from the freezer and 3.0 mL triethylamine was added to the solution. Afterwards, indole solution was added drop wise with stirring to the reaction solution. The reaction mixture was allowed to warm to room temperature and stirred for another 3 h. After 3 h, an aliquot of the reaction mixture was removed, filtered and analyzed by ³¹P NMR spectroscopy. The NMR spectrum showed formation of the desired mono-chloro-bisindolylphosphine **4l** (δ 101.76 ppm) as the major product. The crude NMR was clean enough to move forward for the next step. The crude mixture was filtered through a plug of Celite to remove the inorganic salts and the filtrate was further concentrated using glove box vacuum pump (keeping liquid nitrogen in the trap) to 10 mL solution. 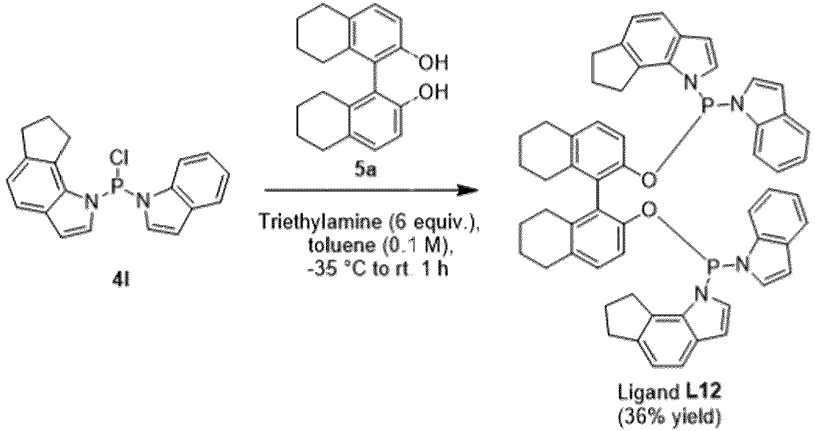 In a N₂-purged glove box, 5,5',6,6',7,7',8,8'-octahydro-1,1'-bi-2-naphthol (5a, 0.82 g, 2.8 mmol) was dissolved in 5 mL toluene into a 110 mL glass jar. A toluene solution of bis[indolyl]chlorophosphine **4l** (7.0 mmol in 10 mL) was slowly added to the binol solution and reaction was kept in the freezer for an hour (-35 °C). Triethylamine (2.3 mL) was added dropwise with stirring to the solution, resulting in immediate formation of a white precipitate. The reaction mixture was allowed to stir at room temperature overnight. The next morning, an aliquot of the reaction mixture was removed, filtered, and analyzed by ³¹P NMR spectroscopy; full conversion to bisphosphoramidite (δ 101.68 ppm) with some minor products were observed. Silica gel column was required to remove all the attendant by-products. A 330 g gold silica gel column (20-50 % dichloromethane in hexane) was utilized to purify the bis product with the rest of the side products. After column purification, 0.9 g of pure bisphosphoramidite product (Ligand **L12**) was obtained with 36 % yield. ¹H NMR (400 MHz, CDCl₃) δ 7.51 (d, *J = 7.6* Hz, 1H), 7.42 (d, *J* = 8.1 Hz, 1H), 7.36 (d, *J =* 7.9 Hz, 1H), 7.10 (td, *J* = 7.5, 1.1 Hz, 1H), 7.07 - 6.99 (m, 3H), 6.89 - 6.78 (m, 2H), 6.68 (d, *J* = 8.4 Hz, 1H), 6.50 (d, *J =* 3.5 Hz, 1H), 6.43 (dd, *J* = 3.5, 0.8 Hz, 1H), 3.20 (dt, *J* = 14.5, 6.9 Hz, 1H), 3.01 - 2.83 (m, 3H), 2.72 - 2.51 (m, 2H), 2.33 - 2.21 (m, 1H), 2.20 - 2.09 (m, 1H), 2.07 - 1.99 (m, 2H), 1.75 - 1.41 (m, 4H). ³¹P{¹H} NMR (162 MHz, C₆D₆) δ 100.79 (s) ppm.

### Preparation Example 13: Ligand 13

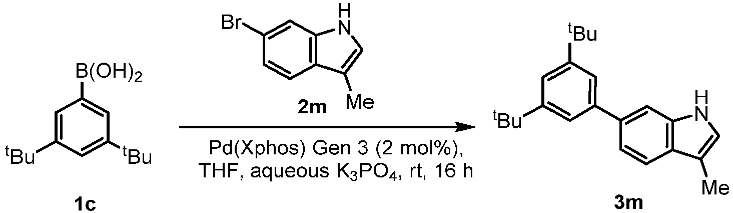

A 3-neck 250 mL round bottom flask was charged with 2.0g of 3,5-Di-tert-butyl-boronic acid (1c), 145 mg of Precatalyst, and 25 mL of THF. The mixture was stirred for 5 minutes at room temperature. After 5 minutes, 1.97 g of 3-methyl-6-bromo-indole (**2m**) in 5ml THF solution was added to the reaction flask, followed by approximately 40 mL of an aqueous solution of potassium phosphate tribasic (5.3g, 25mmol) in 40 mL of H₂O). The reaction mixture was then stirred at room temperature overnight. The next day, the reaction was monitored by LC-MS. Diethyl ether (40 mL) was added to the reaction mixture and the mixture was then transferred to a separatory funnel. The organic layer was separated, and the aqueous layer was further washed with 40 mL of diethyl ether (2X). The organic layers were combined and dried over MgSO₄. The solvent was removed under reduced pressure to yield a brownish solid. The solid was purified by ISCO silica gel chromatography to yield 1.54g (55% yield) of the product. ¹H NMR (400 MHz, CDCl₃) δ 7.92 (s, 1H), 7.65 (d, *J* = 8.2 Hz, 1H), 7.56 (s, 1H), 7.50 (t, *J* = 1.5 Hz, 2H), 7.47 - 7.36 (m, 2H), 7.00 (s, 1H), 2.38 (s, 3H), 1.42 (s, 18H). ¹³C NMR (101 MHz, CDCl₃) δ 150.92, 141.82, 136.82, 136.78, 127.49, 122.05, 122.01, 120.73, 119.45, 118.87, 111.71, 109.72, 34.97, 31.57, 9.70. 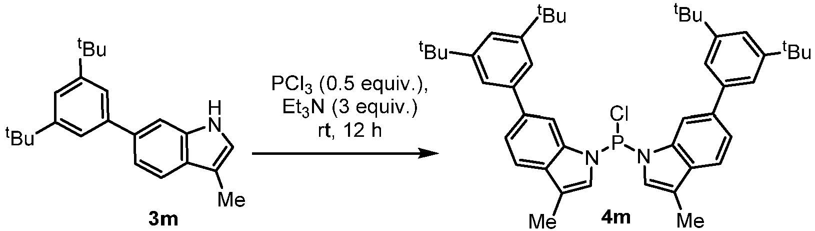 In a N₂-purged glove box, phosphorus trichloride (0.6 mL) and triethylamine (5.2 mL) were added to 40 mL of toluene in a 110 mL glass jar. The solution was placed in the glove box freezer (-35 °C) for 1 hour to chill. The 6-(3,5-Di-tert-butyl)-3-methyl-1H-indole (3m, 4.0g) was weighed into a 40 mL vial and dissolved in 20 mL of toluene. The indole solution was also chilled in the glove box freezer for 1 hour. The two solutions were removed from the freezer and the cold indole solution was added drop wise (by an additional funnel) with stirring to the cold PCl₃/NEt₃ solution. A copious amount of white precipitate formed during the addition. The reaction mixture was allowed to warm to room temperature and stir overnight at 60 °C. The next day, an aliquot of the reaction mixture was removed, filtered and analyzed by ³¹P NMR spectroscopy. The NMR shows formation of the desired mono-chlorophosphoramidite (δ 102.43 ppm) as the major product, however it also showed the bis-chloro product as the minor product (δ 143.52 ppm). After 12h, 0.2 equivalent of indole compound were slowly added to the reaction mixture and after an hour, reaction was further analyzed by ³¹P NMR spectroscopy. The reaction showed complete conversion to the desired mono-chlorophosphoramidite (δ 102.43 ppm) as the major product with ~4-5% bis-chloro product as the minor product (δ 143.52 ppm). The crude mixture was filtered through a plug of Celite to remove the inorganic salts and the filtrate was further evaporated using glove box vacuum pump (keeping liquid nitrogen trap) and 4.4 g of the desired mono-chlorophosphoramidite (**4m**) was isolated as a yellowish powder (>90% yield). 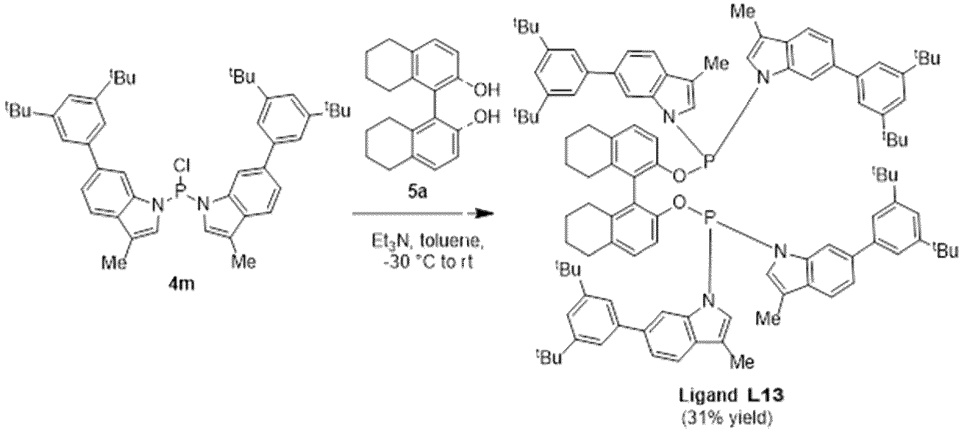 In a N₂-purged glove box, 5,5',6,6',7,7',8,8'-octahydro-1,1'-bi-2-naphthol (5a, 0.7 g) and bis[6-(3,5-di-tert-butylphenyl)-3-methyl-1*H*-indolyl]iodophosphine (4m, 3.8 g) were weighed into a 110-mL glass jar and dissolved in 46 mL of toluene to create a reddish yellow solution and kept in the freezer for an hour (-35 °C). Triethylamine (2.0 mL) was added drop wise with stirring to the solution, resulting in immediate formation of a white precipitate. The reaction mixture was allowed to stir at room temperature and slowly warmed up to 50 °C overnight. The next morning, an aliquot of the reaction mixture was removed, filtered, and analyzed by ³¹P NMR spectroscopy. ³¹P NMR shows full conversion to product (δ 107.89 ppm) with some mono-alcohol and cyclic phosphoramidite products. Two step purification was used to remove all the indole side products. In particular, a 1st column purified the bis product with the rest of the side products (silica gel column), and a 2nd column purified the bis product from the indole side product (alumina column). NMR shows pure product (Ligand **L13,** 1.2g) with 31% yield (>95% purity). ¹H NMR (400 MHz, CDCl₃) δ 7.56 - 7.45 (m, 4H), 7.41 - 7.34 (m, 4H), 7.33 - 7.21 (m, 4H), 6.88 (d, *J* = 8.4 Hz, 1H), 6.84 - 6.75 (m, 2H), 6.60 (s, 1H), 2.68 - 2.51 (m, 1H), 2.43 - 2.38 (m, 1H), 2.28 - 2.17 (m, 4H), 2.13 - 2.04 (m, 4H), 1.50 - 1.29 (d, J = 6.7 Hz, 40H). ³¹P{¹H} NMR (162 MHz, C₆D₆) δ 107.89 (s) ppm.

### Preparation Example 14: Comparative Ligand 2

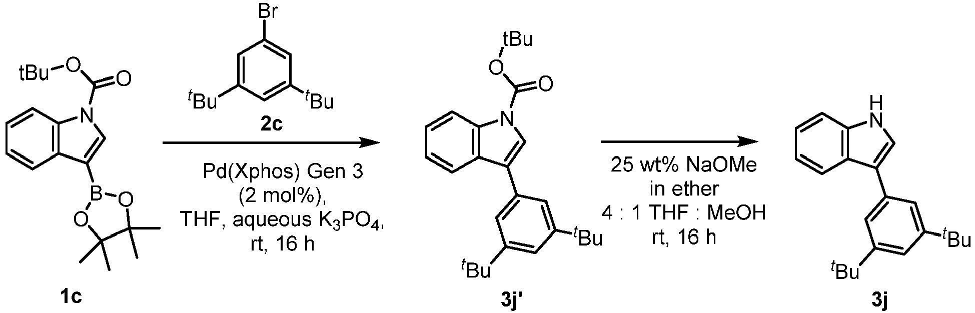

Inside a water containing glovebox, a 110 mL Jar was charged with (*tert*-butyloxycarbonyl) boronic ester **1c** (1.35 g, 3.94 mmol), Precatalyst (0.06 g, 0.07 mmol) and THF (25 mL).The reaction mixture was then stirred for 5 minutes. After 5 minutes 1-bromo-3,5-di-*tert*-butyl methylbenzene (**2c,** 1.00 g, 3.71 mmol) was added to the reaction mixture and an aqueous solution of potassium phosphate tribasic (2.36 g, 11.14 mmol in 20 mL of water) was added to the reaction mixture. The reaction mixture was then allowed to stirred overnight at room temperature. The next day an aliquot was removed, worked up with diethyl ether and checked by mass spectroscopy. The reaction was complete, stopped and removed from the glovebox. Diethyl ether (50 mL) was added to the reaction mixture and then transferred a separatory funnel. The aqueous layer was then washed with equal parts of diethyl ether (2X). The organic layers were then combined, dried over MgSO₄ and filtered through a neutral alumina and activated charcoal plug. The filtrate was then concentrated down to afford 1.5g, 99.5 % as a brown solid. The compound (3j') was analyzed by NMR and was moved onto the deprotection step.

Inside a water containing glovebox, a 50 mL jar was charged with *tert*-butyl 3-(3,5-di-tert-butylphenyl)-1*H*-indole-1-carboxylate (**3j**', 1.50 g, 3.70 mmol), THF (30 mL) and a stir bar. 25 weight % sodium methoxide (2.4 g, 11.10 mmol) was added slowly to avoid a large exotherm. The reaction stirred at room temperature overnight. In the morning, water was added the reaction was removed from the glove box and water was added (30 mL). The mixture stirred for 15 minutes before being transferred to a separatory funnel. The product was extracted 3X with diethyl ether and the combined organic layers were dried over MgSO₄, filtered, and concentrated down. The crude material was then dissolved in dichloromethane and run through a silica gel plug. The filtrate was concentrated down to afford 0.88 g of pure product **3j**. Yield: 77.5% ¹H NMR (400 MHz, CDCl₃) δ 8.16 (s, 1H), 7.92 (ddq, *J* = 7.8, 1.5, 0.8 Hz, 1H), 7.52 (dd, *J* = 1.9, 0.8 Hz, 2H), 7.44 - 7.40 (m, 1H), 7.40 - 7.34 (m, 2H), 7.29 - 7.16 (m, 2H), 1.40 (d, *J* = 0.8 Hz, 18H). ¹³C NMR (101 MHz, CDCl₃) δ 151.18, 136.80, 134.63, 126.17, 122.45, 122.20, 121.74, 120.41, 120.35, 120.08, 119.57, 111.50, 35.09, 31.72. 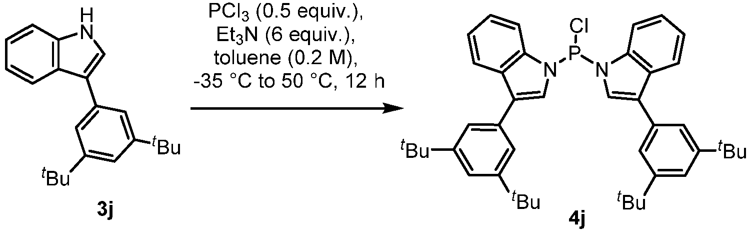 In a N₂-purged glove box, phosphorus trichloride (0.19 g, 1.40 mmol) and triethylamine (0.57 g, 5.62 mmol) were added to 50 mL of toluene in a 110 mL glass jar. The solution was placed in the glove box freezer (-35 °C) for 1 hour to chill. The indole **3j** (0.86 g, 2.81 mmol g) was weighed into a 20 mL vial and dissolved in 10 mL of THF. The indole solution was also chilled in the glove box freezer for 1 hour. The two solutions were removed from the freezer and the cold indole solution was added drop wise with stirring to the cold PCl₃/NEt₃ solution. A copious amount of white precipitate formed during the addition. The reaction mixture was stirred at 50 °C for 24 h. ³¹P NMR was taken to monitor the reaction. Once the reaction is complete, it was filtered through Celite to remove triethylammonium chloride and the pale-yellow filtrate was pumped down to dryness. The resultant residue was taken up in hexanes, filtered and concentrated down to afford 0.72 g of crude **4j.** The material was taken directly to the next step without any further purification. ³¹P{¹H} NMR (162 MHz, C₆D₆) δ 100.0 (s) ppm. 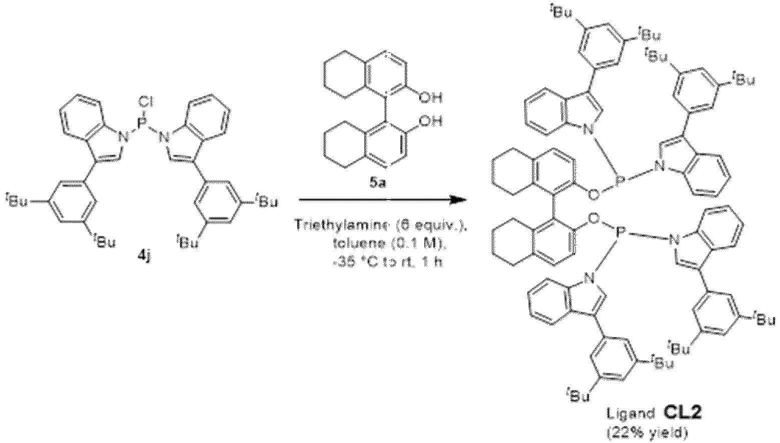 In a N₂-purged glove box, the 5,5',6,6',7,7',8,8'-Octahydro-1,1'-bi-2-naphthol (**5a**, 0.09 g, 0.29 mmol) and 1,1'-(chlorophosphanediyl)bis(3-(3,5-di-*tert*-butylphenyl)-1*H*-indole) (**4j**, 0.39 g, 0.58 mmol) were weighed into a 50 mL glass jar containing a Teflon-coated stir bar. Toluene (10 mL) was added to dissolve the mixture. Triethylamine (0.12 g, 1.16 mmol) in toluene (5 mL) was added to the solution dropwise with stirring. The reaction mixture was allowed to stir at room temperature overnight. An aliquot of the reaction mixture was removed, filtered, and analyzed by ³¹P NMR spectroscopy. The spectrum showed partial conversion to the desired product (δ 104 ppm). Another 0.04 g of diol was added, the reaction stirred for another 24 h at room temperature. Once all the starting chloride was gone, the reaction mixture was filtered through Celite to remove triethylammonium chloride and the colorless filtrate was pumped down to dryness to yield a light brown solid. Alumina column was required to remove all the attendant by-products. A 24 g gold silica gel column was utilized to purify the bis product with the rest of the side products. After column purification, 0.1 g of pure bisphosphoramidite product (Ligand **CL2**) was obtained with 22% yield. ¹H NMR (400 MHz, CDCl₃) δ 7.78 (dd, *J* = 14.6, 7.9 Hz, 5H), 7.58 (d, *J* = 8.2 Hz, 2H), 7.55 - 7.46 (m, 2H), 7.41 - 7.38 (m, 14H), 7.24 - 7.11 (m, 5H), 7.08 - 7.0 (m, 4H), 6.67 (d, *J* = 8.3 Hz, 2H), 6.54 (d, *J* = 8.4 Hz, 2H), 2.48 - 2.22 (m, 6H), 2.19 - 1.98 (m, 5H), 1.51 - 1.19 (m, 77H). ³¹P{¹H} NMR (162 MHz, C₆D₆) δ 104.4 (s) ppm.

### Preparation Example 15: Comparative Ligand 3

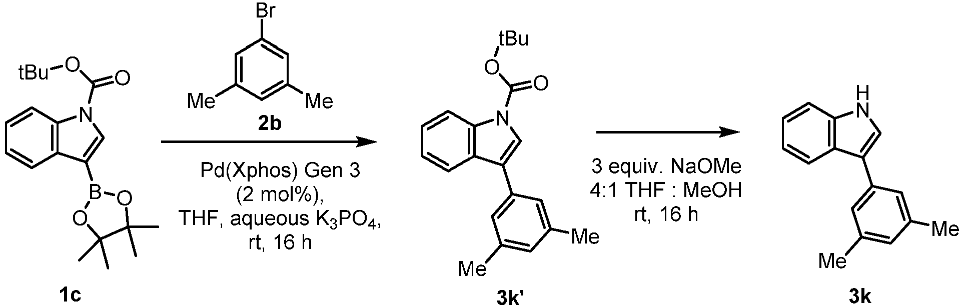

In a N₂-purged glove box, a 110-mL jar was charged with 4.43 g (12.87 mmol) of 1-(*tert-*butoxycarbonyl)indole-3-boronic acid pinacol ester (1c), 0.21 g (0.24 mmol) of Precatalyst, and 40 mL of THF. The mixture was stirred for 5 minutes at room temperature. After 5 minutes, 1.65 mL (12.14mmol) of 1-bromo-3,5-dimethylbenzene (**2b**) was added to the solution, followed by approximately 30 mL of an aqueous solution of potassium phosphate tribasic (7.75 g (36.51 mmol) in 30 mL of H₂O). The reaction mixture was then stirred at room temperature overnight. The next day, the reaction was removed from the glove box. Diethyl ether (40 mL) was added to the reaction mixture and the mixture was then transferred to a separatory funnel. The organic layer was separated, and the aqueous layer was further washed with 40 mL of diethyl ether (2X). The organic layers were combined and dried over MgSO₄ and activated carbon. The ether solution was then filtered through a basic alumina plug and the solvent was removed under reduced pressure to yield a white solid. Yield: 3.9 g of impure material; appears to be a mixture of desired compound (**3k'**) and pinacol bromoborane. The crude material was used in the next step of the reaction without any further purification. ¹H NMR (400 MHz, CDCl₃) δ 8.20 (br d, *J* = 8.0 Hz, 1H, indole-*CH*), 7.81 (d, *J* = 0.5 Hz, 1H, indole-*CH*), 7.68 (s, 1H, *para-*arylC*H*), 7.37-7.31 (m, 1H, indole-*CH*), 7.30-7.26 (m, 1H, indole-*CH*), 7.26-7.24 (overlapping singlets, 2H, *ortho*-aryl*CH*), 6.99 (s, indole-CH), 2.40-2.37 (overlapping singlets, 6H, arylC*H*₃), 1.68 (s, 9H, C(C*H*₃)₃), 1.23 (s, 7H, pinacol-C*H*₃) ppm.

In a fume hood, the crude material from the previous reaction (3.9 g) was loaded into a 3-neck round bottomed flask equipped with a nitrogen inlet, septa and a stir bar. The flask was placed under nitrogen and further loaded with 1.50 g (35.7 mmol) of sodium methoxide, 40 mL of THF, and 10 mL of methanol The reaction mixture was stirred overnight at room temperature. The next day, 50 mL of water was added slowly to the reaction mixture. The mixture was then transferred to a separatory funnel. The aqueous layer was extracted 3X with equal parts diethyl ether (approx. 50 mL). The organic layers were combined, dried over MgSO₄, filtered, and the solvent was removed under reduced pressure. The isolated material was a yellow/brown solid. Hexane was added to the product and the mixture was heated using a water bath until the solids dissolved. The hexane solution was allowed to cool to room temperature, during which time a solid precipitated. A white solid was isolated by filtration and washed with cold hexane. The product **3k** was dried under vacuum to yield 1.52 g of material (6.87 mmol, 56.6% yield). ¹H NMR (400 MHz, CDCl₃) δ 8.17 (br s, 1H, N-*H*), 7.93 (ddd, *J =* 7.9, 1.3, 0.7 Hz, 1H, indole-C*H*), 7.43-7.39 (m, 1H, aryl/indole-C*H*), 7.33 (d, *J* = 2.5 Hz, aryl/indole-C*H*), 7.30-7.27 (m, 2H, ortho-arylCH), 7.26-7.15 (m, 2H, aryl/indole-C*H*), 6.96-6.91 (m, 1H, indole-C*H*), 2.38 (overlapping singlets, 6H, aryl-C*H*₃) ppm. 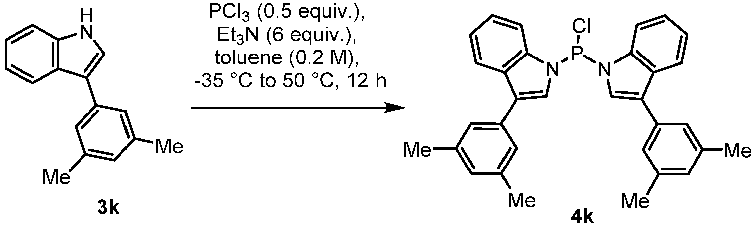 In a N₂-purged glove box, phosphorus trichloride (0.26 mL, 3.0 mmol) and triethylamine (2 mL, 14 mmol) were added to 60 mL of toluene in a 110-mL glass jar. The solution was placed in the glove box freezer (-35 °C) for 1 hour to chill. The 3-(3,5-dimethylphenyl)-1*H*-indole **3k** (1.34 g, 6.04 mmol) was weighed into a 20-mL vial and dissolved in 10 mL of toluene. The indole solution was also chilled in the glove box freezer for 1 hour. The two solutions were removed from the freezer and the cold indole solution was added drop wise with stirring to the cold PCl₃/NEt₃ solution. A copious amount of white precipitate formed during the addition. The reaction mixture was allowed to warm to room temperature and stir overnight. The next day, an aliquot of the reaction mixture was removed, filtered and analyzed by ³¹P NMR spectroscopy. The reaction mixture was filtered through Celite to remove triethylammonium chloride and the pale-yellow filtrate was pumped down to dryness. The resultant white residue was triturated with 40 mL of hexanes to leave a white solid. The solid was dried under vacuum for 1 hour. Yield: 1.19 g (2.35 mmol, 77.7%) Note: 87% purity by ³¹P NMR. The material **4k** was deemed sufficiently pure to move on to the next step of the reaction. ³¹P{¹H} NMR (162 MHz, C₆D₆) δ 103.2 (s) ppm. 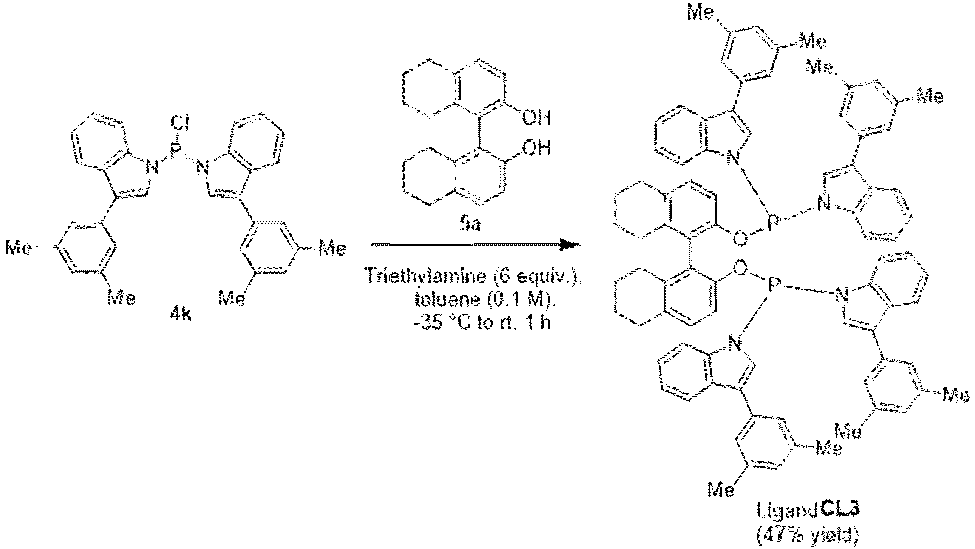 In a N₂-purged glove box, 5,5',6,6',7,7',8,8'-octahydro-1,1'-bi-2-naphthol (**5a**, 0.32 g, 1.1 mmol) and bis(3-(3,5-dimethylphenyl)indolyl)chlorophosphine (**4k**, 1.10 g, 2.17 mmol) were weighed into a 110-mL glass jar and dissolved in 60 mL of toluene to create a yellow solution. Triethylamine (1 mL, 7 mmol) was added drop wise with stirring to the solution, resulting in immediate formation of a white precipitate. The reaction mixture was allowed to stir at room temperature overnight. The next morning, an aliquot of the reaction mixture was removed, filtered, and analyzed by ³¹P NMR spectroscopy. The spectrum showed good conversion to the desired product **CL3** (105 ppm) in approximately 82% purity. The reaction mixture was filtered through Celite to remove triethylammonium chloride and the yellow filtrate was pumped down to dryness. The filtrate was loaded directly over to 330g silica column using liquid injection. Silica gel column was required to remove all of the attendant by-products. A 330 g gold silica gel column (5 - 25 % dichloromethane in hexane) was utilized to purify the product **(CL3)** with the rest of the side products; Overall yield: 47.3%. ¹H NMR (400 MHz, C₆D₆) δ 7.93 (dd, J = 12.7, 7.9 Hz, 4H, Ar-*H*), 7.77 (d, *J* = 8.1 Hz, 2H, Ar-*H*), 7.64 (d, *J* = 8.2 Hz, 2H, Ar-*H*), 7.51 (s, 2H, Ar-*H*), 7.44 (s, 2H, Ar-*H*), 7.26-7.19 (m, 8H, Ar-H), 7.14-7.02 (m, 6H, Ar-*H*), 7.02-6.94 (m, 2H, Ar-*H*), 6.84 (d, *J* = 8.3 Hz, 2H, Ar-*H*), 6.80 (d, *J* = 8.6 Hz, 4H, Ar-*H*), 6.59 (d, *J* = 8.4 Hz, 2H, Ar-*H*), 2.53 (dt, *J* = 17.4, 5.7 Hz, 2H, C*H*₂), 2.40-2.19 (m, 6H, C*H*₂), 2.18 (s, 12H, C*H*₃), 2.14 (s, 12H, C*H*₃), 1.44-1.28 (m, 8H, C*H*₂). ³¹P{¹H} NMR (162 MHz, C₆D₆) δ 106.1 (s) ppm.

### Examples 1-13 and Comparative Examples 1-3:

In the following Examples 1-13 and Comparative Examples 1-3, reaction conversion, selectivity, and regioselectivity (N/I ratio) were measured by ¹H NMR in C₆D₆, product structures and composition were additionally supported by ¹³C NMR in C₆D₆.

The reaction mixtures were analyzed by ¹H and ¹³C NMR. Neat substrate hydroformylation involved either catalyst activation during the initial reaction period or catalyst pre-activation in toluene prior to hydroformylation, followed by the transfer of the activated catalyst to the particular substrate utilized. In addition to linear aldehydes (i.e., n-butanal) as the major products, hydroformylation generated branched aldehydes (i.e., isobutanal) as by-products, which were detected and analyzed by NMR.

Unless otherwise indicated, examples and comparative experiments are conducted in 90 mL flow-through Fisher Porter reactors immersed in an oil bath to establish a reactor temperature of 90 °C. The reactors are further equipped with mass flow meters for accurate control of gas flows; reactor pressures are established and maintained by back-pressure regulators. Reactor off gases are analyzed by online GC to determine molar composition. Mixing in the flow-through reactor is affected by continuous gas flow via a sparger at the bottom of the reactor. This reactor design is described in detail in US 5,731,472. Reaction rates are expressed as moles of aldehyde produced per volume of catalyst solution per unit time (moles/L-hour); this value is additionally divided by the propylene partial pressure to help dampen the effects of small, unavoidable fluctuations in the propylene feed rate (rate/Olefin). Product selectivity is expressed as the ratio of linear (normal) aldehyde versus branched (iso) aldehyde (N: I).

### General Hydroformylation Procedure

Examples 1-13 and Comparative Examples 1-3 follow a General Hydroformylation Procedure. In the General Hydroformylation Procedure, a reactor is charged with Solvent 2 (20 mL) and sparged with N₂ overnight. Stock solutions of rhodium (final concentration 50 ppm Rh introduced as Rh(acac)(CO)₂ and a specific Ligand (type and equivalents as defined in Table 6 below) are then added, and the resulting solution is sparged with 1: 1 syn gas for 3-4 hours to generate an active Rh(Ligand)dicarbonyl hydride catalyst species and to remove the toluene overhead. The hydroformylation reaction is then initiated at 344 kPa (50 psi) CO, 344 kPa (50 psi) H₂, and 20.7 kPa - 34.5 kPa (3-5 psi) Olefin (total pressure is 1137.6 kPa, 165 psia; balance is comprised of N₂). A summary of initial rates and regioselectivities (N:I) as determined during the first 3-4 days of operation is shown in Table 6.

Catalyst Stability: The general hydroformylation procedure is run continuously for about one week for each of Examples 1-13 and Comparative Examples 1-3 to determine catalyst stability. The rate/Olefin is plotted versus time; the slope of the resulting line provides a quantitative measure of deactivation. A slope of zero indicates no catalyst deactivation; the greater the negative slope, the faster the rate of deactivation, which is undesirable.

**Table 6: Examples 1-13 and Comparative Examples 1-3**

| Ligand ID (External) | Ligand:Rh molar equivalents | Initial rate/Olefin | N:I | Rate of deactivation (slope)^{b} |
|---|---|---|---|---|
| L1 | 1.5:1 | 0.054 | 66 | -0.0026 |
| L2 | 1.5:1 | 0.092 | 94 | -0.005 |
| L3 | 1.5:1 | 0.075 | 90 | -0.0002 |
| L4 | 1.5:1 | 0.0709 | 80 | -0.00007 |
| L5 | 1.5:1 | 0.085 | 90 | -0.0019 |
| L6 | 2:1 | 0.133 | 88 | -0.0054 |
| L7 | 1.5:1 | 0.1112 | 90 | -0.0073 |
| L8 | 1.5:1 | 0.07 | 65 | -0.0003 |
| L9 | 1.5:1 | 0.11 | 79 | -0.0047 |
| L10 | 1.5:1 | 0.085 | 65 | -0.002 |
| L11 | 1.5:1 | 0.0124 | 63 | -0.0001 |
| L12 | 1.5:1 | 0.06 | 20 | -0.0027 |
| L13 | 2:1 | 0.0797 | 92 | 0.0012 |
| CL1 | 1.5:1 | 0.0992 | 82 | -0.0087 |
| CL2 | 1.5:1 | 0.17 | 40 | -0.027 |
| CL3 | 3:1 | 0.21 | 58 | -0.021 |

**Table 7 - Abbreviations**

| Abbreviation | Definitions |
|---|---|
| acac | acetyl acetonate |
| °C | degrees Celsius |
| FTIR | Fourier transform infra-red |
| g | gram |
| GPC | gel permeation chromatography |
| h | hour |
| kPa | kiloPascals |
| Me | methyl |
| Et | ethyl |
| mg | milligram |
| min | minute |
| mL | milliliter |
| mm | millimeter |
| Mmol | millimole |
| Mn | number average molecular weight measured by GPC |
| Mw | weight average molecular weight measured by GPC |
| mPa·s | milliPascal seconds |
| NMR | nuclear magnetic resonance |
| PDI | Polydispersity index (calculated as Mw/Mn) |
| Ph | phenyl |
| psi | pounds per square inch |
| RPM | revolutions per minute |
| RT or rt | room temperature of 25 ± 5 °C |
| THF | tetrahydrofuran |
| µm | micrometer |
| Vi | vinyl |
| ppm | parts per million by weight |

### Problems to be Addressed:

The lack of a good catalyst system constitutes a significant challenge for the commercialization of a hydroformylation process for alkenes. Previously proposed processes suffer from one or more of the following drawbacks: slow reaction rate, low linear selectivity, high catalyst loading, and poor stability in continuous processes. Poor stability leads to deactivation in continuous processes, which then leads to low productivity; changing out the catalyst increases costs due to the high price of rhodium.

The present hydroformylation process provides one or more benefits over previously proposed processes; *i.e.*, faster reaction rate, improved selectivity, improved stability, and lower catalyst loadings to achieve these.

## Claims

1. An indole-functionalized bisphosphoramidite having a formula selected from the group consisting of: 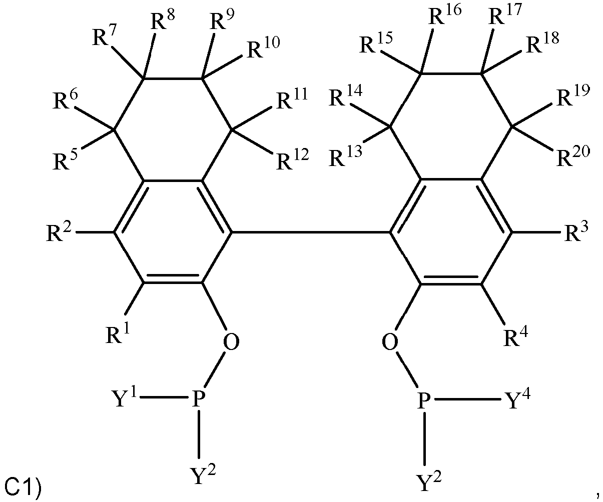 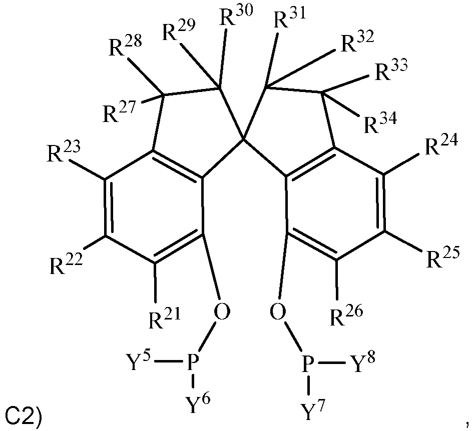 and 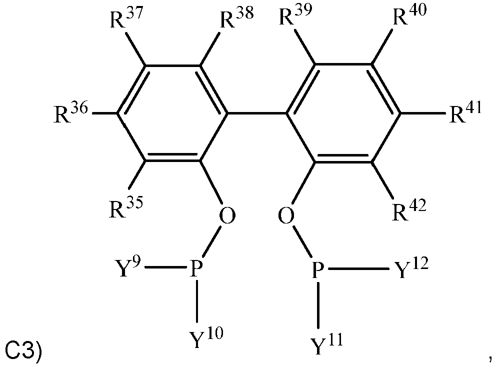 where
R¹-R⁴² are each independently selected from H, a hydrocarbyl group, a heteroaryl group, a halogen atom, or a heterocarbyl group, with the proviso that at least one of R³⁵-R⁴² is not H;
each of Y¹ to Y¹² is an independently selected indole group of formula (I): 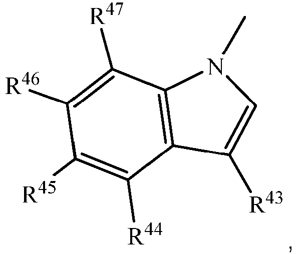
where each of R⁴³-R⁴⁷ is an independently selected atom or group selected from H, alkyl, aryl, heteroaryl, alkoxy, acyl, carboxyl, carboxylate, cyano, -SO₃H, sulfonate, amino, trifluoromethyl, halogen, a group of formula (II) below, and combinations thereof; with the provisos that
i) two or more of R⁴⁴-R⁴⁷ may optionally be bonded together to give one or more cyclic moieties, and
ii) in at least one of each of Y¹-Y⁴, Y⁵-Y⁸, and Y⁹-Y¹², either
a) at least one of R⁴³-R⁴⁷ has formula (II) 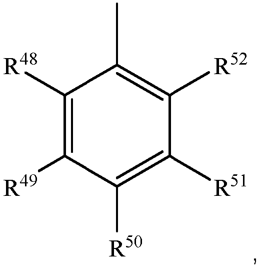 where each of R⁴⁸-R⁵² is an independently selected atom or group selected from H, alkyl, aryl, and alkoxy; or
b) two or more of R⁴⁴-R⁴⁷ are bonded together to give one or more cyclic moieties; and
iii) when the indole-functionalized bisphosphoramidite has the formula C1), at least one of R⁴⁴-R⁴⁶ of at least one of Y¹-Y⁴ has formula (II).

2. The indole-functionalized bisphosphoramidite of claim 1, where formula (II) is selected from the group consisting of:

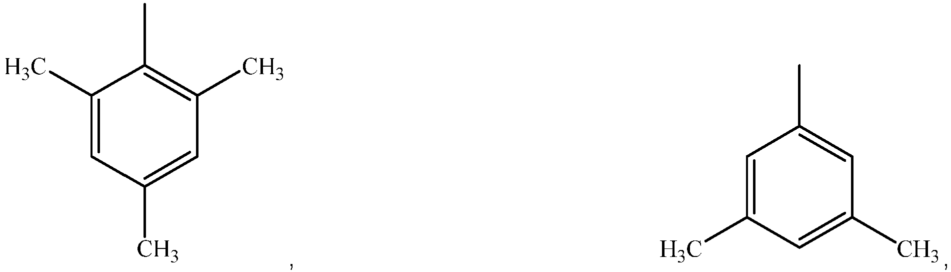

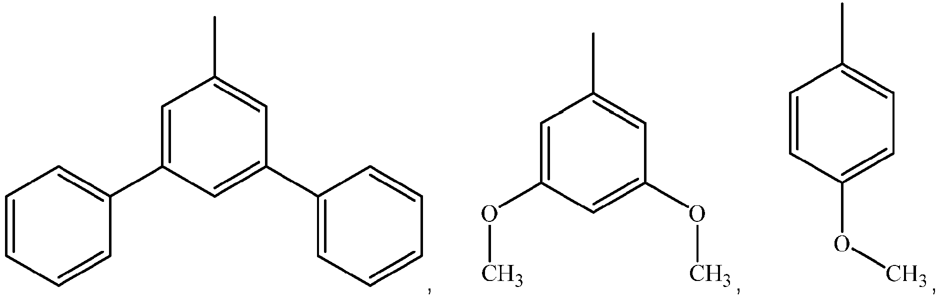

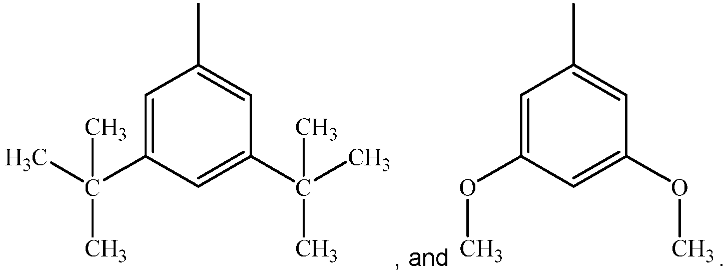

3. The indole-functionalized bisphosphoramidite of claim 1 or 2, where
in formula C1) each of R¹-R²⁰ is H;
in formula C2) each of R²¹-R³⁴ is H, and
in formula C3) each of R³⁵ and R⁴² is H, and each of R³⁶-R⁴¹ is methyl.

4. The indole-functionalized bisphosphoramidite of claim 1 or 2, wherein proviso (ii)(a) is true, and wherein at least one of R⁴⁴-R⁴⁶ has formula (II).

5. The indole-functionalized bisphosphoramidite of claim 1 or 2, wherein proviso (ii)(a) is true, and wherein one of R⁴⁵ and/or R⁴⁶ has formula (II).

6. The indole-functionalized bisphosphoramidite of claim 1, wherein the indole-functionalized bisphosphoramidite is selected from the group consisting of:
L1) 2,2'-bis((bis(6-mesityl-1H-indol-1-yl)phosphaneyl)oxy)-5,5',6,6',7,7',8,8'-octahydro-1,1'-binaphthalene;
L2) 2,2'-bis((bis(6-(3,5-dimethylphenyl)-1H-indol-1-yl)phosphaneyl)oxy)-5,5',6,6',7,7',8,8'-octahydro-1,1'-binaphthalene;
L3) 2,2'-bis((bis(6-(3,5-di-tert-butylphenyl)-1H-indol-1-yl)phosphaneyl)oxy)-5,5',6,6',7,7',8,8'-octahydro-1,1'-binaphthalene;
L4) 2,2'-bis((bis(6-([1,1':3',1"-terphenyl]-5'-yl)-1H-indol-1-yl)phosphaneyl)oxy)-5,5',6,6',7,7',8,8'-octahydro-1,1'-binaphthalene;
L5) 2,2'-bis((bis(6-([1,1':3',1"-terphenyl]-5'-yl)-1H-indol-1-yl)phosphaneyl)oxy)-5,5',6,6',7,7',8,8'-octahydro-1,1'-binaphthalene;
L6) 2,2'-bis((bis(6-(4-(tert-butyl)phenyl)-1H-indol-1-yl)phosphaneyl)oxy)-5,5',6,6',7,1',8,8'-octahydro-1,1'-binaphthalene;
L7) 2,2'-bis((bis(6-(4-methoxyphenyl)-1H-indol-1-yl)phosphaneyl)oxy)-5,5',6,6',7,7',8,8'-octahydro-1,1'-binaphthalene;
L8) 2,2'-bis((bis(5-(3,5-di-tert-butylphenyl)-1H-indol-1-yl)phosphaneyl)oxy)-5,5',6,6',7,7',8,8'-octahydro-1,1'-binaphthalene;
L9) 2,2'-bis((bis(4-(3,5-di-tert-butylphenyl)-1H-indol-1-yl)phosphaneyl)oxy)-5,5',6,6',7,7',8,8'-octahydro-1,1'-binaphthalene;
L10) 1,1',1",1‴-(((4,4',5,5',6,6'-hexamethyl-[1,1'-biphenyl]-2,2'-diyl)bis(oxy))bis(phosphanetriyl))tetrakis(6-(3,5-di-tert-butylphenyl)-1H-indole);
L11) 4,4'-bis((bis(6-(3,5-di-tert-butylphenyl)-1H-indol-1-yl)phosphaneyl)oxy)-1,1',3,3'-tetrahydro-2,2'-spirobi[indene];
L12) 2,2'-bis(((7,8-dihydrocyclopenta[g]indol-1(6H)-yl)(1H-indol-1-yl)phosphaneyl)oxy)-5,5',6,6',7,1',8,8'-octahydro-1,1'-binaphthalene; and
L13) 2,2'-bis((bis(6-(3,5-di-tert-butylphenyl)-3-methyl-1H-indol-1-yl)phosphaneyl)oxy)-5,5',6,6',7,7',8,8'-octahydro-1,1'-binaphthalene.

7. A method for preparing a rhodium-ligand complex, said method comprising:
1) combining starting materials comprising
(I) a rhodium catalyst precursor, and
(II) the indole-functionalized bisphosphoramidite of claims 1 or 2, and optionally (III) a solvent.

8. The method of claim 7, where the rhodium catalyst precursor is selected from the group consisting of Rh₂O₃, Rh₄(CO)₁₂, Rh₆(CO)₁₆, and Rh(NO₃)₃.

9. The method of claim 7 or 8, where the rhodium-ligand complex has a molar ratio of ligand/Rh of 1/1 to 10/1.

10. A rhodium-ligand complex prepared by the method of claim 7.

## Patentansprüche

1. Indolfunktionalisiertes Bisphosphoramidit, das eine Formel aufweist, ausgewählt aus der Gruppe bestehend aus: 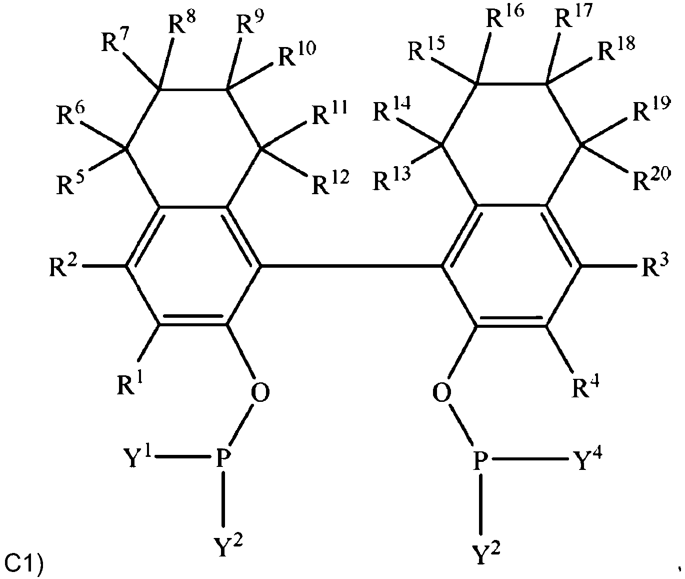 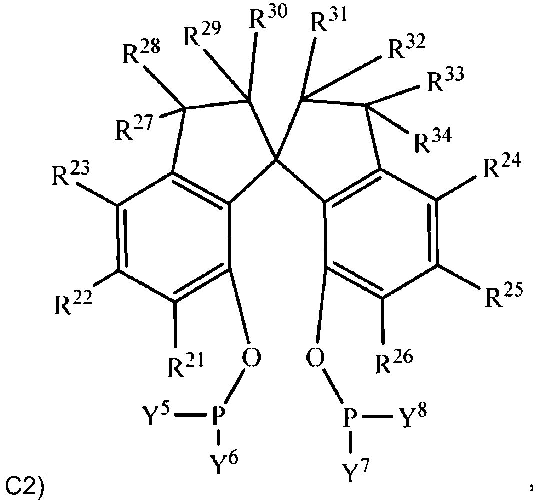 und 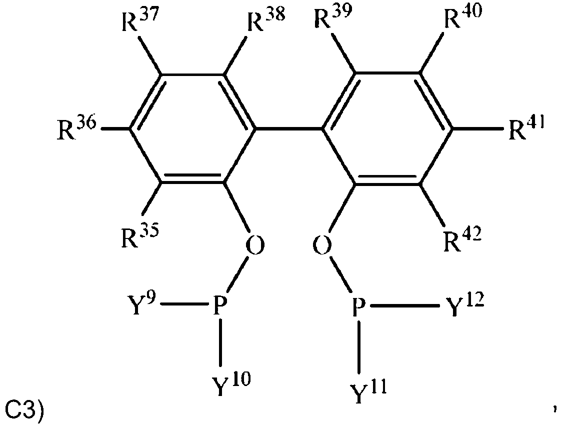 wobei
R¹-R⁴² jeweils unabhängig voneinander aus H, einer Hydrocarbylgruppe, einer Heteroarylgruppe, einem Halogenatom oder einer Heterocarbylgruppe ausgewählt sind, mit der Bedingung, dass mindestens eines von R³⁵-R⁴² nicht H ist;
jedes von Y¹ bis Y¹² eine unabhängig voneinander ausgewählte Indolgruppe einer Formel (I) ist: 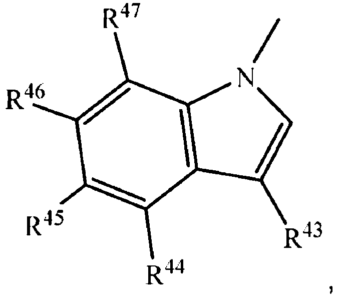 wobei jedes von R⁴³-R⁴⁷ ein(e) unabhängig voneinander ausgewählte(s) Atom oder Gruppe ist, ausgewählt aus H, Alkyl, Aryl, Heteroaryl, Alkoxy, Acyl, Carboxyl, Carboxylat, Cyano, -SO₃H, Sulfonat, Amino, Trifluormethyl, Halogen, einer Gruppe einer nachstehenden Formel (II) und Kombinationen davon; mit den Bedingungen, dass
i) zwei oder mehr von R⁴⁴-R⁴⁷ gegebenenfalls miteinander verbunden sein können, um eine oder mehrere zyklische Anteile zu ergeben, und
ii) in mindestens einem von jeweils Y¹-Y⁴, Y⁵-Y⁸ und Y⁹-Y¹² entweder
a) mindestens eines von R⁴³-R⁴⁷ Formel (II) 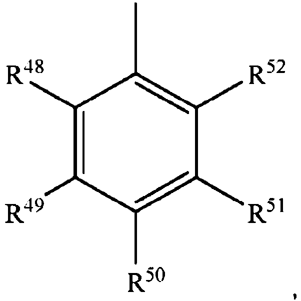 aufweist, wobei jedes von R⁴⁸-R⁵² ein(e) unabhängig voneinander ausgewählte(s) Atom oder Gruppe ist, ausgewählt aus H, Alkyl, Aryl und Alkoxy; oder
b) zwei oder mehr von R⁴⁴-R⁴⁷ miteinander verbunden sind, um eine oder mehrere zyklische Anteile zu ergeben; und
iii) wenn das indolfunktionalisierte Bisphosphoramidit die Formel C1) aufweist, mindestens eines von R⁴⁴-R⁴⁶ von mindestens einem von Y¹-Y⁴ Formel (II) aufweist.

2. Indolfunktionalisiertes Bisphosphoramidit nach Anspruch 1, wobei Formel (II) ausgewählt ist aus der Gruppe bestehend aus:

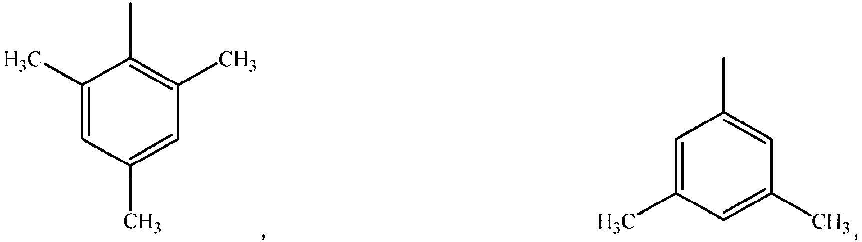

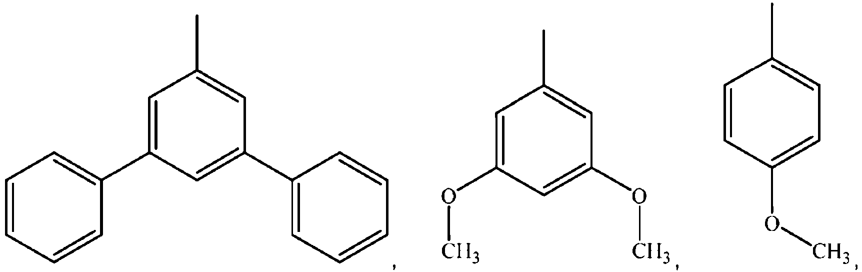

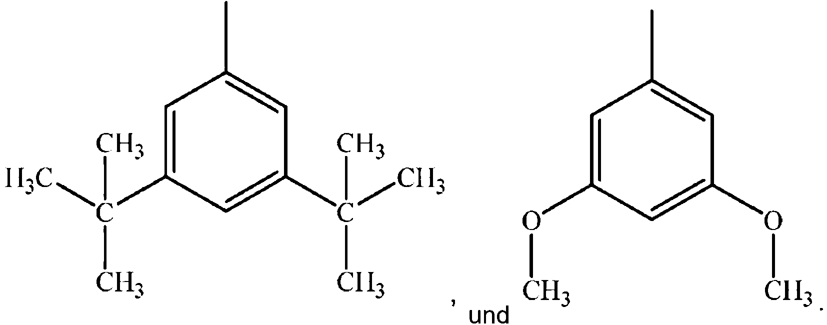

3. Indolfunktionalisiertes Bisphosphoramidit nach Anspruch 1 oder 2, wobei
in Formel C1) jedes von R¹-R²⁰ H ist;
in Formel C2) jedes von R²¹-R³⁴ H ist, und
in Formel C3) jedes von R³⁵ und R⁴² H ist, und jedes von R³⁰-R⁴¹ Methyl ist.

4. Indolfunktionalisiertes Bisphosphoramidit nach Anspruch 1 oder 2, wobei Bedingung (ii)(a) zutrifft, und wobei mindestens eines von R⁴⁴-R⁴⁶ Formel (II) aufweist.

5. Indolfunktionalisiertes Bisphosphoramidit nach Anspruch 1 oder 2, wobei Bedingung (ii)(a) zutrifft, und wobei eines von R⁴⁵ und/oder R⁴⁶ Formel (II) aufweist.

6. Indolfunktionalisiertes Bisphosphoramidit nach Anspruch 1, wobei das indolfunktionalisierte Bisphosphoramidit ausgewählt ist aus der Gruppe bestehend aus:
L1) 2,2'-Bis((bis(6-mesityl-1H-indol-1-yl)phosphanyl)oxy)-5,5',6,6',7,7',8,8'-octahydro-1,1'-binaphthalin;
L2) 2,2'-Bis((bis(6-(3,5-dimethylphenyl)-1H-indol-1-yl)phosphanyl)oxy)-5,5',6,6',7,7',8,8'-octahydro-1,1'-binaphthalin;
L3) 2,2'-Bis((bis(6-(3,5-di-tert-butylphenyl)-1H-indol-1-yl)phosphanyl)oxy)-5,5',6,6',7,7',8,8'-octahydro-1,1'-binaphthalin;
L4) 2,2'-Bis((bis(6-([1,1':3',1"-terphenyl]-5'-yl)-1H-indol-1-yl)phosphanyl)oxy)-5,5',6,6',7,7',8,8'-octahydro-1,1'-binaphthalin;
L5) 2,2'-Bis((bis(6-([1,1':3',1"-terphenyl]-5'-yl)-1H-indol-1-yl)phosphanyl)oxy)-5,5',6,6',7,7',8,8'-octahydro-1,1'-binaphthalin;
L6) 2,2'-Bis((bis(6-(4-(tert-butyl)phenyl)-1H-indol-1-yl)phosphanyl)oxy)-5,5',6,6',7,7',8,8'-octahydro-1,1'-binaphthalin;
L7) 2,2'-Bis((bis(6-(4-methoxyphenyl)-1H-indol-1-yl)phosphanyl)oxy)-5,5',6,6',7,7',8,8'-octahydro-1,1'-binaphthalin;
L8) 2,2'-Bis((bis(5-(3,5-di-tert-butylphenyl)-1H-indol-1-yl)phosphanyl)oxy)-5,5',6,6',7,7',8,8'-octahydro-1,1'-binaphthalin;
L9) 2,2'-Bis((bis(4-(3,5-di-tert-butylphenyl)-1H-indol-1-yl)phosphanyl)oxy)-5,5',6,6',7,7',8,8'-octahydro-1,1'-binaphthalin;
L10) 1,1',1",1‴-(((4,4',5,5',6,6'-Hexamethyl-[1,1'-biphenyl]-2,2'-diyl)bis(oxy))bis(phosphantriyl))tetrakis(6-(3,5-di-tert-butylphenyl)-1H-indol);
L11) 4,4'-Bis((bis(6-(3,5-di-tert-butylphenyl)-1H-indol-1-yl)phosphanyl)oxy)-1,1',3,3'-tetrahydro-2,2'-spirobi[inden];
L12) 2,2'-Bis(((7,8-dihydrocyclopenta[g]indol-1(6H)-yl)(1H-indol-1-yl)phosphanyl)oxy)-5,5',6,6',7,7',8,8'-octahydro-1,1'-binaphthalin; und
L13) 2,2'-Bis((bis(6-(3,5-di-tert-butylphenyl)-3-methyl-1H-indol-1-yl)phosphanyl)oxy)-5,5',6,6',7,7',8,8'-octahydro-1,1'-binaphthalin.

7. Verfahren zum Herstellen eines Rhodium-Ligand-Komplexes, das Verfahren umfassend:
1) Kombinieren von Ausgangsmaterialien, umfassend
(I) eine Rhodiumkatalysatorvorstufe, und
(II) das indolfunktionalisierte Bisphosphoramidit nach Anspruch 1 oder 2, und optional (III) ein Lösungsmittel.

8. Verfahren nach Anspruch 7, wobei die Rhodiumkatalysatorvorstufe ausgewählt ist aus der Gruppe bestehend aus Rh₂O₃, Rh₄(CO)₁₂, Rh₆(CO)₁₆ und Rh(NO₃)₃.

9. Verfahren nach Anspruch 7 oder 8, wobei der Rhodium-Ligand-Komplex ein Molverhältnis von Ligand/Rh von 1/1 bis 10/1 aufweist.

10. Rhodium-Ligand-Komplex, der durch das Verfahren nach Anspruch 7 hergestellt wird.

## Revendications

1. Bisphosphoramidite à fonctionnalité indole ayant une formule choisie dans le groupe constitué de : 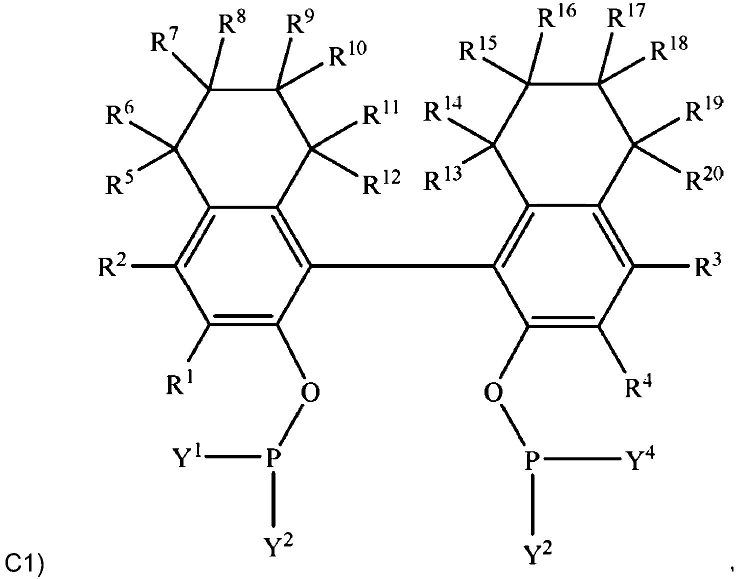 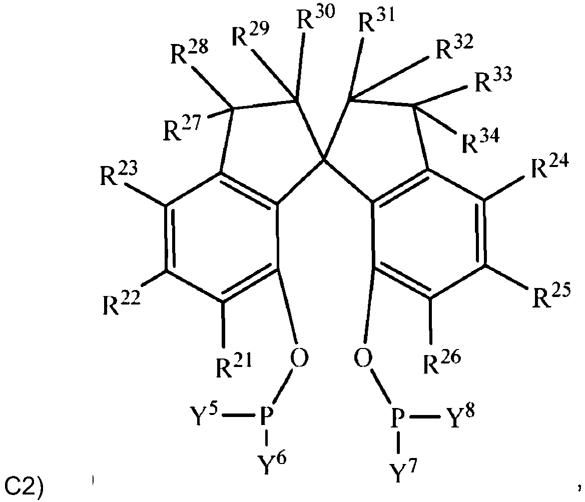 et 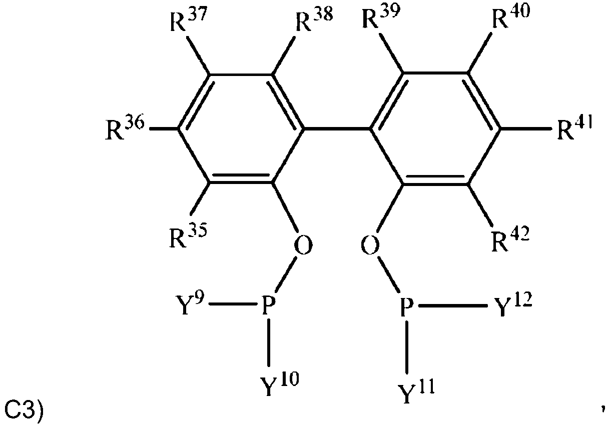 où
R¹ à R⁴² sont chacun choisis indépendamment parmi H, un groupe hydrocarbyle, un groupe hétéroaryle, un atome d'halogène, ou un groupe hétérocarbyle, à condition qu'au moins un de R³⁵ à R⁴² ne soit pas H ;
chacun parmi Y¹ à Y¹² est un groupe indole choisi indépendamment de formule (I) : 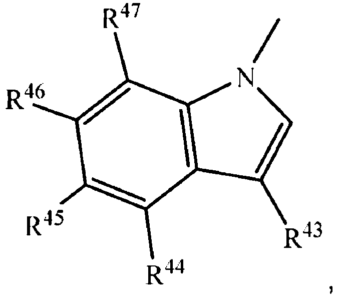 où chacun parmi R⁴³ à R⁴⁷ est un atome ou groupe choisi indépendamment parmi H, alkyle, aryle, hétéroaryle, alcoxy, acyle, carboxyle, carboxylate, cyano, -SO₃H, sulfonate, amino, trifluorométhyle, halogène, un groupe de formule (II) ci-après, et des combinaisons de ceux-ci ; aux conditions que
i) deux parmi R⁴⁴ à R⁴⁷, ou plus, peuvent facultativement être liés ensemble pour donner une ou plusieurs fractions cycliques, et
ii) dans au moins l'un de chacun parmi Y¹ à Y⁴, Y⁵ à Y⁸, et Y⁹ à Y¹², soit
a) au moins l'un de R⁴³ à R⁴⁷ a la formule (II) 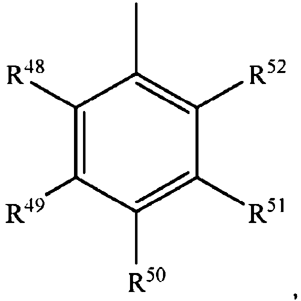 où chacun parmi R⁴⁸ à R⁵² est un atome ou groupe choisi indépendamment parmi H, alkyle, aryle, et alcoxy ; soit
b) deux parmi R⁴⁴ à R⁴⁷, ou plus, sont liés ensemble pour donner une ou plusieurs fractions cycliques ; et
iii) lorsque le bisphosphoramidite à fonctionnalité indole a la formule C1), au moins l'un de R⁴⁴ à R⁴⁶ d'au moins l'un de Y¹ à Y⁴ a la formule (II).

2. Bisphosphoramidite à fonctionnalité indole selon la revendication 1, où la formule (II) est choisie dans le groupe constitué de :

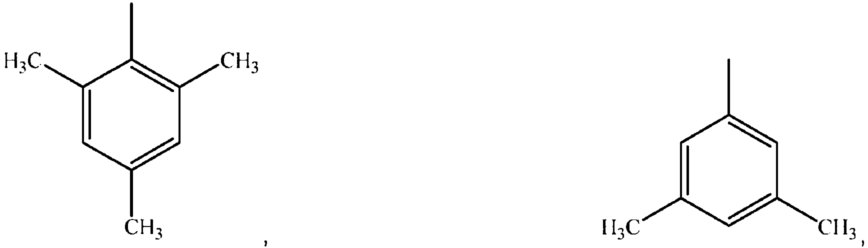

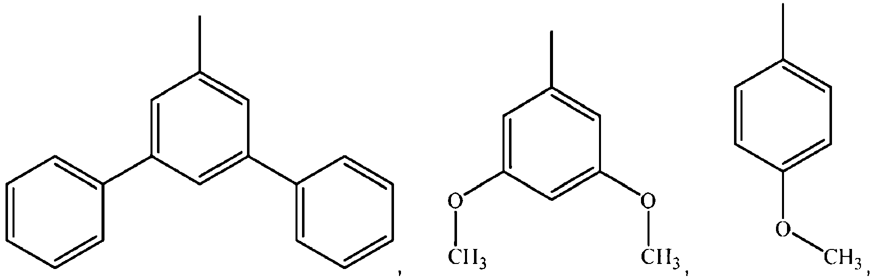

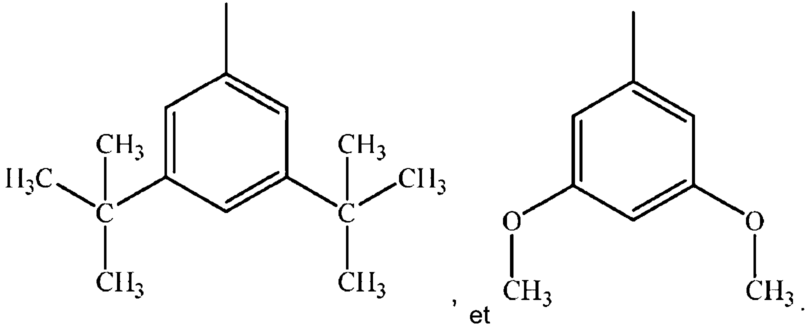

3. Bisphosphoramidite à fonctionnalité indole selon la revendication 1 ou 2, où
dans la formule C1) chacun parmi R¹ à R²⁰ est H ;
dans la formule C2) chacun parmi R²¹ à R³⁴ est H, et
dans la formule C3) chacun parmi R³⁵ et R⁴² est H, et chacun parmi R³⁶ à R⁴¹ est méthyle.

4. Bisphosphoramidite à fonctionnalité indole selon la revendication 1 ou 2, dans lequel la condition (ii)(a) est vraie, et dans lequel au moins l'un de R⁴⁴ à R⁴⁶ a la formule (II).

5. Bisphosphoramidite à fonctionnalité indole selon la revendication 1 ou 2, dans lequel la condition (ii)(a) est vraie, et dans lequel l'un de R⁴⁵ et/ou R⁴⁶ a la formule (II).

6. Bisphosphoramidite à fonctionnalité indole selon la revendication 1, dans lequel le bisphosphoramidite à fonctionnalité indole est choisi dans le groupe constitué de :
L1) 2,2'-bis((bis(6-mésityl-1H-indol-1-yl)phosphanéyl)oxy)-5,5',6,6',7,7',8,8'-octahydro-1,1'-binaphtalène ;
L2) 2,2'-bis((bis(6-(3,5-diméthylphényl)-1H-indol-1-yl)phosphanéyl)oxy)-5,5',6,6',7,7',8,8'-octahydro-1,1'-binaphtalène ;
L3) 2,2'-bis((bis(6-(3,5-di-tert-butylphényl)-1H-indol-1-yl)phosphanéyl)oxy)-5,5',6,6',7,7',8,8'-octahydro-1,1'-binaphtalène ;
L4) 2,2'-bis((bis(6-([1,1':3',1"-terphényl]-5'-yl)-1H-indol-1-yl)phosphanéyl)oxy)-5,5',6,6',7,7',8,8'-octahydro-1,1'-binaphtalène ;
L5) 2,2'-bis((bis(6-([1,1':3',1"-terphényl]-5'-yl)-1H-indol-1-yl)phosphanéyl)oxy)-5,5',6,6',7,7',8,8'-octahydro-1,1'-binaphtalène ;
L6) 2,2'-bis((bis(6-(4-(tert-butyl)phényl)-1H-indol-1-yl)phosphanéyl)oxy)-5,5',6,6',7,7',8,8'-octahydro-1,1'-binaphtalène ;
L7) 2,2'-bis((bis(6-(4-méthoxyphényl)-1H-indol-1-yl)phosphanéyl)oxy)-5,5',6,6',7,7',8,8'-octahydro-1,1'-binaphtalène ;
L8) 2,2'-bis((bis(5-(3,5-di-tert-butylphényl)-1H-indol-1-yl)phosphanéyl)oxy)-5,5',6,6',7,7',8,8'-octahydro-1,1'-binaphtalène ;
L9) 2,2'-bis((bis(4-(3,5-di-tert-butylphényl)-1H-indol-1-yl)phosphanéyl)oxy)-5,5',6,6',7,7',8,8'-octahydro-1,1'-binaphtalène ;
L10) 1,1',1",1‴-(((4,4',5,5',6,6'-hexaméthyl-[1,1'-biphényl]-2,2'-diyl)bis(oxy))bis(phosphanetriyl))tétrakis(6-(3,5-di-tert-butylphényl)-1H-indole) ;
L11) 4,4'-bis((bis(6-(3,5-di-tert-butylphényl)-1H-indol-1-yl)phosphanéyl)oxy)-1,1',3,3'-tétrahydro-2,2'-spirobi[indène] ;
L12) 2,2'-bis(((7,8-dihydrocyclopenta[g]indol-1(6H)-yl)(1H-indol-1-yl)phosphanéyl)oxy)-5,5',6,6',7,7',8,8'-octahydro-1,1'-binaphtalène ; et
L13) 2,2'-bis((bis(6-(3,5-di-tert-butylphényl)-3-méthyl-1H-indol-1-yl)phosphanéyl)oxy)-5,5',6,6',7,7',8,8'-octahydro-1,1'-binaphtalène.

7. Procédé de préparation d'un complexe rhodium-ligand, ledit procédé comprenant :
1) la combinaison de matières de départ comprenant
(I) un précurseur de catalyseur de rhodium, et
(II) le bisphosphoramidite à fonctionnalité indole selon les revendications 1 ou 2, et
facultativement (III) un solvant.

8. Procédé selon la revendication 7, où le précurseur de catalyseur de rhodium est choisi dans le groupe constitué de Rh₂O₃, Rh₄(CO)₁₂, Rh₆(CO)₁₆, et Rh(NO₃)₃.

9. Procédé selon la revendication 7 ou 8, où le complexe rhodium-ligand a un rapport molaire ligand/Rh de 1/1 à 10/1.

10. Complexe rhodium-ligand préparé par le procédé selon la revendication 7.
